# EUROPEAN PATENT APPLICATION

(11) **EP 4 840 888 A1**
(43) Date of publication of application: **18.11.2026**
(21) Application number: 24916934.3
(22) Date of filing: 25.12.2024
(51) Int. Cl.: C08C 19/00

(54) **MODIFIED CONJUGATED DIENE POLYMER AND METHOD FOR PRODUCING MODIFIED CONJUGATED DIENE POLYMER**

(30) Priority: 12.01.2024 JP 2024003559
(71) Applicant: ASAHI KASEI KABUSHIKI KAISHA, Tokyo 100-0006 (JP)
(72) Inventor: HASHIZUME, Yuta, Tokyo 100-0006 (JP); WATABE, Takuma, Tokyo 100-0006 (JP); KONDO, Tomohiro, Tokyo 100-0006 (JP); HISAMURA, Kenta, Tokyo 100-0006 (JP)
(74) Representative: Strehl & Partner mbB
(86) International application number: PCT/JP2024/045943
(87) International publication number: WO 2025/150432

(57) **Abstract**

A modified conjugated diene-based polymer, including a conjugated diene monomer unit and an aromatic vinyl monomer unit,
wherein the modified conjugated diene-based polymer has a weight average molecular weight measured by GPC of 700000 or more, and a modification ratio of 60% or more,
and in a tan δ peak graph as a function of a temperature derived from dynamic viscoelasticity analysis performed with an ARES (Advanced Rheometric Expansion System) based on the following <conditions 1>, the modified conjugated diene-based polymer has one tan δ peak in a temperature range from -100°C to 100°C,
a height of the tan δ peak is 0.90 or more and 1.45 or less:
<conditions 1>
a dynamic mechanical analyzer is used in torsional mode under conditions of a frequency of 10 Hz, a strain of 0.5%, and a temperature rise rate of 5°C/min for obtaining the tan δ peak graph.

## Description

### BACKGROUND OF THE INVENTION

### Field of the Invention

The present invention relates to a modified conjugated diene-based polymer, and a method for producing a modified conjugated diene-based polymer.

### Description of the Related Art

Basic functions required of a tire of a vehicle are a wet grip performance and a tensile performance, and in addition, from the viewpoint of environmental load reduction and the like, a fuel consumption performance and abrasion resistance are required in recent years.

As a rubber material for a tire that meets the above-described requirements for improving various properties, for example, a rubber composition containing a conjugated diene-based rubber-like polymer, and a reinforcing filler such as carbon black or silica is known.

In such a rubber composition, attempts have been made for improving the various properties such as abrasion resistance by improving the dispersibility of a filler in the rubber composition through introduction, into a molecular end portion of a conjugated diene-based polymer with high motility, of a functional group having affinity or reactivity with the filler.

However, a wet grip performance that is a property required of a tire tread rubber for exhibiting a braking property on a wet road surface in general is a property contradictory to abrasion resistance. Specifically, improvement of one of these properties tends to cause deterioration of the other property. Therefore, a tire tread rubber is required to solve the contradiction of these properties.

Furthermore, to improve the abrasion resistance of a rubber composition, extensive efforts have been made to increase the content of a conjugated diene-based polymer having a cis-trans linkage in a conjugated diene-based polymer used in the rubber composition. However, a rubber composition with a high content of such a conjugated diene-based polymer having a cis-trans linkage has a problem of significantly poor processability.

On the other hand, from the viewpoint of the durability of a tire, a rubber composition is required also to have an excellent tensile property. When a plurality of rubber materials are used for improving both the wet grip performance and the abrasion resistance for solving the contradiction between these properties as described above, if the affinity among the plural rubber materials is low, the mechanical strength of the resultant rubber composition tends to be deteriorated. Therefore, there is a demand for a rubber composition that can solve the contradiction between the wet grip performance and the abrasion resistance, and has excellent mechanical strength.

For example, Patent Documents 1 to 3 disclose rubber compositions each containing a modified conjugated diene-based polymer, which is obtained by reacting an alkoxysilane having an amino group with an active end of a conjugated diene-based polymer, and silica. Patent Document 4 discloses a rubber composition containing a modified conjugated diene-based polymer having a small amount of vinyl bond. Patent Document 5 discloses a rubber composition containing a conjugated diene-based polymer composition containing a plurality of types of modified conjugated diene-based polymers.

### [Patent Documents]

[Patent Document 1] Japanese Patent Laid-Open No.2005-290355A
[Patent Document 2] Japanese Patent Laid-Open No.1999-189616 A
[Patent Document 3] Japanese Patent Laid-Open No.2003-171418 A
[Patent Document 4] Japanese Patent No.6512240B
[Patent Document 5] Japanese Patent Laid-Open No.2021-143324A

Conventionally known rubber compositions including the rubber compositions disclosed in Patent Documents 1 to 4 have, however, a problem that there still is a room of improvement in the physical properties. For example, a rubber composition containing a conventional conjugated diene-based polymer has a problem that when the wet grip performance is improved, the winter performance is deteriorated to deteriorate the performance on an ice and snow road surface, and thus it is difficult to be excellent in both of these performances. Besides, when such a rubber composition is vulcanized particularly to obtain a vulcanizate containing an inorganic filler such as silica, there arise problems that the dispersibility of the silica is reduced, flexibility is reduced, the performance on an ice and snow road surface is deteriorated, and in addition, the abrasion resistance is insufficient.

Besides, as a result of detailed study of the rubber composition described in Patent Document 5, the rubber composition was found to be suitable for design of a tire requiring the fuel consumption performance, but was found to have a problem that there still is a room of improvement in the wet grip performance and the abrasion resistance for use as the material of a general summer tire.

Therefore, an object of the present invention is to provide a modified conjugated diene-based polymer from which a rubber composition excellent in both the wet grip performance and the abrasion resistance and also excellent in the fuel consumption performance and tensile property can be obtained, and a method for producing the modified conjugated diene-based polymer.

### SUMMARY OF THE INVENTION

As a result of earnest studies made by the present inventors for solving the above-described problems, the following has been found: When a modified conjugated diene-based polymer has prescribed weight average molecular weight and modification ratio, and has one peak within a prescribed temperature range in a tan δ peak graph as a function of a temperature derived from dynamic viscoelasticity analysis, and the tan δ peak height is within a prescribed numerical range, a rubber composition excellent in both the wet grip performance and the abrasion resistance and also excellent in the fuel consumption performance and tensile property can be obtained from the modified conjugated diene-based polymer. Thus, the present invention has been accomplished.

Specifically, the present invention provides the following.
[1] A modified conjugated diene-based polymer, comprising a conjugated diene monomer unit and an aromatic vinyl monomer unit,
   wherein the modified conjugated diene-based polymer has a weight average molecular weight measured by GPC of 700000 or more, and a modification ratio of 60% or more, and
   in a tan δ peak graph as a function of a temperature derived from dynamic viscoelasticity analysis performed with an ARES (Advanced Rheometric Expansion System) based on the following <conditions 1>, the modified conjugated diene-based polymer has one tan δ peak in a temperature range from -100°C to 100°C,
   a height of the tan δ peak is 0.90 or more and 1.45 or less:
      <conditions 1>
      a dynamic mechanical analyzer is used in torsional mode under conditions of a frequency of 10 Hz, a strain of 0.5%, and a temperature rise rate of 5°C/min for obtaining the tan δ peak graph.
[2] The modified conjugated diene-based polymer according to [1],
   wherein a branch number (Bn) measured by a GPC-light scattering method with a viscosity detector is 7 or more.
[3] The modified conjugated diene-based polymer according to [1] or [2],
   wherein a molecular weight distribution is 1.7 or more and 2.5 or less.
[4] The modified conjugated diene-based polymer according to any one of [1] to [3],
   wherein an estimated glass transition temperature (estimated Tg) derived from a microstructure of the modified conjugated diene-based polymer is -62°C or more and less than -25°C.
[5] The modified conjugated diene-based polymer according to any one of [1] to [4], comprising two or more polymer segments,
   wherein a first polymer segment, which has a mass fraction in the modified conjugated diene-based polymer of 10% or more, and is a polymer segment closest to a polymerization start end, has an estimated glass transition temperature (estimated Tg) of -90°C or more and -40°C or less,
   a second polymer segment, which is a polymer segment closest to a polymerization termination end, has an estimated Tg, equal to or more than the estimated Tg of the first polymer segment, of -50°C or more and -10°C or less, and
   a modifier is bonded to an end of the second polymer segment.
[6] The modified conjugated diene-based polymer according to any one of [1] to [5], comprising a modifier residue derived from an alkoxysilane compound having a nitrogen atom.
[7] A method for producing the conjugated diene-based polymer according to any one of [1] to [6], comprising:
   a polymerization step of polymerizing, using a continuous reactor including two or more reactors arranged in series, at least one conjugated diene-based compound with a lithium compound used as a polymerization initiator,
   the continuous reactor having a monomer adding part for adding, during the polymerization step, at least one conjugated diene compound and at least one aromatic vinyl compound; and
   a coupling step of reacting a conjugated diene-based polymer obtained by the polymerization step with a modifier having a nitrogen atom.
[8] The method for producing the modified conjugated diene-based polymer according to [7],
   wherein an aromatic vinyl compound is used as a polymerizable monomer in the polymerization step, and
   a conversion rate of a polymerization intermediate of the aromatic vinyl compound in the monomer adding part is 70% or more.
[9] The method for producing the modified conjugated diene-based polymer according to [7] or [8],
   wherein the monomer adding part is disposed in a pipe between a first reactor and a second reactor included in the continuous reactor.
[10] The method for producing the modified conjugated diene-based polymer according to any one of [7] to [9],
   wherein a branching agent is added in the monomer adding part.

### Advantageous Effect of Invention

The present invention can provide a modified conjugated diene-based polymer from which a rubber composition excellent in both the wet grip performance and the abrasion resistance and also excellent in the fuel consumption performance and tensile property can be obtained.

### DETAILED DESCRIPTION OF THE INVENTION

Now, an embodiment for practicing the present invention (hereinafter referred to as the "present embodiment") will be described in detail.

It is noted that the following present embodiment is merely an example for describing the present invention, and does not intend to limit the present invention to the following contents. The present invention can be practiced with various modifications appropriately made within the scope thereof.

### [Modified Conjugated Diene-based Polymer]

A modified conjugated diene-based polymer of the present embodiment contains a conjugated diene monomer unit and an aromatic vinyl monomer unit.

In the modified conjugated diene-based polymer of the present embodiment, a weight average molecular weight measured by GPC (gel permeation chromatography) is 700000 or more, a modification ratio is 60% or more, and in a tan δ peak graph as a function of a temperature derived from dynamic viscoelasticity analysis performed with an ARES (Advanced Rheometric Expansion System) based on the following <conditions 1>, the modified conjugated diene-based polymer has one tan δ peak in a temperature range from -100°C to 100°C, and the height of the tan δ peak is 1.45 or less and 0.90 or more.
<Conditions 1>
The tan δ peak graph is obtained with a dynamic mechanical analyzer in torsional mode under conditions of a frequency of 10 Hz, a strain of 0.5%, and a temperature rise rate of 5°C/min.

By employing the above-described configuration, it is possible to obtain a modified conjugated diene-based polymer from which a rubber composition excellent in both the wet grip performance and the abrasion resistance and also excellent in the fuel consumption performance and tensile property can be obtained.

### (Conjugated Diene Compound)

The modified conjugated diene-based polymer of the present embodiment contains a conjugated diene monomer unit.

Examples of a conjugated diene compound forming the conjugated diene monomer unit include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene, and isoprene are preferred, and 1,3-butadiene is more preferred from the viewpoint of industrial availability. One of these may be singly used, or two or more of these may be used together.

### (Aromatic Vinyl Compound)

The modified conjugated diene-based polymer of the present embodiment contains an aromatic vinyl monomer unit.

Examples of an aromatic vinyl compound forming the aromatic vinyl monomer unit include, but are not limited to, styrene, p-methylstyrene, α-methylstyrene, vinylethylbenzene, vinylxylene, vinylnaphthalene, and diphenylethylene. Among these, styrene, or p-methylstyrene is preferred, and styrene is more preferred from the viewpoint of industrial availability. One of these may be singly used, or two or more of these may be used together.

### (Amount of Bound Aromatic Vinyl Monomer Unit X)

The amount of bound aromatic vinyl monomer unit X (% by mass) herein refers to a value of a mass fraction (% by mass) of a bound aromatic vinyl monomer unit in the total mass of the modified conjugated diene-based polymer or a polymer segment described below.

Here, the amount of bound aromatic vinyl monomer unit can be calculated by measuring ultraviolet absorption of a phenyl group contained in a portion derived from an aromatic vinyl compound of the modified conjugated diene-based polymer (hereinafter, referred to as the "bound aromatic vinyl monomer unit"). Besides, regarding the bound conjugated diene monomer unit, the amount of the bound conjugated diene monomer unit can be obtained based on the amount of the bound aromatic vinyl monomer unit obtained as described above. Specifically, the amount can be measured by a method described in examples below.

### (Amount of Vinyl Bond Y in Bound Conjugated Diene)

The amount of vinyl bond Y (mol%) in bound conjugated diene herein refers to a value of a mole fraction (mol%) of a 1,2-bond unit in a conjugated diene-derived polymer unit contained in the modified conjugated diene-based polymer or the polymer segment described below.

When the modified conjugated diene-based polymer of the present embodiment is a polymer of butadiene and styrene, the amount of vinyl bond in bound conjugated diene can be obtained by obtaining the amount of vinyl bond (amount of 1,2-bond) in bound butadiene by Hampton method (R. R. Hampton, Analytical Chemistry, 21, 923 (1949)). Specifically, the amount can be measured by a method described in the examples below.

### (Microstructure)

The microstructure herein refers to a composition of a polymer, including the type of isomer, in the modified conjugated diene-based polymer, or in the polymer segment described below.

In the modified conjugated diene-based polymer of the present embodiment, the mass of a copolymer consisting of styrene and butadiene is preferably 70% by mass or more, more preferably 80% by mass or more, and further preferably 90% by mass or more with respect to the mass of the entire modified conjugated diene-based polymer.

### (Content of Bound Aromatic Vinyl Monomer Unit Block)

The modified conjugated diene-based polymer of the present embodiment preferably contains a few blocks in which four or more bound aromatic vinyl monomer units are chained (hereinafter sometimes referred to as the bound aromatic vinyl monomer unit block), or contains no bound aromatic vinyl monomer unit block.

The modified conjugated diene-based polymer of the present embodiment contains a few or no bound aromatic vinyl monomer unit blocks, and hence tends to be unlikely to have two or more glass transition temperatures (Tg).

A content of the bound aromatic vinyl monomer unit block in the modified conjugated diene-based polymer can be measured, when the modified conjugated diene-based polymer is a butadiene-styrene copolymer, by employing a known method in which the modified conjugated diene-based polymer is decomposed by Kolthoff method (a method described by I. M. KOLTHOFF, et al., J. Polym. Sci. 1, 429 (1946)) to analyze the amount of polystyrene insoluble in methanol. The content of the bound aromatic vinyl monomer unit block measured by such a method is preferably 1.0 % by mass or less, more preferably 0.1% by mass or less, and further preferably 0% by mass with respect to the total amount of the modified conjugated diene-based polymer. When the bound aromatic vinyl monomer unit block is not contained in a modified conjugated diene copolymer, and in the polymer segment described below, the modified conjugated diene-based polymer tends to exhibit a consecutive property against temperature change. As a result, a vulcanizate using the modified conjugated diene-based polymer consecutively changes in a wide temperature range, and tends to be excellent in tensile strength.

### (Method for Estimating Glass Transition Temperature of Polymer): Estimated Glass Transition Temperature (Estimated Tg)

The glass transition temperature of the modified conjugated diene-based polymer of the present embodiment can be estimated by using Gordon Taylor formula expanded to two or more component series of the following expression (1) (Gordon, M., Taylor, J. S. J., Appl. Chem. 1952, 2, 493). This value is referred to as the estimated glass transition temperature.$Estimated Tg = \frac{{\sum }_{i} \left(\frac{Δ {α}_{i} {w}_{i} {Tg}_{i}}{{ρ}_{i}}\right)}{{\sum }_{i} \left(\frac{Δ {α}_{i} {w}_{i}}{{ρ}_{i}}\right)}$ (1)

In the expression (1), a subscript i of each variable indicates each component of the microstructure contained in the modified conjugated diene-based polymer, Δαᵢ denotes a difference in the thermal expansion coefficient of a homopolymer of the component i caused through glass transition, wᵢ denotes a mass ratio of the component i in the modified conjugated diene-based polymer, Tgᵢ denotes the glass transition temperature of the homopolymer of the component i, and ρᵢ denotes the density of the homopolymer of the component i. As these values, a literature value or a measured value can be used. For example, when the modified conjugated diene-based polymer contains styrene, and one of the components i is a styrene component, Δαᵢ can be 3.6 × 10⁻⁴ K⁻¹ based on the thermal expansion coefficient of polystyrene (J. BRANDRUP et al., Polymer Handbook, 3rd edition, (U.S.A.), John Wiley & Sons, Inc., 1966, VI-75), Tgᵢ can be 105.3°C based on the measured value of the glass transition temperature, and ρᵢ can be 1.02 g/cm³ based on the measured value of the density.

For example, when the modified conjugated diene-based polymer is a butadiene-styrene random copolymer, the estimated glass transition temperature (estimated Tg) can be calculated in accordance with the following expression (i) by using the amount of bound aromatic vinyl monomer unit Xₐₗₗ (% by mass), the amount of vinyl bond Yₐₗₗ (mol%) in bound conjugated diene, and the thermal expansion coefficient (Δaᵢ), the glass transition temperature (Tgᵢ), and the density (ρᵢ) of each of polystyrene (PS) (indicated as St in the following expression), poly-1,2-butadiene (1,2-PBd) (indicated as 1,2PBd in the following expression), and poly-1,4-butadiene (1,4-PBd) (indicated as 1,4PBd in the following expression):
$\begin{matrix}Tg = \frac{\frac{{Δa}_{st} \times \frac{{X}_{all}}{100} \times {Tg}_{\left(PS\right)}}{{ρ}_{\left(PS\right)}} + \frac{{Δa}_{\left(1,4 PBd\right)} \times \left(1-\frac{{X}_{all}}{100}\right) \times \left(1-\frac{{Y}_{all}}{100}\right) \times {Tg}_{\left(1,4PBd\right)} + {Δa}_{\left(1,2 PBd\right)} \times \left(1-\frac{{X}_{all}}{100}\right) \times \left(\frac{{Y}_{all}}{100}\right) \times {Tg}_{\left(1,2PBd\right)}}{{ρ}_{\left(PBd\right)}}}{\frac{{Δa}_{st} \times \frac{{X}_{all}}{100}}{{ρ}_{\left(PS\right)}} + \frac{{Δa}_{\left(1,4 PBd\right)} \times \left(1-\frac{{X}_{all}}{100}\right) \times \left(1-\frac{{Y}_{all}}{100}\right) + {Δa}_{\left(1,2 PBd\right)} \times \left(1-\frac{{X}_{all}}{100}\right) \times \left(\frac{{Y}_{all}}{100}\right)}{{ρ}_{\left(PBd\right)}}} \\ = \frac{\frac{{X}_{all}}{100} \times 37 , 2 + \left(1-\frac{{X}_{all}}{100}\right) \times \left\{\left(1-\frac{{Y}_{all}}{100}\right)\times \left(-57.5\right)+\left(\frac{{Y}_{all}}{100}\right)\times \left(-5.38\right)\right\}}{\frac{{X}_{all}}{100} \times 0.36 + \left(1-\frac{{X}_{all}}{100}\right) \times \left\{\left(1-\frac{{Y}_{all}}{100}\right)\times \left(0.56\right)+\left(\frac{{Y}_{all}}{100}\right)\times \left(0.46\right)\right\}} \\ = \frac{- 5750 + 94.7 \times {X}_{all} + 52.12 \times {Y}_{all} - 0.5212 \times {X}_{all} \times {Y}_{all}}{56 - 0.2 \times {X}_{all} - 0.1 \times {Y}_{all} + 0.001 \times {X}_{all} \times {Y}_{all}}\end{matrix}$ (i)

The influence, on the denominator of the expression (i), of a product of the amount of bound aromatic vinyl monomer unit Xₐₗₗ (% by mass) and the amount of vinyl bond Yₐₗₗ (mol%) in bound conjugated diene is very small, and hence the expression can be approximated to the following expression (ii). Besides, the expression (ii) can be approximated to the following expression (iii).$Tg ≒ \frac{- 5750 + 94 . 7 \times {X}_{all} + 52 . 12 \times {Y}_{all} - 0 . 5212 \times {X}_{all} \times {Y}_{all}}{56 - 0 . 2 \times {X}_{all} - 0 . 1 \times {Y}_{all}}$ (ii) $Tg ≒ \frac{- 5750 + 95 \times {X}_{all} + 52 \times {Y}_{all} - 0 . 52 \times {X}_{all} \times {Y}_{all}}{56 - 0 . 2 \times {X}_{all} - 0 . 1 \times {Y}_{all}}$ (iii)

Specifically, when the modified conjugated diene-based polymer of the present embodiment is a butadiene homopolymer, or a butadiene-styrene-based random copolymer, the glass transition temperature (estimated Tg) of the modified conjugated diene-based polymer can be estimated in accordance with the expression (iii) based on values usually used in design.

As described above, a mass ratio among microstructure components can be obtained based on the microstructure such as the amount of bound aromatic vinyl monomer unit Xₐₗₗ (% by mass) and the amount of vinyl bond Yₐₗₗ (mol%) in bound conjugated diene in the modified conjugated diene-based polymer of the present embodiment, and the glass transition temperature (estimated Tg) of the modified conjugated diene-based polymer can be calculated in accordance with the expression (1). In other words, the expression (1) is a standard indicating the change of the glass transition temperature of the modified conjugated diene-based polymer against the change of the amount of bound aromatic vinyl monomer unit Xₐₗₗ (% by mass) and the amount of vinyl bond Yₐₗₗ (mol%) in bound conjugated diene.

When the value of the expression (1) is small, the glass transition temperature (Tg) of the modified conjugated diene-based polymer of the present embodiment is low, and when the value is large, the glass transition temperature (Tg) is high.

For example, when the expression (1) is -60°C, the glass transition temperature of the modified conjugated diene-based polymer is estimated as -60°C, and when it is -40°C, the glass transition temperature is estimated as-40°C.

In this manner, the value of the expression (1) obtained based on the microstructure of the polymer is an index of the glass transition temperature of the modified conjugated diene-based polymer in general. The present inventors have, however, found that when the relaxation of a modified conjugated diene-based polymer in the vicinity of a measured glass transition temperature occurs in a wide range of temperature, actual viscoelasticity of a vulcanizate thereof does not always accord with the viscoelasticity calculated based on the estimated glass transition temperature (estimated Tg) calculated by the expression (1) based on the microstructure. Specifically, when the absolute value of a difference in the estimated glass transition temperature between polymer segments described below is 33°C or more, or when the absolute value of a difference in the amount of bound aromatic vinyl monomer unit between the polymer segments is 25% by mass or more, discrepancy between the glass transition temperature estimated based on the expression (i) (estimated Tg) and a measured glass transition temperature (Tg) tends to be conspicuous. Therefore, it has been discovered that, from the viewpoint of controlling the performance of a vulcanizate affected by the glass transition temperature, it is more effective to adjust the estimated glass transition temperature (estimated Tg) calculated by the expression (i) based on the microstructure than to adjust the measured glass transition temperature of the modified conjugated diene-based polymer to a specific value. This seems to be because small energy change is picked up in DSC (differential scanning calorimetry), and hence the entire glass transition temperature is affected by the start of the relaxation of a low Tg portion of the modified conjugated diene-based polymer, resulting in decreasing the measured glass transition temperature to be lower than the estimated glass transition temperature. For example, it has been experimentally confirmed that in modified conjugated diene-based polymers having the same microstructure as a whole, the glass transition temperature measured by DSC may be different by about 2 to 5°C depending on a difference in the microstructure of each segment.

The lower limit of the estimated Tg, derived from the microstructure, of the modified conjugated diene-based polymer of the present embodiment is preferably - 62°C or more, more preferably -58°C or more, and further preferably -55°C or more.

When the lower limit of the estimated Tg is within this range, there is a tendency that the wet grip performance and the tensile property of a vulcanizate of the modified conjugated diene-based polymer of the present embodiment can be improved.

Besides, the upper limit of the estimated Tg, derived from the microstructure, of the modified conjugated diene-based polymer of the present embodiment is preferably less than -25°C, more preferably -35°C or less, and further preferably -40°C or less.

When the upper limit of the expression (i) is within this range, there is a tendency that the abrasion resistance and the fuel consumption performance of a vulcanizate of the modified conjugated diene-based polymer of the present embodiment can be improved.

The expression (i) can be controlled to fall in the above-described numerical range by adjusting the microstructure of the modified conjugated diene-based polymer. For example, when the modified conjugated diene-based polymer is a butadiene-styrene-based copolymer, the estimated Tg can be controlled to fall in the above-described numerical range by adjusting the amount of bound styrene Xₐₗₗ (% by mass) of the modified conjugated diene-based polymer, and the amount of vinyl bond Yₐₗₗ (mol%) in butadiene in accordance with the expression (iii).

### (Polymer Segment)

The modified conjugated diene-based polymer of the present embodiment preferably has two or more polymer segments.

The polymer segment refers to a part of the modified conjugated diene-based polymer containing a conjugated diene monomer unit and an aromatic vinyl monomer unit, or containing a conjugated diene monomer unit. The polymer segment preferably contains a conjugated diene monomer unit and an aromatic vinyl monomer unit.

Besides, in the modified conjugated diene-based polymer of the present embodiment, the polymer segment preferably contains a few or no blocks in which 4 or more bound aromatic vinyl monomer units are chained.

The plurality of polymer segments contained in the modified conjugated diene-based polymer of the present embodiment have mutually different microstructures. In the respective polymer segments, for example, the amount of the bound aromatic vinyl monomer unit, and the amount of vinyl bond in bound conjugated diene may be different, and the respective polymer segments can be distinguished by a method described in the examples below.

As described above, the modified conjugated diene-based polymer of the present embodiment preferably has two or more polymer segments. When the polymer has two or more polymer segments, glass transition is caused in a plurality of temperature ranges of one modified conjugated diene-based polymer.

The polymer segment is produced by a continuous polymerization method, and differently from a block structure generally produced by batch polymerization, is characterized by having a molecular weight distribution. Since the plural polymer segments are present in one modified conjugated diene-based polymer, and respectively have a molecular weight distribution, respective molecules have different glass transition temperatures due to superposition of the distributions. In other words, in accordance with the combination of the molecular weight of the different plural polymer segments, the respective molecules behave as if they had different glass transition temperatures. For example, when a low-molecular-weight component with a low glass transition temperature is bonded to a high-molecular-weight component with a high glass transition temperature, the molecule behaves as if it were a component with a high glass transition temperature, and when a high-molecular-weight component with a low glass transition temperature is bonded to a low-molecular-weight component with a high glass transition temperature, the molecule behaves as if it were a component with a low glass transition temperature. Accordingly, the modified conjugated diene-based polymer of the present embodiment has a continuous glass transition temperature distribution.

The expression (i) is also applicable to the polymer segments, and by assigning the amount of bound aromatic vinyl monomer unit (X₁, or X₂) of each polymer segment, or the amount of vinyl bond (Y₁, or Y₂) of each polymer segment, the estimated glass transition temperature (estimated Tg₁, or estimated Tg₂) of each polymer segment can be calculated.

Herein, out of the two or more polymer segments contained in the modified conjugated diene-based polymer, a polymer segment having a mass fraction in the modified conjugated diene-based polymer of 10% or more, and closest to the polymerization start end is referred to as the "first polymer segment", and a polymer segment closest to the polymerization termination end is referred to as the "second polymer segment". The boundary between the polymer segments is defined as a point where abrupt change in the microstructure occurs. In the present embodiment, for example, a portion polymerized before additional addition of a conjugated diene compound, preferably a conjugated diene compound and an aromatic vinyl compound in a production method described below is defined as the first polymer segment, and a portion polymerized thereafter is defined as the second polymer segment.

The modified conjugated diene-based polymer of the present embodiment may contain another polymer segment in addition to the first and second polymer segments, and is preferably composed of the two polymer segments from the viewpoint of manufacturability. A ratio of the total mass of the first polymer segment and the second polymer segment to the mass of the entire modified conjugated diene-based polymer is preferably 70% by mass or more, more preferably 80% by mass or more, and further preferably 90% by mass or more from the viewpoint of the balance between the wet grip performance and the abrasion resistance.

In the modified conjugated diene-based polymer of the present embodiment, the lower limit of the estimated glass transition temperature (estimated Tg) of the first polymer segment is preferably -90°C or more, more preferably -75°C or more, and further preferably -65°C or more.

When the lower limit of the estimated Tg of the first polymer segment is within this range, there is a tendency that the wet grip performance and the tensile property of a vulcanizate of the modified conjugated diene-based polymer of the present embodiment can be improved.

The upper limit of the estimated Tg of the first polymer segment is preferably -40°C or less, more preferably -45°C or less, and further preferably -50°C or less.

When the upper limit of the estimated Tg of the first polymer segment is within this range, there is a tendency that the abrasion resistance and the fuel consumption performance of a vulcanizate of the modified conjugated diene-based polymer of the present embodiment can be improved.

The estimated Tg can be controlled to fall in the above-described numerical range by adjusting the microstructure of the modified conjugated diene-based polymer. For example, when the modified conjugated diene-based polymer is a butadiene-styrene-based polymer, the estimated Tg can be controlled to fall in the above-described numerical range by adjusting the amount of bound styrene X₁ (% by mass) of the first polymer segment, and the amount of vinyl bond Y₁ (mol%) in butadiene in accordance with the expression (iii).

In the modified conjugated diene-based polymer of the present embodiment, the lower limit of the estimated Tg of the second polymer segment is preferably -50°C or more, more preferably -45°C or more, and further preferably -35°C or more.

When the lower limit of the estimated Tg of the second polymer segment is within this range, there is a tendency that the wet grip performance and the tensile property of a vulcanizate of the modified conjugated diene-based polymer of the present embodiment can be improved.

The upper limit of the estimated Tg of the second polymer segment is preferably -10°C or less, more preferably -15°C or less, and further preferably -20°C or less.

Besides, the estimated Tg of the second polymer segment is preferably equal to or more than the estimated Tg of the first polymer segment.

Furthermore, a modifier is preferably bonded to the end of the second polymer segment.

When the upper limit of the estimated Tg is within this range, the abrasion resistance and the fuel consumption performance of a vulcanizate of the modified conjugated diene-based polymer of the present embodiment can be improved.

The estimated Tg can be controlled to fall in the above-described numerical range by adjusting the microstructure of the modified conjugated diene-based polymer. For example, when the modified conjugated diene-based polymer is a butadiene-styrene-based polymer, the estimated Tg can be controlled to fall in the above-described numerical range by adjusting the amount of bound styrene X₂ (% by mass) of the second polymer segment, and the amount of vinyl bond Y₂ (mol%) in butadiene in accordance with the expression (iii).

When the ratio between the average molecular weights of the first polymer segment and the second polymer segment, and the difference in the estimated glass transition temperature therebetween are precisely controlled, the height of a tan δ peak of the modified conjugated diene-based polymer described below can be controlled to fall in a prescribed range, and thus, it is possible to obtain a modified conjugated diene-based polymer from which a vulcanizate excellent in balance between the wet grip performance and the abrasion resistance with a decrease in tensile strength suppressed.

As the difference in the estimated glass transition temperature between the first polymer segment and the second polymer segment (|estimated Tg₂ - estimated Tg₁|) is larger, the glass transition occurs gradually over a wide temperature range, and therefore, the height of the tan δ peak of the modified conjugated diene-based polymer tends to reduce.

Also in a conventionally known continuously polymerized conjugated diene-based polymer, polymer segments can be defined, but change in the estimated glass transition temperature is small, and a sharp glass transition behavior is exhibited in a narrow temperature range.

On the contrary, in the modified conjugated diene-based polymer of the present embodiment, the plurality of polymer segments respectively have different glass transition temperatures, and the glass transition occurs gradually over a wide temperature range as described above. Therefore, the height of the tan δ peak of the modified conjugated diene-based polymer conspicuously tends to reduce, and thus, the wet grip performance and the abrasion resistance can be both improved.

In the modified conjugated diene-based polymer of the present embodiment, the lower limit of the difference in the estimated glass transition temperature between the first polymer segment and the second polymer segment is preferably 18°C or more, more preferably 25°C or more, and further preferably 30°C or more. The upper limit of the difference in the estimated glass transition temperature between the first polymer segment and the second polymer segment is preferably 60°C or less, more preferably 50°C or less, and further preferably 40°C or less.

### (Polymer Segment Ratio)

As the ratio between the average molecular weights of the first polymer segment and the second polymer segment is closer to 1, the glass transition tends to be gradually caused over a wide temperature range, and therefore, the height of a tan δ peak correlated with the amount of local glass transition in a given narrow temperature range tends to decrease.

In the modified conjugated diene-based polymer of the present embodiment, the first and second polymer segments preferably have prescribed mass ratios.

A polymer segment mass ratio refers to an average mass fraction of each polymer segment to the entire modified conjugated diene-based polymer.

The mass ratio of each of the first and second polymer segments of the modified conjugated diene-based polymer of the present embodiment is defined as a mass ratio, to the total mass of the modified conjugated diene-based polymer, of each polymer segment obtained in each of polymerization steps P1 and P2 that are polymerization steps for these polymer segments described below.

A ratio between a first polymer segment mass ratio (r₁) and a second polymer segment mass ratio (r₂) (R = r₁/r₂, hereinafter sometimes referred to as the ratio between the polymer segment mass ratios) is preferably 0.25 to 4, more preferably 0.33 to 3, and further preferably 0.4 to 2.4. When the lower limit of the ratio R is 0.25 or more, low fuel consumption performance of a vulcanizate tends to be excellent. When the upper limit of the ratio R is 4 or less, processability obtained in the form of a vulcanizate tends to be excellent.

The ratio R between polymer segment mass ratios can be measured by a method described in the examples below, and can be controlled to fall in the above-described numerical range by adjusting, in the production process of the modified conjugated diene-based polymer of the present embodiment, conditions such as a polymerization time, a polymerization temperature, the amount of a monomer to be added, and the amount of vinyl bond in the polymerization steps for the respective polymer segments.

A method for introducing a plurality of polymer segments into a molecule of the modified conjugated diene-based polymer can be performed by adding, by employing a continuous solution polymerization method using a continuous reactor including a plurality of reactors arranged in series, a conjugated diene compound, an aromatic vinyl compound, a polar material, and a solvent successively to the respective reactors as described below. The substances to be successively added may be the same or different among the reactors.

### (tan δ Peak Height)

In a tan δ peak graph as a function of a temperature derived from dynamic viscoelasticity analysis performed with an ARES (Advanced Rheometric Expansion System) based on the <conditions 1>, the modified conjugated diene-based polymer of the present embodiment has one tan δ peak in a temperature range of -100°C to 100°C, and the tan δ peak has a height of 0.90 or more and 1.45 or less, preferably 0.90 or more and 1.25 or less, and further preferably 0.90 or more and 1.15 or less. When the height of the tan δ peak is within this range, a polymer segment containing a high concentrated aromatic vinyl monomer unit and a conjugated diene monomer unit having a high concentrated vinyl bond, and excellent in the wet grip performance can be obtained, with a decrease in compatibility within the molecule of the modified conjugated diene-based polymer suppressed. As a result, there is a tendency that a vulcanizate excellent in balance between the wet grip performance and the abrasion resistance with a decrease in tensile strength suppressed can be obtained.

Herein, the term "tan δ peak" refers to a peak appearing in a tan δ peak graph as a function of a temperature derived from dynamic viscoelasticity analysis performed with a dynamic mechanical analyzer (ARES-G2, manufactured by TA Instruments) in torsional mode under conditions of a frequency of 10 Hz, a strain of 0.5%, and a temperature rise rate of 5°C/min. The "tan δ peak height" is defined as the value of tan δ at the peak top.

In a general method for producing a random copolymer, polymerization conditions, such as a polymerization temperature, a monomer concentration, and a catalyst concentration, are rarely intentionally changed significantly during the polymerization from the viewpoint of production stability and cost-efficiency, and therefore, such a random copolymer has a high and sharp tan δ peak. This is because an aromatic vinyl monomer unit is high in randomness and has a microstructure consistently uniform in many cases, and a significant trade-off between the wet grip performance and the abrasion resistance is observed in such a random copolymer.

On the other hand, in a block copolymer produced by batch polymerization or the like, there is a tendency that a tan δ peak significantly broadens to decrease the tan δ peak height, or the tan δ peak splits into two or more. This is because phase separation is caused since a block portion including a continuous aromatic vinyl monomer unit is formed in the conjugated diene-based polymer, or the aromatic vinyl monomer unit is excessively densely distributed in one of block copolymer chains. In such a case, a vulcanizate obtained therefrom tends to be inferior in tensile strength.

The tan δ peak height means a height of randomness of the microstructure within the molecule, and when the tan δ peak height is 0.90 or more and 1.45 or less, a polymer segment containing a high concentrated aromatic vinyl monomer unit and a conjugated diene monomer unit having a high concentrated vinyl bond, and excellent in the wet grip performance can be obtained, with decrease in compatibility within the molecule of the modified conjugated diene-based polymer suppressed. Thus, it is possible to obtain a modified conjugated diene-based polymer from which a vulcanizate excellent in balance between the wet grip performance and the abrasion resistance with a decrease in tensile strength suppressed can be obtained.

In order to control the tan δ peak height of the modified conjugated diene-based polymer of the present embodiment to 0.90 or more and 1.45 or less, it is effective to control the microstructures of the two polymer segments.

Specifically, the tan δ peak height can be reduced by increasing the difference in the estimated Tg between the two polymer segments to make the ratio of the average molecular weights closer to 1, and can be increased conversely by increasing the difference in the estimated Tg to make the ratio of the average molecular weights farther from 1.

An example of a method for controlling the difference in the estimated Tg between the two polymer segments includes a method in which the polymerization is performed such that the aromatic vinyl monomer unit and the conjugated diene monomer unit to be vinyl bonded are appropriately randomly distributed. Specifically, the difference can be controlled by adding a conjugated diene compound and an aromatic vinyl compound during the polymerization steps for the first and second polymer segments, and adjusting conditions such as the amount of the aromatic vinyl monomer unit to be added in the polymerization steps for the first and second polymer segments, the amount of a polar material to be added, and the polymerization temperature. Besides, the ratio between the average molecular weights of the two polymer segments can be controlled by adjusting the conditions such as a polymerization time, a polymerization temperature, the amount of a monomer to be added, and the amount of a polar material to be added in the polymerization steps for the respective polymer segments.

In the continuous polymerization method, in order to control the aromatic vinyl monomer unit and the conjugated diene monomer unit to be vinyl bonded to appropriate randomness for controlling the tan δ peak height to fall in the prescribed range, it is effective to perform polymerization sequentially using two or more reactors employing different polymerization conditions. Specifically, in order to maintain a prescribed estimated glass transition temperature, it is necessary to reduce the amount of bound aromatic vinyl in the first polymer segment and the amount of vinyl bond in the bound conjugated diene with keeping a large amount of the aromatic vinyl monomer to be added in the entire polymerization step. Here, when the polymerization conditions such as the amount of the polar material, the polymerization temperature, and the polymerization concentration are set to be low for reducing the amount of bound aromatic vinyl of the first polymer segment and the amount of vinyl bond in the bound conjugated diene, a conversion rate of the aromatic vinyl compound significantly reduces. When the conversion rate of the aromatic vinyl compound is insufficient, the concentration of the aromatic vinyl compound increases in the system before subsequently polymerizing the second polymer segment, and an aromatic vinyl monomer unit block is formed, resulting in a tendency that the tan δ peak height cannot be controlled to fall in the prescribed range. Accordingly, in order to control the tan δ peak height to fall in the prescribed range, it is preferable that the conversion rate of the aromatic vinyl compound in a discharge part of the polymerization step for the first polymer segment is 70% or more, and that the rest of the conjugated diene compound and the aromatic vinyl compound are added immediately before polymerizing the second polymer segment. A conversion rate of the aromatic vinyl compound here is defined as described below as the mass of the aromatic vinyl compound consumed in the polymerization reaction to form the conjugated diene polymer, relative to the total mass of the aromatic vinyl compound added at the time of measurement.

### (Glass Transition Temperature)

The measured glass transition temperature (Tg) of the modified conjugated diene-based polymer of the present embodiment is preferably -62°C or more, more preferably -58°C or more, and further preferably -55°C or more. The measured glass transition temperature of the modified conjugated diene-based polymer of the present embodiment is preferably less than -25°C, more preferably -35°C or less, and further preferably -40°C or less. When the glass transition temperature satisfies this range, the fuel consumption performance of a vulcanizate of the modified conjugated diene-based polymer of the present embodiment tends to be further excellent.

Besides, the modified conjugated diene-based polymer of the present embodiment has an estimated Tg calculated based on the microstructure falling in a numerical range of -62°C or more and -25°C or less, and the modified conjugated diene-based polymer of the present embodiment satisfying this numerical range basically has a measured glass transition temperature falling in the above-described range.

The glass transition temperature may fall in a range obtained by arbitrarily combining any of the upper limits and any of the lower limits described above. The glass transition temperature of the modified conjugated diene-based polymer can be measured in accordance with ISO 22768:2006. More specifically, a differential scanning calorimetry (DSC) curve is recorded by measuring DSC with a temperature increased within a prescribed temperature range, and an inflection point of the DSC curve is defined as the glass transition temperature. Specifically, it may be measured by a method described in the examples below.

The modified conjugated diene-based polymer of the present embodiment may contain a plastic component such as a resin or a process oil described below, and it is necessary to exclude such a component in the DSC measurement for obtaining the Tg of the modified conjugated diene copolymer of the present embodiment.

The measured glass transition temperature of the modified conjugated diene-based polymer varies depending on the amount of bound aromatic vinyl monomer unit of the modified conjugated diene-based polymer, and the amount of vinyl bond in bound conjugated diene. Specifically, the glass transition temperature is increased by increasing the amount of bound aromatic vinyl monomer unit and the amount of vinyl bond in bound conjugated diene, and the glass transition temperature is decreased by decreasing the amount of bound aromatic vinyl monomer unit, and the amount of vinyl bond in bound conjugated diene.

### (Weight Average Molecular Weight)

A weight average molecular weight (Mw) of the modified conjugated diene-based polymer of the present embodiment measured by a GPC measurement method is 70 × 10⁴ or more, preferably 75 × 10⁴ or more, more preferably 80 × 10⁴ or more, and further preferably 85 × 10⁴ or more. When the weight average molecular weight measured by the GPC measurement method satisfies the above-described range, a vulcanizate thereof tends to be excellent in abrasion resistance.

The weight average molecular weight is preferably 150 × 10⁴ or less, more preferably 110 × 10⁴ or less, and further preferably 100 × 10⁴ or less. When the weight average molecular weight satisfies the above-described range, a vulcanizate thereof tends to be further excellent in the dispersibility of a filler therein, and excellent in the processability.

The weight average molecular weight may fall in a range obtained by arbitrarily combining any of the upper limits and any of the lower limits described above.

The weight average molecular weight of the modified conjugated diene-based polymer can be measured by the GPC measurement method, and specifically can be measured by a method described in the examples below.

### (Number Average Molecular Weight)

A number average molecular weight of the modified conjugated diene-based polymer of the present embodiment measured by the GPC measurement method is preferably 25 × 10⁴ or more, more preferably 30 × 10⁴ or more, and further preferably 35 × 10⁴ or more. When the number average molecular weight measured by the GPC measurement method satisfies the above-described range, a vulcanizate thereof tends to be excellent in abrasion resistance.

The number average molecular weight is preferably 80 × 10⁴ or less, more preferably 70 × 10⁴ or less, and further preferably 50 × 10⁴ or less. When the number average molecular weight satisfies the above-described range, a vulcanizate thereof tends to be more excellent in the dispersibility of a filler therein, and excellent in the processability.

The number average molecular weight may fall in a range obtained by arbitrarily combining any of the upper limits and any of the lower limits described above. The number average molecular weight of the modified conjugated diene-based polymer can be measured by the GPC measurement method, and can be measured by a method described in the examples below.

The weight average molecular weight and the number average molecular weight of the modified conjugated diene-based polymer can be controlled to fall in the above-described ranges by adjusting a ratio between the amount of a polymerization initiator to be used and the amount of the monomer to be used, the type and the amount to be used of a branching agent, the type and the amount to be used of a coupling agent, the shape of a polymerization reactor, stirring intensity, the residence time of a polymer solution, and the like.

### (Molecular Weight Distribution)

A molecular weight distribution of the modified conjugated diene-based polymer of the present embodiment is represented by a ratio of the weight average molecular weight (Mw) to the number average molecular weight (Mn). The molecular weight distribution of the modified conjugated diene polymer of the present embodiment is preferably 1.7 or more. A modified conjugated diene-based polymer having a molecular weight distribution falling in this range tends to be more excellent in the processability in obtaining a vulcanizate therefrom.

The molecular weight distribution of the modified conjugated diene polymer of the present embodiment is more preferably 1.8 or more, and further preferably 2.0 or more.

The upper limit is preferably 2.5 or less, more preferably 2.2 or less, and further preferably 2.1 or less.

The molecular weight distribution may fall in a range obtained by arbitrarily combining any of the upper limits and any of the lower limits described above.

### (Mooney Viscosity)

Mooney viscosity measured at 100°C of the modified conjugated diene-based polymer of the present embodiment is preferably 50 or more and 180 or less, more preferably 70 or more and 160 or less, and further preferably 90 or more and 140 or less.

When the Mooney viscosity of the modified conjugated diene-based polymer of the present embodiment is within these ranges, the processability in vulcanization and the abrasion resistance of the resultant vulcanizate tend to be further improved. The Mooney viscosity of the modified conjugated diene-based polymer can be measured by a method described in the examples below.

The Mooney viscosity of the modified conjugated diene-based polymer of the present embodiment can be controlled to fall in the above-described ranges by adjusting the amount of a polymerization initiator to be used, the types and the amounts to be used of a branching agent and a modifier, and the type and the amount to be used of a plasticizer.

### (Branch Number (Bn))

From the viewpoints of the fuel consumption performance, the processability, the abrasion resistance, and the tensile property, the modified conjugated diene-based polymer of the present embodiment has branch number (Bn) measured by GPC-light scattering method with a viscosity detector (hereinafter, sometimes simply referred to as the "branch number (Bn)") of preferably 7 or more.

In general, the branch number (Bn) is an index indicating a branched structure of a polymer. Having the branch number (Bn) of 7 or more means that the modified conjugated diene-based polymer of the present embodiment has substantially five or more polymer side chains relative to the longest polymer main chain.

Here, "branch" refers to a structure formed by the bonding, to one polymer chain, of another polymer chain. Besides, the term "branch number (Bn)" refers to the number of polymer chains directly or indirectly bonded to the longest polymer main chain. In other words, a side chain bonded to the longest polymer chain is counted, and when the side chain is further branched, the number of branches of the side chain is taken into account in addition. Therefore, if one polymer chain is bonded as a side chain to the longest polymer chain, and another polymer chain is further bonded to that side chain, the branch number is two.

The branch number (Bn) of a modified conjugated diene-based polymer is defined, by using a shrinkage factor (g') measured by GPC-light scattering method with a viscosity detector, as g' = 6 Bn/{(Bn + 1)(Bn + 2)}.

In general, a branched polymer tends to have a smaller molecular size compared to a linear polymer having the same absolute molecular weight. Here, the "molecular size" refers to the volume substantially occupied by the molecule. The shrinkage factor (g') relatively represents the molecular size of a target polymer, and serves as an index of the ratio of the molecular size of the target polymer to that of a linear polymer with the same absolute molecular weight as the target polymer. Specifically, as the branch number of a polymer increases, the molecular size thereof becomes relatively smaller, and therefore, the shrinkage factor (g') tends to decrease.

Since it is known that there is a correlation between the molecular size of a polymer and the ratio of intrinsic viscosities, in the present embodiment, the shrinkage factor (g') is defined as the ratio of intrinsic viscosities. Specifically, the shrinkage factor (g') is defined as the ratio ([η]/[η₀]) of the intrinsic viscosity [η] of a target polymer to the intrinsic viscosity [η₀] of a linear polymer having the same absolute molecular weight as the target polymer.

It is known that the intrinsic viscosity [η₀] of a linear polymer follows the relational expression [η₀] = 10^{-3.498}M^{0.711}. In this expression, M represents the absolute molecular weight as measured by a light scattering method described in the examples below. Accordingly, by measuring the absolute molecular weight and the intrinsic viscosity of a target polymer by the GPC-light scattering method with a viscosity detector, the shrinkage factor (g') and the branch number (Bn) can be obtained. The thus calculated branch number (Bn) accurately indicates the number of polymer chains directly or indirectly bonded to the longest polymer main chain.

The calculated branch number (Bn) can be an index indicating the branched structure of a modified conjugated diene-based polymer. For example, in the case of a general four-arm star polymer (in which four polymer chains are connected to a central portion), two polymer-chain arms are bonded to the longest highly branched main chain structure, and the branch number (Bn) is evaluated as 2.

In the case of a general eight-arm star polymer, six polymer-chain arms are bonded to the longest highly branched main chain structure, and the branch number (Bn) is evaluated as 6.

The modified conjugated diene-based polymer of the present embodiment has a branch number (Bn) of preferably 7 or more, which means that this is a modified conjugated diene-based polymer having, as a star polymer structure, a branched structure similar to a nine-arm polymer structure.

Here, "branch" refers to a structure formed by the bonding, to one polymer, of another polymer directly or indirectly. Besides, the term "branch number (Bn)" refers to the number of polymers directly or indirectly bonded to the longest main chain structure.

Since the branch number (Bn) is 7 or more, the modified conjugated diene-based polymer of the present embodiment is extremely excellent in the processability in obtaining a vulcanizate therefrom, and the vulcanizate thereof is excellent in fuel economy and abrasion resistance.

In general, a higher absolute molecular weight tends to degrade processability, but when the branch number (Bn) is 7 or more, the viscosity increase caused in obtaining a vulcanizate due to the increase of the absolute molecular weight is greatly suppressed. Therefore, for example, such a polymer can be sufficiently mixed with silica or the like in a kneading process, and thus, the silica can be dispersed around the resultant modified conjugated diene-based polymer. As a result, for example, by setting a high molecular weight for the modified conjugated diene-based polymer, the abrasion resistance and fracture strength can be improved, and in addition, sufficient kneading allows silica to be dispersed around the polymer, enabling functional groups to function and/or react. As a result, it is possible to achieve the fuel economy and the wet grip performance sufficient for practical use.

Besides, in the modified conjugated diene-based polymer of the present embodiment having a tan δ peak height of 0.90 or more and 1.45 or less in the tan δ peak graph as a function of a temperature derived from dynamic viscoelasticity analysis performed based on the <conditions 1> described above, when the branch number (Bn) is 7 or more, a vulcanizate obtained therefrom is further excellent in the fuel consumption performance and the wet grip performance.

In the modified conjugated diene-based polymer of the present embodiment, the branch number (Bn) is preferably 7 or more, more preferably 8 or more, and further preferably 10 or more.

When the branch number (Bn) is within this range, the modified conjugated diene-based polymer tends to be excellent in processability in obtaining a vulcanizate therefrom.

The upper limit of the branch number (Bn) of the modified conjugated diene-based polymer of the present embodiment is not particularly limited, and may be equal to or more than a detection limit value, and is preferably 84 or less, more preferably 80 or less, further preferably 57 or less, and even more preferably 20 or less.

When the branch number (Bn) is 84 or less, the modified conjugated diene-based polymer of the present embodiment tends to be excellent in the abrasion resistance and tensile performance obtained in the form of a vulcanizate.

The branch number (Bn) of the modified conjugated diene-based polymer can be controlled to 7 or more by a combination of the amount of a branching agent to be added and the amount of a terminal end-coupling agent to be added described later. Specifically, the branch number can be controlled by adjusting the number of functional groups in a branching agent, the amount of the branching agent to be added, the timing of adding the branching agent, the number of functional groups in a coupling agent or a nitrogen atom-containing modifier, and the amount to be added of the coupling agent or the nitrogen atom-containing modifier. More specifically, the branch number can be controlled to 7 or more by producing the modified conjugated diene-based polymer by a production method described later.

### (Main Chain Branched Structure)

In order to control the branch number, the modified conjugated diene-based polymer of the present embodiment preferably has a main chain branched structure.

Regarding the main chain branched structure, when the modified conjugated diene-based polymer of the present embodiment has a portion derived from a vinyl-based monomer containing an alkoxysilyl group or a halosilyl group, a branch point in such a portion has preferably two or more branches, more preferably three or more branches, and further preferably four or more branches.

Besides, the branch point forming the main chain branched structure preferably has two or more polymer chains, more preferably has three or more polymer chains that are not a main chain, and further preferably four or more polymer chains that are not a main chain.

Particularly in a main chain branched structure composed of a vinyl-based monomer containing an alkoxysilyl group or a halosilyl group, a peak derived from the main chain branched structure is detected, in signal detection by 29Si-NMR, in the range from -45 ppm to -65 ppm, and more restrictively in the range from -50 ppm to -60 ppm.

### (Star Polymer Structure)

The modified conjugated diene-based polymer of the present embodiment preferably has a star polymer structure, and the number of arms derived from the star polymer structure is preferably three or more, more preferably four or more, further preferably six or more, and even more preferably eight or more.

The modified conjugated diene-based polymer of the present embodiment is preferably a modified conjugated diene-based polymer having a star polymer structure with three or more arms, and it is preferable that a branched chain of at least one star structure has a portion derived from a vinyl-based monomer containing an alkoxysilyl group or a halosilyl group, and that the portion derived from a vinyl-based monomer containing an alkoxysilyl group or a halosilyl group further has a main chain branched structure. As a method for obtaining a modified conjugated diene-based polymer having a such structure, the "star polymer structure" can be formed by adjusting the number of functional groups in the coupling agent, and the amount of the coupling agent to be added, and the "main chain branched structure" can be controlled by adjusting the number of functional groups in the branching agent, the amount of the branching agent to be added, and the timing of adding the branching agent.

In order to obtain a modified conjugated diene-based polymer having a star polymer structure with three or more arms, in which a branched chain of at least one star structure has a portion derived from a vinyl-based monomer containing an alkoxysilyl group or a halosilyl group, and the portion derived from a vinyl-based monomer containing an alkoxysilyl group or a halosilyl group further has a main chain branched structure, for example, polymerization is performed using an organic lithiumbased compound as a polymerization initiator, a branching agent for achieving a specific number of branch points is added during or after the polymerization, and after continuing the polymerization, modification is performed using a coupling agent for achieving a specific branching ratio.

A method for controlling these polymerization conditions will be described in a production method in the examples below.

### (Detailed Structure of Main Chain Branched Structure)

It is preferable that the portion derived from a vinyl-based monomer containing an alkoxysilyl group or a halosilyl group in the modified conjugated diene-based polymer of the present embodiment is a monomer unit based on a compound represented by the following general formula (1) or (2), and has a branch point of a polymer chain formed by the monomer unit based on the compound represented by the formula (1) or (2), it is more preferable that the modified conjugated diene-based polymer is obtained using a coupling agent, and it is further preferable that at least one end of the modified conjugated diene-based polymer is modified with a nitrogen atom-containing group.

The coupling agent may also serve as a modifier described later.

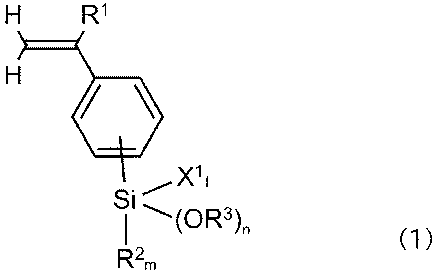

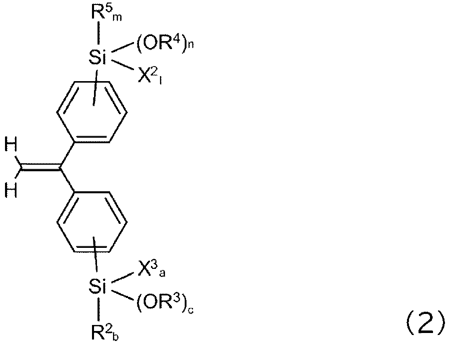

In the formula (1), R¹ represents a hydrogen atom, an alkyl group having 1 to 20 carbon atoms, or an aryl group having 6 to 20 carbon atoms, and optionally has a branched structure in a portion thereof.

R² and R³ each independently represent an alkyl group having 1 to 20 carbon atoms or an aryl group having 6 to 20 carbon atoms, and optionally have a branched structure in a portion thereof. Each of R¹ to R³, if present in a plural number, is respectively independent.

X¹ represents an independent halogen atom.

m represents an integer of 0 to 2, n represents an integer of 0 to 3, and l represents an integer of 0 to 3. (m + n + 1) is 3.

In the formula (2), R² to R⁵ each independently represent an alkyl group having 1 to 20 carbon atoms, or an aryl group having 6 to 20 carbon atoms, and optionally have a branched structure in a portion thereof.

Each of R² to R⁵, if present in a plural number, is respectively independent.

X² and X³ each represent an independent halogen atom.

m represents an integer of 0 to 2, n represents an integer of 0 to 3, and l represents an integer of 0 to 3.

(m + n + 1) is 3.

a represents an integer of 0 to 2, b represents an integer of 0 to 3, and c represents an integer of 0 to 3. (a + b + c) is 3.

The modified conjugated diene-based polymer of the present embodiment is preferably a modified conjugated diene-based polymer containing a monomer unit based on a compound represented by the formula (1) wherein R¹ is a hydrogen atom, and m = 0. Thus, the branch number is improved, and there is a tendency that the effect of improving the abrasion resistance and the processability can be obtained.

The modified conjugated diene-based polymer of the present embodiment is preferably a modified conjugated diene-based polymer containing a monomer unit based on a compound represented by the formula (2) wherein m = 0 and b = 0. Thus, there is a tendency that the effect of improving the abrasion resistance and the processability can be obtained.

The modified conjugated diene-based polymer of the present embodiment is preferably a modified conjugated diene-based polymer containing a monomer unit based on a compound represented by the formula (2) wherein m = 0, l = 0, n = 3, a = 0, b = 0, and c = 3. Thus, there is a tendency that the effect of improving the abrasion resistance and the processability can be obtained.

The modified conjugated diene-based polymer of the present embodiment is preferably a modified conjugated diene-based polymer containing a monomer unit based on a compound represented by the formula (1) wherein R¹ is a hydrogen atom, and m = 0, l = 0, and n = 3. Thus, a modification ratio described below and the branch number are improved, and there is a tendency that the effect of improving the fuel consumption performance, the abrasion resistance and the processability can be obtained.

### (Branching Agent)

In the modified conjugated diene-based polymer of the present embodiment, it is preferable to use a branching agent having a structure represented by the following formula (1) or (2) in constructing the main chain branched structure:

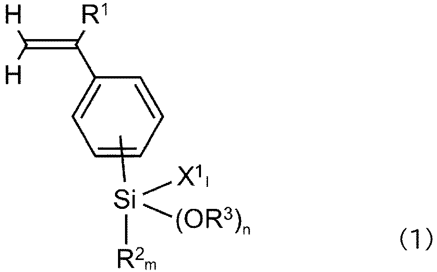

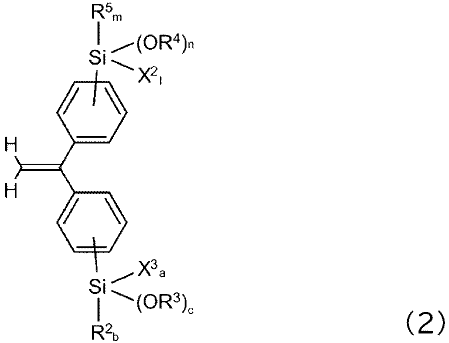

In the formula (1), R¹ represents a hydrogen atom, an alkyl group having 1 to 20 carbon atoms, or an aryl group having 6 to 20 carbon atoms, and optionally has a branched structure in a portion thereof.

R² and R³ each independently represent an alkyl group having 1 to 20 carbon atoms or an aryl group having 6 to 20 carbon atoms, and optionally have a branched structure in a portion thereof.

Each of R¹ to R³, if present in a plural number, is respectively independent.

X¹ represents an independent halogen atom.

m represents an integer of 0 to 2, n represents an integer of 0 to 3, and l represents an integer of 0 to 3.

(m + n + 1) is 3.

In the formula (2), R² to R⁵ each independently represent an alkyl group having 1 to 20 carbon atoms, or an aryl group having 6 to 20 carbon atoms, and optionally have a branched structure in a portion thereof.

Each of R² to R⁵, if present in a plural number, is respectively independent.

X² and X³ each represent an independent halogen atom.

m represents an integer of 0 to 2, n represents an integer of 0 to 3, and l represents an integer of 0 to 3.

(m + n + 1) is 3.

a represents an integer of 0 to 2, b represents an integer of 0 to 3, and c represents an integer of 0 to 3. (a + b + c) is 3.

From the viewpoints of continuity of the polymerization and improvement of the branch number, the branching agent used in constructing the main chain branched structure of the modified conjugated diene-based polymer of the present embodiment is preferably a compound represented by the formula (1) wherein R¹ is a hydrogen atom and m = 0.

From the viewpoint of improvement of the branch number, the branching agent used in constructing the main chain branched structure of the modified conjugated diene-based polymer of the present embodiment is preferably a compound represented by the formula (2) wherein m = 0 and b = 0.

From the viewpoints of continuity of the polymerization and improvement of the modification ratio and the branch number, the branching agent used in constructing the main chain branched structure of the modified conjugated diene-based polymer of the present embodiment is preferably a compound represented by the formula (1) wherein R¹ is a hydrogen atom, and m = 0, l = 0, and n = 3.

From the viewpoints of improvement of the modification ratio and the branch number, the branching agent used in constructing the main chain branched structure of the modified conjugated diene-based polymer of the present embodiment is preferably a compound represented by the formula (2) wherein m = 0, l = 0, n = 3, a = 0, b = 0, and c = 3.

Examples of the branching agent represented by the formula (1) include, but are not limited to: trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, triisopropoxy(2-vinylphenyl)silane, dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, and diisopropoxymethyl(4-vinylphenyl)silane.

Other examples include: dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, diisopropoxymethyl(2-vinylphenyl)silane, dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinylphenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, and dimethylisopropoxy(2-vinylphenyl)silane.

Still other examples include: trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, triisopropoxy(2-isopropenylphenyl)silane, dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, diisopropoxymethyl(2-isopropenylphenyl)silane, dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, and dimethylisopropoxy(2-isopropenylphenyl)silane.

Still other examples include: trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

Among these, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, and trichloro(4-vinylphenyl)silane are preferred; and trimethoxy(4-vinylphenyl)silane, triethoxy(4-vinylphenyl)silane, tripropoxy(4-vinylphenyl)silane, tributoxy(4-vinylphenyl)silane, and triisopropoxy(4-vinylphenyl)silane are more preferred.

Examples of the branching agent represented by the aforementioned formula (2) include, but are not limited to, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, 1,1-bis(4-triisopropoxysilylphenyl)ethylene, 1,1-bis(3-trimethoxysilylphenyl)ethylene, 1,1-bis(3-triethoxysilylphenyl)ethylene, 1,1-bis(3-tripropoxysilylphenyl)ethylene, 1,1-bis(3-tripentoxysilylphenyl)ethylene, 1,1-bis(3-triisopropoxysilylphenyl)ethylene, 1,1-bis(2-trimethoxysilylphenyl)ethylene, 1,1-bis(2-triethoxysilylphenyl)ethylene, 1,1-bis(3-tripropoxysilylphenyl)ethylene, 1,1-bis(2-tripentoxysilylphenyl)ethylene, 1,1-bis(2-triisopropoxysilylphenyl)ethylene, 1,1-bis(4-(dimethylmethoxysilyl)phenyl)ethylene, 1,1-bis(4-(diethylmethoxysilyl)phenyl)ethylene, 1,1-bis(4-(dipropylmethoxysilyl)phenyl)ethylene, 1,1-bis(4-(dimethylethoxysilyl)phenyl)ethylene, 1,1-bis(4-(diethylethoxysilyl)phenyl)ethylene, and 1,1-bis(4-(dipropylethoxysilyl)phenyl)ethylene.

Among these, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, and 1,1-bis(4-triisopropoxysilylphenyl)ethylene are preferred, and 1,1-bis(4-trimethoxysilylphenyl)ethylene is more preferred.

### (Modification Ratio)

The modified conjugated diene-based polymer of the present embodiment has a modification ratio of 60% or more.

Herein, the term "modification ratio" refers to, when a mixture of a modified conjugated diene-based polymer and a non-modified conjugated diene-based polymer can be obtained by modifying a conjugated diene-based polymer with a modifier having a nitrogen atom, a mass content, expressed in %, of a modified conjugated diene-based polymer component having, in a polymer molecule, a specific functional group having affinity or binding reactivity with a filler to the total amount of the mixture. Accordingly, when the specific functional group has a nitrogen atom, the modification ratio indicates a mass ratio of a modified conjugated diene-based polymer containing a nitrogen atom to the total amount of the mixture.

Herein, the term "modified conjugated diene-based polymer" means a conjugated diene-based polymer having been modified, and a mixture of a modified conjugated diene-based polymer and a non-modified conjugated diene-based polymer.

For example, when a conjugated diene-based polymer containing a modified conjugated diene-based polymer modified by reacting a terminal end of the conjugated diene-based polymer with a nitrogen atom-containing modifier is obtained, a mass ratio of a modified conjugated diene-based polymer having a nitrogen atom-containing functional group derived from the nitrogen atom-containing modifier to the total amount of the modified conjugated diene-based polymer corresponds to the modification ratio.

The modified conjugated diene-based polymer of the present embodiment is modified preferably at the end of the second polymer segment. When the end of the second polymer segment having a high glass transition temperature is bonded to a filler, a vulcanizate more excellent in the wet grip performance tends to be obtained.

The modification ratio can be measured by a method using chromatography capable of separating a functional group-containing modified component and a non-modified component.

An example of the method employing chromatography includes a method in which a column for gel permeation chromatography using, as a filler, a polar material adsorbing a specific functional group, such as silica, is used for performing quantitative determination by using internal standard of a non-adsorbed component for comparison.

More specifically, the modification ratio can be obtained by measuring an amount of adsorption onto a silica column based on a difference between a chromatogram measured on a sample solution containing a sample and low molecular weight internal standard polystyrene using a polystyrene-based gel column and a chromatogram measured using a silica-based column. More specifically, the modification ratio can be measured by a method described in the examples described below.

In the modified conjugated diene-based polymer of the present embodiment, the modification ratio can be controlled by adjusting the amount of a modifier to be added and the reaction method.

For example, when a method in which polymerization is performed by using, as a polymerization initiator, an organic lithium compound having at least one nitrogen atom in a molecule described below, a method in which a monomer having at least one nitrogen atom in a molecule is copolymerized, and a method in which a modifier having a structural formula described below is used are combined, and polymerization conditions are controlled, and thus, a modification ratio described above can be obtained.

The modification ratio of the modified conjugated diene-based polymer of the present embodiment is 60% or more, preferably 65% or more, and more preferably 70% or more from the viewpoint of the fuel consumption performance of a vulcanizate thereof.

### <Modifier having Nitrogen Atom>

Examples of the modifier having a nitrogen atom include, but are not limited to, an amine compound having no active hydrogen, an isocyanate compound, an isothiocyanate compound, an isocyanuric acid derivative, a carbonyl compound having a nitrogen atom, a vinyl compound having a nitrogen atom, an epoxy compound having a nitrogen atom, and an alkoxysilane compound having a nitrogen atom.

The modifier having a nitrogen atom is preferably an amine compound having no active hydrogen, and examples include a tertiary amine compound, a protected amine compound in which the active hydrogen is replaced with a protective group, an imine compound represented by a general formula -N=C, and the aforementioned alkoxysilane compound having a nitrogen atom.

Examples of the isocyanate compound used as the modifier having a nitrogen atom include, but are not limited to, 2,4-tolylene diisocyanate, 2,6-tolylene diisocyanate, diphenylmethane diisocyanate, polymeric diphenylmethane diisocyanate (C-MDI), phenyl isocyanate, isophorone diisocyanate, hexamethylene diisocyanate, butyl isocyanate, and 1,3,5-benzene triisocyanate.

Examples of the isocyanuric acid derivative used as the modifier having a nitrogen atom include, but are not limited to, 1,3,5-tris(3-trimethoxysilylpropyl)isocyanurate, 1,3,5-tris(3-triethoxysilylpropyl)isocyanurate, 1,3,5-tri(oxiran-2-yl)-1,3,5-triazinane-2,4,6-trione, 1,3,5-tris(isocyanatomethyl)-1,3,5-triazinane-2,4,6-trione, and 1,3,5-trivinyl-1,3,5-triazinane-2,4,6-trione.

Examples of the carbonyl compound used as the modifier having a nitrogen atom include, but are not limited to, 1,3-dimethyl-2-imidazolidinone, 1-methyl-3-ethyl-2-imidazolidinone, 1-methyl-3-(2-methoxyethyl)-2-imidazolidinone, N-methyl-2-pyrolidone, N-methyl-2-piperidone, N-methyl-2-quinolone, 4,4'-bis(diethylamino)benzophenone, 4,4'-bis(dimethylamino)benzophenone, methyl-2-pyridyl ketone, methyl-4-pyridyl ketone, propyl-2-pyridyl ketone, di-4-pyridyl ketone, 2-benzoylpyridine, N,N,N',N'-tetramethylurea, N,N-dimethyl-N',N'-diphenylurea, methyl N,N-diethylcarbamate, N,N-diethylacetamide, N,N-dimethyl-N',N'-dimethylaminoacetamide, N,N-dimethyl picolinic acid amide, and N,N-dimethyl isonicotinic acid amide.

Examples of the vinyl compound used as the modifier having a nitrogen atom include, but are not limited to, N,N-dimethylacrylamide, N,N-dimethylmethacrylamide, N-methylmaleimide, N-methylphthalimide, N,N-bistrimethylsilylacrylamide, morpholinoacrylamide, 3-(2-dimethylaminoethyl)styrene, (dimethylamino)dimethyl-4-vinylphenylsilane, 4,4'-vinylidene bis(N,N-dimethylaniline), 4,4'-vinylidene bis(N,N-dimethylaniline), 1,1-bis(4-morpholinophenyl)ethylene, and 1-phenyl-1-(4-N,N-dimethylaminophenyl)ethylene.

An example of the epoxy compound used as the modifier having a nitrogen atom includes, but is not limited to, an epoxy group-containing hydrocarbon compound bonded to an amino group, which may further have an epoxy group bonded to an ether group.

An example of such an epoxy compound includes, but is not limited to, an epoxy compound represented by the following general formula (a):

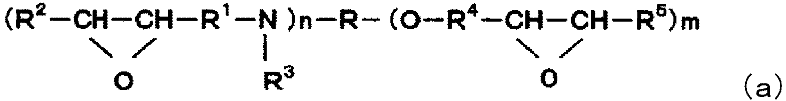

In the formula (a), R represents a bi- or higher valent hydrocarbon group, or a bi- or higher valent organic group having at least one polar group selected from a polar group having oxygen such as ether, epoxy or ketone, a polar group having sulfur such as thioether or thioketone, and a polar group having nitrogen such as a tertiary amino group or an imino group.

The bi- or higher valent hydrocarbon group is an optionally saturated or unsaturated linear, branched or cyclic hydrocarbon group, and encompasses an alkylene group, an alkenylene group, a phenylene group, and the like. A hydrocarbon group having 1 to 20 carbon atoms is preferred. Examples thereof include methylene, ethylene, butylene, cyclohexylene, 1,3-bis(methylene)-cyclohexane, 1,3-bis(ethylene)-cyclohexane, o-, m-, or p-phenylene, m-, or p-xylene, and bis(phenylene)-methane.

In the formula (a), R¹ and R⁴ are a hydrocarbon group having 1 to 10 carbon atoms, and R¹ and R⁴ are optionally the same or different.

In the formula (a), R² and R⁵ are hydrogen, or a hydrocarbon group having 1 to 10 carbon atoms, and R² and R⁵ are optionally the same or different.

In the formula (a), R³ is a hydrocarbon group having 1 to 10 carbon atoms, or a structure represented by the following formula (a1).

R¹, R², and R³ may be a cyclic structure mutually bonded.

When R³ is a hydrocarbon group, R³ may be a cyclic structure mutually bonded to R. In the cyclic structure, N bonded to R³ may be directly bonded to R.

In the formula (a), n is an integer of 1 or more, and m is 0, or an integer of 1 or more.

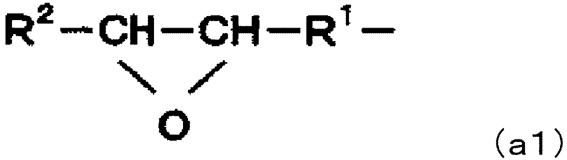

In the formula (a1), R¹ and R² are defined in the same manner as R¹ and R² of the formula (a), and R¹ and R² are optionally the same or different.

The epoxy compound used as the modifier having a nitrogen atom preferably has an epoxy group-containing hydrocarbon group, and more preferably has a glycidyl group-containing hydrocarbon group.

An epoxy group-containing hydrocarbon group bonded to an amino group or an ether group is not especially limited, and examples thereof include a glycidylamino group, a diglycidylamino group or a glycididoxy group. More preferable molecular structures are epoxy group-containing compounds respectively containing a glycidylamino group or a diglycidylamino group, and a glycididoxy group, and an example thereof includes a compound represented by the following general formula (a2):

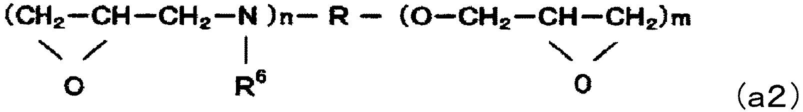

In the formula (a2), R is defined in the same manner as R of the formula (a), and R⁶ is a hydrocarbon group having 1 to 10 carbon atoms, or a structure represented by the following formula (a3).

When R⁶ is a hydrocarbon group, R⁶ may be a cyclic structure mutually bonded to R, and in this case, N bonded to R⁶ may be directly bonded to R.

In the formula (a2), n is an integer of 1 or more, and m is 0, or an integer of 1 or more.

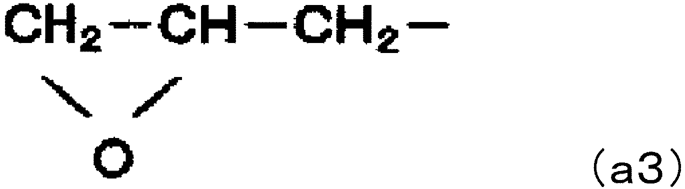

The epoxy compound used as the modifier having a nitrogen atom is particularly preferably a compound having one or more diglycidylamino groups, and one or more glycidoxy groups in a molecule.

Examples of the epoxy compound used as the modifier having a nitrogen atom include, but are not limited to, N,N-diglycidyl-4-glycidoxyaniline, 1-N,N-diglycidylaminomethyl-4-glycidoxy-cyclohexane, 4-(4-glycidoxyphenyl)-(N,N-diglycidyl)aniline, 4-(4-glycidoxyphenoxy)-(N,N-diglycidyl)aniline, 4-(4-glycidoxybenzyl)-(N,N-diglycidyl)aniline, 4-(N,N'-diglycidyl-2-piperazinyl)-glycidoxybenzene, 1,3-bis(N,N-diglycidylaminomethyl)cyclohexane, N,N,N',N'-tetraglycidyl-m-xylenediamine, 4,4-methylene-bis(N,N-diglycidylaniline), 1,4-bis(N,N-diglycidylamino)cyclohexane, N,N,N',N'-tetraglycidyl-p-phenylenediamine, 4,4'-bis(diglycidylamino)benzophenone, 4-(4-glycidylpiperazinyl)-(N,N-diglycidyl)aniline, 2-[2-(N,N-diglycidylamino)ethyl]-1-glycidylpyrrolidine, N,N-diglycidylaniline, 4,4'-diglycidyl-dibenzylmethylamine, N,N-diglycidylaniline, N,N-diglycidyl ortho-toluidine, and N,N-diglycidylaminomethylcyclohexane. Among these, N,N-diglycidyl-4-glycidoxyaniline, and 1,3-bis(N,N-diglycidylaminomethyl)cyclohexane are particularly preferred.

From the viewpoint of effectively and definitely achieving the effects of the modified conjugated diene-based polymer of the present embodiment, the modifier is preferably an alkoxysilane compound having a nitrogen atom. Examples of such a modifier include, but are not limited to, 3-dimethylaminopropyltrimethoxysilane, 3-dimethylaminopropylmethyldimethoxysilane, 3-diethylaminopropyltriethoxysilane, 3-morpholinopropyltrimethoxysilane, 3-piperidinopropyltriethoxysilane, 3-hexamethyleneiminopropylmethyldiethoxysilane, 3-(4-methyl-1-piperazino)propyltriethoxysilane, 1-[3-(triethoxysilyl)-propyl]-3-methylhexahydropyrimidine, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 3-dimethylamino-2-(dimethylaminomethyl)propyltrimethoxysilane, bis(3-dimethoxymethylsilylpropyl)-N-methylamine, bis(3-trimethoxysilylpropyl)-N-methylamine, bis(3-triethoxysilylpropyl)methylamine, tris(trimethoxysilyl)amine, tris(3-trimethoxysilylpropyl)amine, N,N,N',N'-tetra(3-trimethoxysilylpropyl)ethylenediamine, 3-isocyanatopropyltrimethoxysilane, 3-cyanopropyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2-2-dimethoxy-1-(4-triemthoxysilylbutyl)-1-aza-2-silacylcohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, 2,2-dimethoxy-8-(4-methylpiperazinyl)methyl-1,6-dioxa-2-silacyclooctane, and 2,2-dimethoxy-8-(N,N-diethylamino)methyl-1,6-dioxa-2-silacyclooctane.

### <Alkoxysilane Compound having Nitrogen Atom as Modifier>

The modified conjugated diene-based polymer of the present embodiment is preferably modified with an alkoxysilane compound having a nitrogen atom. Specifically, the modified conjugated diene-based polymer preferably has a modifier residue derived from an alkoxysilane compound having a nitrogen atom.

Particularly preferable examples of the alkoxysilane compound having a nitrogen atom include the following:
Specific examples include tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine (also designated as "N,N,N',N'-tetrakis(3-trimethoxysilylpropyl)-1,3-propanediamine"), tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-1-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane)propyl] ether, and (3-trimethoxysilylpropyl) phosphate.

Other examples include bis(3-trimethoxysilylpropyl)-[3-(2,2-dimethoxy-1-aza-2-silacyclopentane)propyl]phosphate, bis[3-(2,2-dimethoxy-1-aza-2-silacyclopentane)propyl]-(3-trimethoxysilylpropyl)phosphate, tris[3-(2,2-dimethoxy-1-aza-2-silacyclopentane)propyl]phosphate, N-(1,3-dimethylbutylidene)-3-(triethoxysilyl)-1-propanamine, N-(1,3-dimethylbutylidene)-3-(trimethoxysilyl)-1-propanamine, N-benzylidene-3-(triethoxysilyl)propan-1-amine, N-benzylidene-3-(trimethoxysilyl)propan-1-amine, 1,1-(1,4-phenylene)bis(N-(3-(triethoxysilyl)propyl)methanamine), 1,1-(1,4-phenylene)bis(N-(3(trimethoxysilyl)propyl)methanamine), 2-methoxy-2-methyl-1-(benzylideneaminoethyl)-1-aza-2-silacyclopentane, and 2-methoxy-2-methyl-1-(4-methoxybenzylideneaminoethyl)-1-aza-2-silacyclopentane.

Still other examples include 1-methyl-4-[3-(trimethoxysilyl)propyl]piperazine, 1-methyl-4-[3-(triethoxysilyl)propyl]piperazine, 1-methyl-4-[3-(methyldimethoxysilyl)propyl]piperazine, 3,3'-(1,1,3,3-tetramethoxydisiloxane-1,3-diyl) bis(N,N-dimethylpropan-1-amine), 3,3'-(1,1,3,3-tetraethoxydisiloxane-1,3-diyl) bis(N,N-dimethylpropan-1-amine), 3,3'-(1,1,3,3-tetrapropoxydisiloxane-1,3-diyl) bis(N,N-dimethylpropan-1-amine), 3,3'-(1,1,3,3-tetramethoxydisiloxane-1,3-diyl) bis(N,N-diethylpropan-1-amine), 3,3'-(1,1,3,3-tetramethoxydisiloxane-1,3-diyl) bis(N,N-dipropylpropan-1-amine), 3,3'-(1,1,3,3-tetraethoxydisiloxane-1,3-diyl) bis(N,N-diethylpropan-1-amine), 3,3'-(1,1,3,3-tetrapropoxydisiloxane-1,3-diyl) bis(N,N-diethylpropan-1-amine), and 3,3'-(1,1,3,3-tetraethoxydisiloxane-1,3-diyl) bis(N,N-dipropylpropan-1-amine).

Still other examples include 3,3'-(1,1,3,3-tetrapropoxydisiloxane-1,3-diyl) bis(N,N-dipropylpropan-1-amine), 3,3'-(1,1,3,3-tetramethoxydisiloxane-1,3-diyl) bis(N,N-diethylmethan-1-amine), 3,3'-(1,1,3,3-tetraethoxydisiloxane-1,3-diyl) bis(N,N-diethylmethan-1-amine), 3,3'-(1,1,3,3-tetrapropoxydisiloxane-1,3-diyl) bis(N,N-diethylmethan-1-amine), 3,3'-(1,1,3,3-tetramethoxydisiloxane-1,3-diyl) bis(N,N-dimethylmethan-1-amine), 3,3'-(1,1,3,3-tetramethoxydisiloxane-1,3-diyl) bis(N,N-dipropylmethan-1-amine), 3,3'-(1,1,3,3-tetrapropoxydisiloxane-1,3-diyl) bis(N,N-dimethylmethan-1-amine), 3,3'-(1,1,3,3-tetrapropoxydisiloxane-1,3-diyl) bis(N,N-dipropylmethan-1-amine), 3,3'-(1,1,3,3-tetraethoxydisiloxane-1,3-diyl) bis(N,N-dimethylmethan-1-amine), 3,3'-(1,1,3,3-tetraethoxydisiloxane-1,3-diyl) bis(N,N-dipropylmethan-1-amine), 1,3-bis(3-(1H-imidazol-1-yl)propyl) 1,1,3,3-tetramethoxydisiloxane, 1,3-bis(3-(1H-imidazol-1-yl)propyl)- 1,1,3,3-tetraethoxydisiloxane, and 1,3-bis(3-(1H-imidazol-1-yl)propyl) 1,1,3,3-tetrapropoxydisiloxane.

Among the modifiers having a nitrogen atom, an example of the protected amine compound in which the active hydrogen is replaced with a protective group includes a compound having alkoxysilane and protected amine in a molecule.

Examples of such a compound include, but are not limited to, N,N-bis(trimethylsilyl)aminopropyltrimethoxysilane, N,N-bis(trimethylsilyl)aminopropylmethyldimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethylmethyldiethoxysilane, N,N-bis(triethylsilyl)aminopropylmethyldiethoxysilane, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, and 2,2-dimethoxy-1-methyl-1-aza-2-silacyclopentane.

Other examples include N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, N-ethylidene-3-(trimethoxysilyl)-1-propanamine, N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-methyl(dimethoxysilyl)propan-1-amine, N-benzylidene-3-methyl(diethoxysilyl)propan-1-amine, N-4-methylbenzylidene-3-(triethoxysilyl)propan-1-amine, N-4-methylbenzylidene-3-(trimethoxysilyl)propan-1-amine, N-4-methylbenzylidene-3-methyl(dimethoxysilyl)propan-1-amine, N-4-methylbenzylidene-3-methyl(diethoxysilyl)propan-1-amine, N-naphtylidene-3-(triethoxysilyl)propan-1-amine, N-naphtylidene-3-(trimethoxysilyl)propan-1-amine, N-naphtylidene-3-methyl(dimethoxysilyl)propan-1-amine, 1,1-(1,4-phenylene)bis(N-(3methyl(dimethoxysilyl)propyl)methanamine), 1,1-(1,4-phenylene)bis(N-(3methyl(diethoxysilyl)propyl)methanamine), 2-ethoxy-2-methyl-1-(benzylideneaminoethyl)-1-aza-2-silacyclopentane, 2-methoxy-2-methyl-1-(methylisobutylideneaminoethyl)-1-aza-2-silacyclopentane, 1-trimethylsilyl-4-[3-(trimethoxysilyl)propyl]piperazine, and 1-trimethylsilyl-4-[3-(triethoxysilyl)propyl]piperazine.

When a coupling step is performed in production process of the modified conjugated diene-based polymer of the present embodiment, it is further preferable that a modifier having a nitrogen atom represented by any one of the following formulas (A) to (D) is used in the coupling step. One of these may be singly used, or two or more of these may be used in combination.

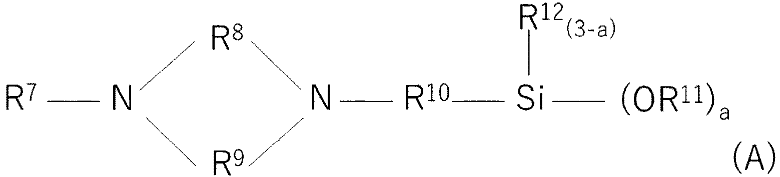

Here, R¹⁰ and R¹¹ are a hydrocarbon group having 1 to 12 carbon atoms, optionally have an unsaturated bond therein, and are optionally the same or different. R¹² is a hydrocarbon group having 1 to 20 carbon atoms.

R⁸ and R⁹ are an aliphatic hydrocarbon group having 1 to 6 carbon atoms, optionally have an unsaturated bond therein, and are optionally the same or different.

R⁷ is a hydrocarbon group having 1 to 20 carbon atoms optionally substituted with an organic group containing Si, O, or N, and having no active hydrogen, and optionally has an unsaturated bond therein.

a is an integer of 1 to 3.

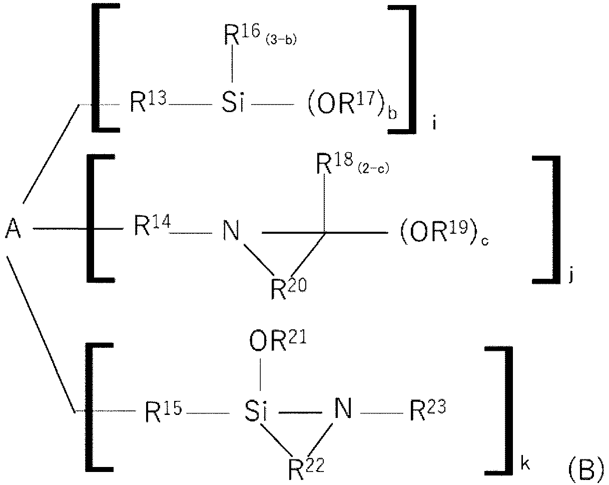

In the formula (B), A represents a hydrocarbon group having 1 to 20 carbon atoms, or an organic group that has at least one atom selected from the group consisting of an oxygen atom, a nitrogen atom, a silicon atom, a sulfur atom, and a phosphorus atom, and has no active hydrogen.

R¹³, R¹⁴, and R¹⁵ each independently represent a single bond, or an alkylene group having 1 to 20 carbon atoms. R¹⁶, R¹⁷, R¹⁸, R¹⁹, and R²¹ each independently represent an alkyl group having 1 to 20 carbon atoms. R²⁰ and R²² each independently represent an alkylene group having 1 to 20 carbon atoms. R²³ each independently represents an alkyl group having 1 to 20 carbon atoms, or a trialkylsilyl group. b each independently represents an integer of 1 to 3, c each independently represents 1 or 2, i represents an integer of 0 to 6, j represents an integer of 0 to 6, k represents an integer of 0 to 6, and a sum of i, j, and k is an integer of 4 to 10.

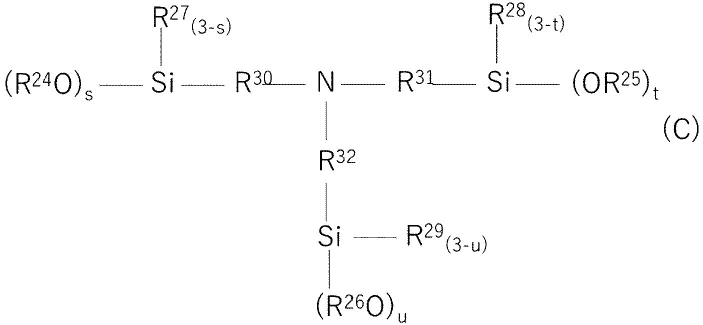

In the formula (C), R²⁴, R²⁵, R²⁶, R²⁷, R²⁸, and R²⁹ each independently represent an alkyl group having 1 to 20 carbon atoms, or an aryl group having 6 to 20 carbon atoms.

R³⁰, R³¹, and R³² each independently represent an alkylene group having 1 to 20 carbon atoms.

s, t, and u each independently represent an integer of 1 to 3, and a sum of s, t, and u is an integer of 4 or more.

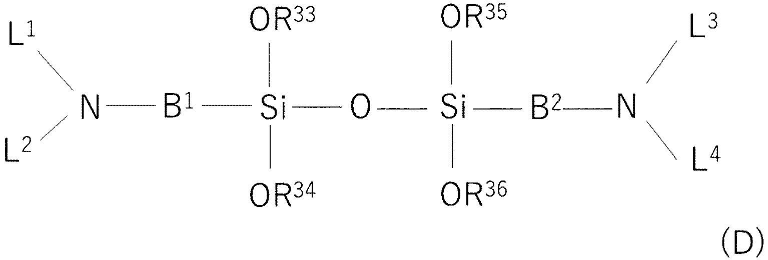

In the formula (D), B¹ and B² each independently represent a bivalent hydrocarbon group having 1 to 20 carbon atoms containing or not containing an oxygen atom. R³³ to R³⁶ each independently represent a monovalent hydrocarbon group having 1 to 20 carbon atoms. L1 to L⁴ each independently represent a bivalent, trivalent, or tetravalent alkylsilyl group substituted with an alkyl group having 1 to 10 carbon atoms, or a monovalent hydrocarbon group having 1 to 20 carbon atoms, or L¹ and L², and L³ and L⁴ are optionally mutually bonded to form a ring having 1 to 5 carbon atoms, and when L¹ and L², and L³ and L⁴ are mutually bonded to form a ring, the ring thus formed optionally contains 1 to 3 hetero atoms of one or more selected from the group consisting of N, O, and S.

Specifically, in the formula (D), B¹ and B² are each independently an alkylene group having 1 to 10 carbon atoms, R³³ to R³⁶ are each independently an alkyl group having 1 to 10 carbon atoms, L¹ to L⁴ are each independently a tetravalent alkylsilyl group substituted with an alkyl group having 1 to 5 carbon atoms, or an alkyl group having 1 to 10 carbon atoms, or L¹ and L², and L³ and L⁴ are optionally mutually bonded to form a ring having 1 to 3 carbon atoms, and when L¹ and L², and L³ and L⁴ are mutually bonded to form a ring, the ring thus formed optionally contains 1 to 3 hetero atoms of one or more selected from the group consisting of N, O, and S.

Examples of the modifier represented by the formula (A) to be used in the coupling step include, but are not limited to, 1-methyl-4-[3-(trimethoxysilyl)propyl]piperazine, 1-methyl-4-[3-(triethoxysilyl)propyl]piperazine, 1-propyl-4-[3-(trimethoxysilyl)propyl]piperazine, 1-propyl-4-[3-(triethoxysilyl)propyl]piperazine, 1-trimethylsilyl-4-[3-(trimethoxysilyl)propyl]piperazine, and 1-trimethylsilyl-4-[3-(triethoxysilyl)propyl]piperazine.

Among these, one represented by the formula (A) wherein a is 3 is preferred from the viewpoint of increasing reactivity and interaction between the modified conjugated diene-based polymer of the present embodiment and an inorganic filler such as silica, and from the viewpoint of increasing processability.

A reaction temperature and a reaction time in the coupling step using the modifier represented by the formula (A) are not especially limited, and the reaction is performed at preferably 0°C or more and 120°C or less, and for preferably 30 seconds or more.

The amount of the modifier represented by the formula (A) to be added corresponds to a total mole number of an alkoxy group bonded to a silyl group of the compound represented by the formula (A) of preferably 0.3 or more times and 4.0 or less times, more preferably 0.5 or more times and 3 or less times, and further preferably 0.6 or more times and 2.0 or less times of a mole number of the polymerization initiator to be added. From the viewpoint that the thus obtained modified conjugated diene-based polymer has a molecular weight falling in a more preferable range, the amount is preferably 0.3 or more times, and from the viewpoint of storage stability in long-term storage, the amount is preferably 4.0 or less times.

More specifically, the amounts of the polymerization initiator and the modifier represented by the formula (A) to be added may be adjusted so that the mole number of the modifier represented by the formula (A) can be preferably 0.1 or more times and 1.0 or less times of the mole number of the polymerization initiator.

In the formula (B), A is represented preferably by any one of the following formulas (I) to (IV).

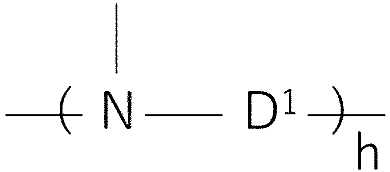

In the formula (I), D¹ represents a single bond, or a bivalent hydrocarbon group having 1 to 20 carbon atoms. h represents an integer of 1 to 10. D¹, if present in a plural number, is respectively independent.

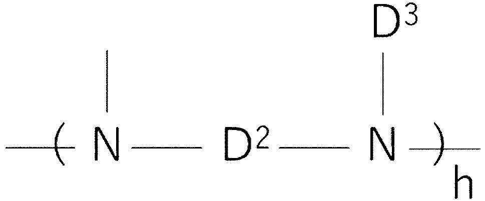

In the formula (II), D² represents a single bond, or a bivalent hydrocarbon group having 1 to 20 carbon atoms. D³ represents an alkyl group having 1 to 20 carbon atoms, and h represents an integer of 1 to 10. Each of D² and D³, if present in a plural number, is respectively independent.

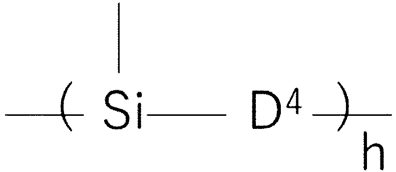

In the formula (III), D⁴ represents a single bond, or a bivalent hydrocarbon group having 1 to 20 carbon atoms. h represents an integer of 1 to 10. D⁴, if present in a plural number, is respectively independent.

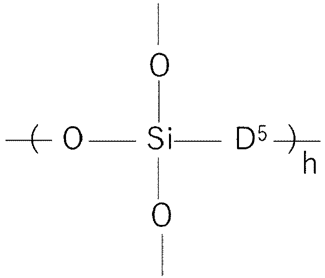

In the formula (IV), D⁵ represents a single bond, or a bivalent hydrocarbon group having 1 to 20 carbon atoms. h represents an integer of 1 to 10. D⁵, if present in a plural number, is respectively independent.

In the formula (B), examples of the modifier in which A is represented by the formula (I) include, but are not limited to, tris(3-trimethoxysilylpropyl)amine, bis(3-trimethoxysilylpropyl)-[3-(2,2-dimethoxy-1-aza-2-silacyclopentane)propyl]amine, bis[3-(2,2-dimethoxy-1-aza-2-silacyclopentane)propyl]-(3-trimethoxysilylpropyl)amine, tris[3-(2,2-dimethoxy-1-aza-2-silacyclopentane)propyl]amine, tris(3-ethoxysilylpropyl)amine, bis(3-triethoxysilylpropyl)-[3-(2,2-diethoxy-1-aza-2-silacylopentane)propyl]amine, bis[3-(2,2-diethoxy-1-aza-2-silacyclopentane)propyl]-(3-triethoxysilylpropyl)amine, tris[3-(2,2-diethoxy-1-aza-2-silacyclopentane)propyl]amine, tetrakis(3-trimethoxysilylpropyl)-1,3-propanediamine, tris(3-trimethoxysilylpropyl)-[3-(2,2-dimethoxy-1-aza-2-silacyclopentane)propyl]-1,3-propanediamine, bis(3-trimethoxysilylpropyl)-bis[3-(2,2-dimethoxy-1-aza-2-silacyclopentane)propyl]-1,3-propanedimane, and tris[3-(2,2-dimethoxy-1-aza-2-silacyclopentane)propyl]-(3-trimethoxysilylpropyl)1,3-propanediamine.

Other examples include tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-azacyclopentane)propyl]-1,3-propanediamine, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-propanediamine, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-propanediamine, tris[3-(2,2-dimethoxy-1-aza-2-silacyclopentane)propyl]-[3-(1-methoxy-2-trimethylsilyl-1-sila-2-azacyclopentane)propyl]-1,3-propanediamine, tetrakis(3-triethoxysilylpropyl)-1,3-propanediamine, and tris(3-triethoxysilylpropyl)-[3-(2,2-diethoxy-1-aza-2-silacyclopentane)propyl]-1,3-propanediamine.

Still other examples include bis(3-triethoxysilylpropyl)-bis[3-(2,2-diethoxy-1-aza-2-silacyclopentane)propyl]-1,3-propanediamine, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-propanediamine, tris[3-(2,2-diethoxy-1-aza-2-silacyclopentane)propyl]-[3-(1-ethoxy-2-trimethylsilyl-1-sila-2-azacyclopentane)propyl]-1,3-propanediamine, and tetrakis(3-trimethoxysilylpropyl)-1,3-bisaminomethylcyclohexane.

Still other examples include tris(3-trimethoxysilylpropyl)-[3-(2,2-dimethoxy-1-aza-2-silacyclopentane)proypl]-1,3-bisaminomethycyclohexane, bis(3-trimethoxysilylpropyl)-bis[3-(2,2-dimethoxy-1-aza-2-silacyclopentane)propyl]-1,3-bisaminomethylcyclohexane, tris[3-(2,2-dimethoxy-1-aza-2-silacyclopentane)propyl]-(3-trimethoxysilylpropyl)-1,3-bisaminomethylcyclohexane, tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-2-azacyclopentane)propyl]-1,3-bisaminomethylcyclohexane, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-bisaminomethylcyclohexane, and bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-bisaminomethylcyclohexane.

Still other examples include tris[3-(2,2-dimethoxy-1-aza-2-cyclopentane)propyl]-[3-(1-methoxy-2-trimethylsilyl-1-sila-2-azacyclopentane)propyl]-1,3-bisaminomethylcyclohexane, tetrakis(3-triethoxysilylpropyl)-1,3-propanediamine, tris(3-triethoxysilylpropyl)-[3-(2,2-diethoxy-1-aza-2-silacyclopentane)propyl]-1,3-bisaminomethylcyclohexane, bis(3-trimethoxysilylpropyl)-bis[3-(2,2-diethoxy-1-aza-2-silacyclopentane)propyl]-1,3-bisaminomethylcyclohexane, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-bisaminomethylcyclohexane, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-bisaminomethylcyclohexane, tris[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, tetrakis(3-trimethoxysilylpropyl)-1,6-hexamethylenediamine, and pentakis(3-trimethoxysilylpropyl)-diethylenetriamine.

In the formula (B), examples of a modifier in which A is represented by the formula (II) include, but are not limited to, tris(3-trimethoxysilylpropyl)-methyl-1,3-propanediamine, bis(2-trimethoxysilylpropyl)-[3-(2,2-dimethoxy-1-aza-2-silacyclopentane)propyl]-methyl-1,3-propanediamine, bis[3-(2,2-dimethoxy-1-aza-2-silacyclopentane)propyl]-(3-trimethoxysilylpropyl)-methyl-1,3-propanediamine, tris(3-triethoxysilylpropyl)-methyl-1,3-propanediamine, bis(2-triethoxysilylpropyl)-[3-(2,2-diethoxy-1-aza-2-silacyclopentane)propyl]-methyl-1,3-propanediamine, bis[3-(2,2-diethoxy-1-aza-2-silacyclopentane)propyl]-(3-triethoxysilylpropyl)-methyl-1,3-propanediamine, N¹,N¹'-(propane-1,3-diyl)bis(N¹-methyl-N³,N³-bis(3-(trimethoxysilyl)propyl)-1,3-propanediamine), and N¹-(3-(bis(3-(trimethoxysilyl)propyl)amino)propyl)-N¹-methyl-N³-(3-(methyl(3-(trimethoxysilyl)propyl)amino)propyl)-N³-(3-(trimethoxysilyl)propyl)-1,3-propanediamine.

In the formula (B), examples of a modifier in which A is represented by the formula (III) include, but are not limited to, tetrakis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, bis(3-trimethoxysilylpropyl)-bis[3-(2,2-dimethoxy-1-aza-2-silacyclopentane)propyl]silane, (3-trimethoxysilyl)-[3-(1-methoxy-2-trimethylsilyl-1-sila-2-azacyclopentane)-bis[3-(2,2-dimethoxy-1-aza-2-silacyclopentane)propyl]silane, bis[3-(1-methoxy-2-trimethylsilyl-1-sila-2-azacyclopentane)-bis[3-(2,2-dimethoxy-1-aza-2-silacyclopentane)propyl]silane, tris(3-trimethoxysilylpropyl)-[3-(2,2-dimethoxy-1-aza-2-silacyclopentane)propyl]silane, bis(3-trimethoxysilylpropyl)-[3-(1-methoxy-2-trimethylsilyl-1-sila-2-azacyclopentane)propyl]-[3-(2,2-dimethoxy-1-aza-2-silacyclopentane)propyl]silane, bis[3-(1-methoxy-2-trimethylsilyl-1-sila-2-azacyclopentane)propyl]-bis(3-trimethoxysilylpropyl)silane, and bis(3-trimethoxysilylpropyl)-bis[3-(1-methoxy-2-methyl-1-sila-2-azacyclopentane)propyl]silane.

In the formula (B), examples of the modifier in which A is represented by formula (IV) include, but are not limited to, 3-tris[2-(2,2-dimethoxy-1-aza-2-silacyclopentane)ethoxy]silyl-1-(2,2-dimethoxy-1-aza-2-silacyclopentane)propane, and 3-tris[2-(2,2-dimethoxy-1-aza-2-silacyclopentane)ethoxy]silyl-1-trimethoxysilylpropane.

The amount of the modifier represented by the formula (B) to be added is preferably determined based on a ratio between a mole number of the polymerization initiator to be added and a mole number of the modifier represented by the formula (B) to be added. Thus, the conjugated diene-based polymer and the modifier can be adjusted to react with each other in a desired stoichiometric ratio.

More specifically, the amounts of the polymerization initiator and the coupling modifier represented by the formula (B) to be added may be adjusted so that the mole number of the modifier represented by the formula (B) can be preferably 0.012 or more times and 1.0 or less times, and more preferably 0.02 or more times and 0.5 or less times of the mole number of the polymerization initiator. In this case, the number of functional groups of the modifier in the formula (B) (for example, when i and j are 2 or more, each of b and c is present in a plural number, and plural bs and cs are respectively equal, b x i + (c + 1) x j + k) is preferably an integer of 5 to 10, and more preferably an integer of 6 to 10. From the viewpoint of setting the molecular weight of a modified conjugated diene-based polymer to be obtained to a preferable range, the mole number of the modifier is preferably 0.012 or more times. Besides, from the viewpoint of storage stability in a long-term storage, the mole number is preferably 0.2 or less times.

Examples of the modifier represented by the formula (C) include, but are not limited to, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, and tris(4-trimethoxysilylbutyl)amine.

Among these, one represented by the formula (C) wherein s, t, and u are all 3 is preferred from the viewpoint of increasing reactivity and interaction between the modified conjugated diene-based polymer and an inorganic filler such as silica, and from the viewpoint of increasing processability.

A reaction temperature and a reaction time in the coupling step using the coupling modifier represented by the formula (C), although not limited to the following, for example, the reaction is performed preferably at 0°C or more and 120°C or less preferably for 30 seconds or more.

The amount of the modifier represented by the formula (C) to be added corresponds to a total mole number of alkoxy groups bonded to silyl groups of the compound represented by the formula (C) of preferably 0.1 or more times and 2.0 or less times, more preferably 0.2 or more times and 1.0 or less times, and further preferably 0.3 or more times and 0.5 or less times of the mole number of the polymerization initiator to be added. From the viewpoint of the molecular weight of a modified conjugated diene-based polymer to be obtained, the mole number is preferably 0.1 or more times. From the viewpoint of the storage stability in long-term storage, the mole number is preferably 2.0 or less times.

Examples of the modifier represented by the formula (D) include, but are not limited to, 3,3'-(1,1,3,3-tetramethoxydisiloxane-1,3-diyl) bis(N,N-dimethylpropan-1-amine), 3,3'-(1,1,3,3-tetraethoxydisiloxane-1,3-diyl) bis(N,N-dimethylpropan-1-amine), 3,3'-(1,1,3,3-tetrapropoxydisiloxane-1,3-diyl) bis(N,N-dimethylpropan-1-amine), 3,3'-(1,1,3,3-tetramethoxydisiloxane-1,3-diyl) bis(N,N-diethylpropan-1-amine), 3,3'-(1,1,3,3-tetramethoxydisiloxane-1,3-diyl) bis(N,N-dipropylpropan-1-amine), and 3,3'-(1,1,3,3-tetraethoxydisiloxane-1,3-diyl) bis(N,N-diethylpropan-1-amine).

The reaction temperature and the reaction time in the coupling step using the modifier represented by the formula (D) are not especially limited, and the reaction is performed at preferably 0°C or more and 120°C or less, and for preferably 30 seconds or more.

The amount of the modifier represented by the formula (D) to be added corresponds to a total mole number of alkoxy groups bonded to silyl groups of the compound represented by the formula (D) of preferably 0.25 or more times and 2.0 or less times, more preferably 0.3 or more times and 1 or less times, and further preferably 0.35 or more times and 0.5 or less times of the mole number of the polymerization initiator to be added. From the viewpoint of the molecular weight of a modified conjugated diene-based polymer to be obtained, and from the viewpoint of the storage stability in longterm storage, the mole number is preferably 2.0 or less times.

### [Method for Producing Modified Conjugated Diene-based Polymer]

A method for producing a modified conjugated diene-based polymer of the present embodiment includes:
a polymerization step of polymerizing, using a continuous reactor including two or more reactors arranged in series, at least one conjugated diene-based compound with a lithium compound used as a polymerization initiator,
the continuous reactor having a monomer adding part for adding, during the polymerization step, at least one conjugated diene compound and at least one aromatic vinyl compound; and
a coupling step of reacting a conjugated diene-based polymer obtained by the polymerization step with a modifier having a nitrogen atom.

### (Polymerization Initiator)

As the polymerization initiator, at least an organic monolithium compound can be used.

Examples of the organic monolithium compound include, but are not limited to, organic monolithium compounds of a low molecular weight compound, and a soluble oligomer.

Examples of the organic monolithium compound also include, in terms of binding mode between an organic group and lithium therein, a compound having a carbon-lithium bond, a compound having a nitrogen-lithium bond, and a compound having a tin-lithium bond.

The amount of the organic monolithium compound to be used as the polymerization initiator is preferably determined depending on the molecular weight of a conjugated diene-based polymer or modified conjugated diene-based polymer to be obtained.

The amount of a monomer such as a conjugated diene compound to be used with respect to the amount of the polymerization initiator to be used relates to a degree of polymerization. Specifically, the amount of a monomer to be used with respect to the amount of the polymerization initiator to be used tends to relate to the number average molecular weight and the weight average molecular weight.

Accordingly, in order to increase the molecular weight, the amount of the polymerization initiator to be used may be adjusted to be decreased, and in order to decrease the molecular weight, the amount of the polymerization initiator to be used may be adjusted to be increased.

When a nitrogen atom is to be introduced into the conjugated diene-based polymer by using the polymerization initiator, the organic monolithium compound is preferably an alkyllithium compound having a substituted amino group, or dialkylamino lithium from the viewpoint that the compound is used in one of methods for introducing a nitrogen atom into a conjugated diene-based polymer.

In this case, a conjugated diene-based polymer having a nitrogen atom of an amino group at the polymerization start end is obtained.

A substituted amino group refers to an amino group having no active hydrogen, or having a structure including protected active hydrogen.

Examples of the alkyllithium compound containing an amino group having no active hydrogen include, but are not limited to, 3-dimethylaminopropyllithium, 3-diethylaminopropyllithium, 4-(methylpropylamino)butyllithium and 4-hexamethyleneiminobutyllithium.

Examples of the alkyllithium compound containing an amino group having the structure including protected active hydrogen include, but are not limited to, 3-bistrimethylsilylaminopropyllithium and 4-trimethylsilylmethylaminobutyllithium.

Examples of the dialkylamino lithium include, but are not limited to, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo[3.2.1] octane, and 1-lithio-1,2,3,6-tetrahydropyridine.

Such an organic monolithium compound having a substituted amino group can be reacted with a small amount of a polymerizable monomer, such as 1,3-butadiene, isoprene or styrene, to be used also as an organic monolithium compound of a soluble oligomer.

Alternatively, the polymerization initiator may be one produced by reacting an aromatic vinyl compound having a substituted amino group and/or a conjugated diene compound with an organic monolithium compound, and may be one capable of introducing a functional group into one end of a polymer chain.

The organic monolithium compound is preferably an alkyllithium compound from the viewpoints of industrial availability and polymerization reaction controllability. In this case, a conjugated diene-based polymer having an alkyl group on the polymerization start end is obtained.

Examples of the alkyllithium compound include, but are not limited to, n-butyllithium, sec-butyllithium, tert-butyllithium, n-hexyllithium, benzyllithium, phenyllithium, and stilbene lithium.

As the alkyllithium compound, from the viewpoints of industrial availability and controllability of a polymerization reaction, n-butyllithium and sec-butyllithium are preferred.

One of these organic monolithium compounds may be singly used, or two or more of these may be used together. Alternatively, another organic metal compound may be used together.

Examples of the another organic metal compound include alkaline earth metal compounds, other alkaline metal compounds, and other organic metal compounds.

Examples of the alkaline earth metal compounds include, but are not limited to, organic magnesium compounds, organic calcium compounds and organic strontium compounds. Other examples include compounds of alkoxides, sulfonates, carbonates and amides of alkaline earth metals.

Examples of the organic magnesium compounds include dibutyl magnesium and ethyl butyl magnesium. Examples of the other organic metal compounds include organic aluminum compounds.

The weight average molecular weight of the conjugated diene-based polymer at the outlet of the polymerization step is controlled by the amount of the polymerization initiator to be used relative to the conjugated diene compound and the aromatic vinyl compound, and as the amount of the polymerization initiator to be used is decreased, the weight average molecular weight tends to decrease. The amount of the polymerization initiator to be used is preferably 0.15 mol or more and 1.5 mol or less assuming that the total mass of the conjugated diene compound and the aromatic vinyl compound to be used is 100 kg.

### (Polar Material)

In the method for producing a modified conjugated diene-based polymer of the present embodiment, a polar material may be added together with the polymerization initiator.

The polar material can make the aromatic vinyl compound randomly copolymerized with the conjugated diene compound, and tends to be usable as a vinylation agent for controlling the microstructure of a conjugated diene portion. Besides, it also tends to have an effect on acceleration of the polymerization reaction or the like.

Examples of the polar material include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine.

One of these polar materials may be singly used, or two or more of these may be used together.

The amount of the polar material to be used is not especially limited, and can be selected in accordance with the purpose, and is preferably 0.005 mol or more and 100 mol or less per mole of the polymerization initiator.

Such a polar material can be used, as an adjuster for the microstructure of the conjugated diene portion of the modified conjugated diene-based polymer of the present embodiment, in an appropriate amount in accordance with a desired amount of vinyl bond. Many polar materials exhibit a randomizing effect effective in copolymerization of a conjugated diene compound and an aromatic vinyl compound simultaneously, and tends to be able to adjust randomness of an aromatic vinyl monomer unit and a conjugated diene monomer unit in each polymer segment.

### (Polymerization Step)

In the method for producing a modified conjugated diene-based polymer of the present embodiment, the polymerization step is performed in a continuous reactor in which two or more reactors are connected in series, and the production method includes a polymerization step (P1) of obtaining the first polymer segment, and a polymerization step (P2) of obtaining the second polymer segment.

The polymerization steps (P1) and (P2) are divided by a monomer adding part described below.

Each of the polymerization steps (P1) and (P2) can be performed with one reactor, or two or more reactors connected in series. The shape of the reactor may be a tank or tubular reactor equipped with a stirrer, or the like.

It is not essential to assign the polymerization steps (P1) and (P2) to the respective reactors, and for example, the polymerization step (P2) may be set to start on the downstream side of a first reactor, and from the viewpoint of polymerization controllability, one or more reactors are preferably assigned to each of the polymerization steps (P1) and (P2). The respective reactors may have a temperature control function.

### (Solid Content)

In the method for producing a modified conjugated diene-based polymer of the present embodiment, a modified conjugated diene-based polymer of interest can be collected in a prescribed solid content.

The solid content herein refers to the mass of the modified conjugated diene-based polymer collected per unit time in a measurement point.

It is noted that the mass of the modified conjugated diene-based polymer includes the mass of only a polymer formed through the reaction with the polymerization initiator, and does not include the masses of an unreacted conjugated diene compound or aromatic vinyl compound, a solvent, and the like.

### (Conversion Rate)

In the method for producing a modified conjugated diene-based polymer of the present embodiment, the term "conversion rate" is defined as the mass of a conjugated diene-based polymer obtained through completion of the reaction at a measurement time point in the total mass of the conjugated diene compound and the aromatic vinyl compound having been added at the measurement time point.

Specifically, the conversion rate can be obtained in accordance with the following expression (2) using the solid content. $Conversion rate \left[%\right] = \frac{solid content \left[kg/h\right]}{\begin{matrix}amount of conjugated diene compound \left[kg/h\right] \\ + amount of aromatic vinyl compound \left[kg/h\right]\end{matrix}} \times 100$ (2)

Besides, the respective conversion rates of the conjugated diene compound and the aromatic vinyl compound can be obtained in accordance with the following expressions (3) and (4) by respectively using the amount of bound conjugated diene monomer unit and the amount of bound aromatic vinyl monomer unit of the solid content obtained by the solid content measurement described above.$\begin{matrix}Conversion rate of \\ conjugated diene\end{matrix} \left[%\right] = \frac{solid content \left[kg/h\right] \times amount of bound conjugated diene monomer unit \left[%\right]}{amount of conjugated diene compound \left[kg/h\right]} \times 100$ (3) $\begin{matrix}Conversion rate \\ of aromatic vinyl\end{matrix} \left[%\right] = \frac{solid content \left[kg/h\right] \times amount of bound aromatic vinyl monomer unit \left[%\right]}{amount of aromatic vinyl compound \left[kg/h\right]} \times 100$ (4)

The conversion rate in the polymerization step (P1) is preferably 80% or more, more preferably 85% or more, and further preferably 90% or more. When the polymerization conversion rate is within this range, the conversion rate minimally fluctuates due to disturbances during continuous polymerization, resulting in improving the production stability.

The conversion rate of the aromatic vinyl compound, that is, a polymerization intermediate, in the polymerization step (P1) is preferably 70% or more, more preferably 75% or more, and further preferably 80% or more.

When the conversion rate of the aromatic vinyl compound is out of this range, the aromatic vinyl monomer unit is significantly unevenly distributed toward the second polymer segment, and hence the tan δ peak height tends to decrease. On the other hand, when the conversion rate of the aromatic vinyl compound is within this range, the distribution of the aromatic vinyl monomer unit is uniformized, and the tan δ peak height tends to increase.

In particular, when the amount of the polar material to be added is small and the amount of the aromatic vinyl compound to be added is large, the conversion rate of the aromatic vinyl compound tends to easily fall outside the range.

The conversion rate in the polymerization step (P2) is preferably 95% or more from the viewpoint of polymerization controllability.

The conversion rate of the aromatic vinyl compound, that is, the polymerization intermediate, in the polymerization step (P1) and the conversion rate of the aromatic vinyl compound in the polymerization step (P2) can be controlled by adjusting the type and the amount to be added of the polar material, the polymerization temperature, the concentrations of the monomer and the polymerization initiator in a raw material solution, and the residence time.

In the method for producing a modified conjugated diene-based polymer of the present embodiment, the first polymer segment is obtained in the polymerization step (P1), and in this polymerization step (P1), the reactor preferably has a raw material supply part for continuously supplying, from one end of the reactor, the conjugated diene compound, the aromatic vinyl compound, an inert solvent, the polymerization initiator, and the polar material, and has, at the other end opposite to the raw material supply part, a discharge part for continuously delivering the polymer solution.

The amount X₁ of the bound aromatic vinyl monomer unit of the first polymer segment can be controlled by adjusting the mass ratio of the aromatic vinyl compound to the conjugated diene compound added in the polymerization step (P1).

The amount Y₁ of vinyl bond in the bound conjugated diene of the first polymer segment can be controlled by adjusting the amount of the polar material to be added in the polymerization step (P1) and the polymerization temperature.

The conjugated diene polymer solution resulting from the polymerization step (P1) continuously flows out of the reactor to be fed to a next step. The destination of feeding is, for example, preferably the polymerization step (P2) for the second polymer segment described below. The starting point of the polymerization step (P2) is defined as the monomer adding part.

In the method for producing a modified conjugated diene-based polymer of the present embodiment, since the monomer adding part for newly adding raw material compounds after the polymerization step (P1) is provided, the method preferably includes the polymerization step (P2) in which the second polymer segment having a larger amount of vinyl bond in the bound conjugated diene than one synthesized in the previous polymerization step is introduced to an end portion of the first polymer segment.

The aspect of a connecting part between the polymerization step (P1) and the polymerization step (P2) where the monomer adding part is disposed is not especially limited, and from the viewpoint of preventing backflow of the polymer solution, is preferably a pipe, and more preferably a pipe between a first reactor and a second reactor included in the continuous reactor. Besides, the raw material compounds to be added are preferably the conjugated diene compound, the aromatic vinyl compound, the polar material, and the like, and from the viewpoint of the fuel consumption performance of a vulcanizate of the modified conjugated diene-based polymer of the present embodiment, are more preferably the conjugated diene compound, the aromatic vinyl compound, the polar material, and the branching agent described later. An inert solvent may be added in the monomer adding part.

The lower limit of the total mass of the conjugated diene compound and the aromatic vinyl compound added in the monomer adding part is preferably 10% or more, more preferably 15% or more, and further preferably 18% or more based on the total mass of the conjugated diene compound and the aromatic vinyl compound added in the entire polymerization step. The upper limit of the total mass of the conjugated diene compound and the aromatic vinyl compound added in the monomer adding part is preferably 90% or less, more preferably 80% or less, and further preferably 50% or less based on the total mass of the conjugated diene compound and the aromatic vinyl compound added in the entire polymerization step.

When the total mass is within this range, the contradiction between the wet grip performance and the abrasion resistance tends to be more conspicuously improved.

The amount X₂ of the bound aromatic vinyl monomer unit of the second polymer segment can be controlled by adjusting the mass ratio of the aromatic vinyl compound to the conjugated diene compound added in the polymerization step (P2).

The amount Y₂ of vinyl bond in the bound conjugated diene of the second polymer segment can be controlled by adjusting the amount of the polar material to be added in the polymerization step (P2) and the polymerization temperature.

The conjugated diene polymer solution resulting from the polymerization step (P2) continuously flows out of the reactor to be fed to a next step. The destination of feeding is, for example, the coupling step described below.

A polymer segment ratio is controlled by adjusting the ratio of the mass of monomers added in the polymerization step (P1) to the mass of monomers added in the polymerization step (P2), and the conversion rates of the polymerization steps (P1) and (P2). In order to increase the ratio of the first polymer segment, the ratio of the monomers added in the polymerization step (P1) may be increased to increase the polymerization conversion rate in the polymerization step (P1).

The production of a modified conjugated diene-based polymer of the present embodiment may include prescribed steps respectively before and after the polymerization step (P1) and before and after the polymerization step (P2). For example, a polymerization step of synthesizing a polymer different from the first polymer segment and the second polymer segment may be included.

In the method for producing a modified conjugated diene-based polymer of the present embodiment, the polymerization temperature employed in the polymerization step is preferably a temperature at which living anion polymerization proceeds, and from the viewpoint of productivity, is more preferably 0°C or more and 120°C or less, and further preferably 50°C or more and 100°C or less. When the temperature is within this range, there is a tendency that a sufficient amount of modifier can be reacted on the active end after completing the polymerization. Even more preferably, the polymerization temperature is 70°C or more and 95°C or less.

In the method for producing a modified conjugated diene-based polymer of the present embodiment, for obtaining a high molecular weight distribution, the height (L)/the diameter (D) of a tank reactor may be reduced. When the L/D is reduced, a residence time distribution within the reactor is increased, and thus, variation in the reaction time among molecules of the polymerization initiator is increased, and as a result, the molecular weight distribution tends to increase.

Besides, the molecular weight distribution is changed depending on the type of a coupling agent used.

### (Coupling Step)

In the method for producing a modified conjugated diene-based polymer of the present embodiment, a coupling step of modifying an active end of the conjugated diene-based polymer obtained through the polymerization step of the polymer segment with a modifier having a nitrogen atom (preferably, an alkoxysilane modifier having a nitrogen atom) is performed.

In the coupling step, one end of the active end of the conjugated diene-based polymer is subjected to modification reaction with a modifier having a nitrogen atom, and thus, a modified conjugated diene-based polymer is obtained.

The method for producing a modified conjugated diene-based polymer of the present embodiment may include, after the coupling step, and/or before the coupling step, a condensation reaction step of causing a condensation reaction by adding a condensation accelerator.

In the method for producing a modified conjugated diene-based polymer of the present embodiment, after the coupling step, a deactivator and/or a neutralizer or the like may be added if necessary to the resultant polymer solution.

Examples of the deactivator include, but are not limited to, water, and alcohols such as methanol, ethanol and isopropanol.

Examples of the neutralizer include, but are not limited to, carboxylic acids such as stearic acid, oleic acid, and versatic acid (a mixture of highly branched carboxylic acids having 9 to 11 carbon atoms, and containing, as a principal component, one having 10 carbon atoms), an aqueous solution of an inorganic acid, and a carbon dioxide gas.

From the viewpoint of preventing gel formation after polymerization, and from the viewpoint of improving stability in processing, a rubber stabilizer is preferably added to the modified conjugated diene-based polymer of the present embodiment.

Although the rubber stabilizer is not limited to the following, any of known ones can be used, and preferred examples include antioxidants such as 2,6-di-tert-butyl-4-hydroxytoluene (BHT), n-octadecyl-3-(4'-hydroxy-3',5'-di-tert-butylphenol)propionate, and 2-methyl-4,6-bis[(octylthio)methyl]phenol.

### (Step of Obtaining Polymer from Polymer Solution)

The method for producing a modified conjugated diene-based polymer of the present embodiment may include a step of obtaining the resultant modified conjugated diene-based polymer from the polymer solution. As a method for this purpose, any of known methods can be employed, and for example, the following methods may be employed. Examples of the method include a method in which the modified conjugated diene-based polymer is filtered after separating a solvent by steam stripping or the like, and the resultant is dehydrated and dried to obtain the modified conjugated diene-based polymer, a method in which the solution is concentrated in a flushing tank, and the resultant is devolatilized by using a bent extruder or the like to obtain the modified conjugated diene-based polymer, and a method in which the solution is directly devolatilized by using a drum dryer or the like to obtain the modified conjugated diene-based polymer.

### (Step of Obtaining Extended Conjugated Diene-based Polymer)

In the method for producing a modified conjugated diene-based polymer of the present embodiment, at least any one selected from the group consisting of an extender oil, a liquid rubber, and a resin may be added to the produced modified conjugated diene-based polymer to obtain an extended modified conjugated diene-based polymer.

It is noted that the extended modified conjugated diene-based polymer encompasses not only an oil extended modified conjugated diene-based polymer containing an oil but also a polymer containing a liquid polybutadiene or any of various resins except for an oil.

Thus, the processability of the modified conjugated diene-based polymer can be further improved.

As a method for adding an extender oil to the modified conjugated diene-based polymer, although not limited to the following, a method in which an extender oil is added to the modified conjugated diene-based polymer solution to be mixed, and the thus obtained extended polymer solution is desolvated is preferred.

Examples of the extender oil include an aroma oil, a naphthenic oil, a paraffin oil, and a vegetable oil. The vegetable oil can be prepared from an oil selected from the group consisting of linseed oil, safflower oil, soybean oil, corn oil, cottonseed oil, castor oil, tung oil, pine oil, sunflower oil, palm oil, olive oil, coconut oil, peanut oil, and grape seed oil. Among these, from the viewpoint of environmental safety, and from the viewpoint of oil bleed prevention and the wet grip property, an aroma-alternative oil containing 3% by mass or less of a polycyclic aromatic (PCA) component according to the IP 346 is preferred.

Examples of the aroma-alternative oil include TDAE (Treated Distillate Aromatic Extracts), and MES (Mild Extraction Solvate) mentioned in Kautschuk Gummi Kunststoffe 52 (12) 799 (1999), and RAE (Residual Aromatic Extracts).

Examples of the liquid rubber include, but are not limited to, liquid polybutadiene and liquid styrene-butadiene rubber.

Examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tertbutylphenol-acetylene resin, a phenol-formaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol.

One of these resins may be singly used, or two or more of these may be used together.

When such a resin is hydrogenated, all unsaturated groups may be hydrogenated, or some may be left not hydrogenated.

The amount to be added of the at least one selected from the group consisting of an extender oil, a liquid rubber, and a resin is not especially limited, and is preferably 1 to 60 parts by mass, more preferably 10 to 60 parts by mass, and further preferably 15 to 37.5 parts by mass with respect to 100 parts by mass of the conjugated diene-based polymer of the present embodiment.

### [Rubber Composition]

The modified conjugated diene-based polymer of the present embodiment can be formed into a rubber composition (hereinafter sometimes referred to as the rubber composition of the present embodiment) by adding a filler thereto.

The rubber composition using the modified conjugated diene-based polymer of the present embodiment contains a rubber component containing the modified conjugated diene-based polymer of the present embodiment, and 5.0 parts by mass or more and 150 parts by mass or less of a filler with respect to 100 parts by mass of the rubber component, and the rubber component preferably contains 10 parts by mass or more of the modified conjugated diene-based polymer of the present embodiment with respect to 100 parts by mass of the total amount of the rubber component. When the filler is dispersed in the rubber component containing the modified conjugated diene-based polymer of the present embodiment, a rubber composition further excellent in processability in vulcanization, and further excellent in a low hysteresis loss property, fracture performance, and abrasion resistance of a vulcanizate obtained therefrom can be obtained. When the rubber component contains the modified conjugated diene-based polymer of the present embodiment in a prescribed ratio, the processability and the abrasion resistance tend to be further improved.

Examples of the filler include, but are not limited to, a silica-based inorganic filler, carbon black, a metal oxide, and a metal hydroxide. Among these, a silica-based inorganic filler is preferred. In particular, when the rubber composition is used in vehicle components such as a tire, and an anti-vibration rubber, or in application to a vulcanized rubber for shoes or the like, it is particularly preferable that a silica-based inorganic filler is contained. One of these fillers may be singly used, or two or more of these may be used together.

The silica-based inorganic filler is not especially limited, any of known fillers can be used, a solid particle containing SiO₂ or Si₃Al as a constituent unit is preferred, and a solid particle containing SiO₂ or Si₃Al as a principal component of a constituent unit is more preferred. Here, the principal component refers to a component contained in the silica-based inorganic filler in an amount of over 50% by mass, preferably 70% by mass or more, and more preferably 80% by mass or more.

Examples of the silica-based inorganic filler include, but are not limited to, silica, clay, talc, mica, diatomite, wollastonite, montmorillonite, zeolite and inorganic fibrous substances such as glass fiber. Alternatively, a silica-based inorganic filler having a hydrophobized surface, and a mixture of a silica-based inorganic filler and an inorganic filler except for silica may be used. Among these, from the viewpoint of further improving strength and abrasion resistance of the rubber composition of the present embodiment, silica or glass fiber is preferred, and silica is more preferred. The silica is not especially limited, and examples include dry silica, wet silica and synthetic silicate silica. Among these silica, wet silica is preferred from the viewpoint of further improving fracture strength of the resultant rubber composition.

From the viewpoint of more definitely obtaining a rubber composition having practically good abrasion resistance and fracture strength, a nitrogen adsorption specific surface area, obtained by the BET adsorption method, of the silica-based inorganic filler is preferably 100 m²/g or more and 300 m²/g or less, and more preferably 170 m²/g or more and 250 m²/g or less. Besides, a silica-based inorganic filler having a comparatively small specific surface area (for example, a specific surface area of less than 200 m²/g) and a silica-based inorganic filler having a comparatively large specific surface area (for example, 200 m²/g or more) may be used in combination if necessary. Particularly when a silica-based inorganic filler having a comparatively large specific surface area (for example, 200 m²/g or more) is used, the rubber composition of the present embodiment is further improved in dispersibility of silica. As a result, a rubber composition having further excellent abrasion resistance, fracture strength, and low hysteresis loss property tends to be obtained.

Examples of the carbon black include, but are not limited to, carbon blacks of SRF, FEF, HAF, ISAF and SAF classes. Among these, a carbon black having a nitrogen adsorption specific surface area of 50 m²/g or more and dibutyl phthalate (DBP) oil absorption of 80 mL/100 g or less is preferred.

The metal oxide is not especially limited as long as it is a solid particle containing a principal component of a constituent unit represented by chemical formula MₓO_{y} (wherein M represents a metal atom, and x and y each independently represent an integer of 1 to 6), and examples include alumina, titanium oxide, magnesium oxide, and zinc oxide.

The metal hydroxide is not especially limited, and examples include aluminum hydroxide, magnesium hydroxide, and zirconium hydroxide.

The content of the filler in the rubber composition using the modified conjugated diene-based polymer of the present embodiment is preferably 5.0 parts by mass or more and 150 parts by mass or less, more preferably 20 parts by mass or more and 100 parts by mass or less, and further preferably 30 parts by mass or more and 90 parts by mass or less with respect to 100 parts by mass of the rubber component. When the content of the filler satisfies this range, the rubber composition tends to be further excellent in processability in vulcanization, and further excellent in the low hysteresis loss property, the fracture performance, and the abrasion resistance of a vulcanizate thereof.

From the viewpoint of definitely imparting performances required in use as a tire or the like such as dry grip performance and conductivity, the rubber composition using the modified conjugated diene-based polymer of the present embodiment preferably contains 0.5 parts by mass or more and 100 parts by mass or less of carbon black with respect to 100 parts by mass of the rubber component containing the modified conjugated diene-based polymer of the present embodiment. From a similar viewpoint, the rubber composition contains carbon black in an amount of more preferably 3.0 parts by mass or more and 100 parts by mass or less, and further preferably 5.0 parts by mass or more and 50 parts by mass or less with respect to 100 parts by mass of the rubber component containing the modified conjugated diene-based polymer of the present embodiment.

The rubber composition using the modified conjugated diene-based polymer of the present embodiment may further contain a silane coupling agent. When the rubber composition contains a silane coupling agent, interaction between the rubber component and the filler can be further improved.

Examples of the silane coupling agent are, but are not limited to, preferably a compound containing, in one molecule, a sulfur bond portion and an alkoxysilyl group or silanol group portion. Examples of such a compound include, but are not limited to, bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition using the modified conjugated diene-based polymer of the present embodiment, a content of the silane coupling agent is preferably 0.1 parts by mass or more and 30 parts by mass or less, more preferably 0.5 parts by mass or more and 20 parts by mass or less, and further preferably 1.0 part by mass or more and 15 parts by mass or less with respect to 100 parts by mass of the filler. When the content of the silane coupling agent falls in the above-described range, there is a tendency that the interaction between the rubber component and the filler can be further improved.

The rubber composition using the modified conjugated diene-based polymer of the present embodiment may contain, as the rubber component, a rubber-like polymer different from the modified conjugated diene-based polymer of the present embodiment (hereinafter simply referred to as the "rubber-like polymer").

Examples of the rubber-like polymer include, but are not limited to, a conjugated diene-based polymer and a hydrogenated product thereof, a random copolymer of a conjugated diene-based compound and a vinyl aromatic compound, and a hydrogenated product thereof, a block copolymer of a conjugated diene-based compound and a vinyl aromatic compound, and a hydrogenated product thereof, a non-diene-based polymer and a natural rubber.

Examples of the rubber-like polymer include, but are not limited to, a butadiene rubber and a hydrogenated product thereof, an isoprene rubber and a hydrogenated product thereof, styrene-based elastomers such as a styrene-butadiene rubber and a hydrogenated product thereof, a styrene-butadiene block copolymer and a hydrogenated product thereof, and a styrene-isoprene block copolymer and a hydrogenated product thereof, and an acrylonitrile-butadiene rubber and a hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an α,β-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The rubber-like polymer may be in the form of a modified rubber imparted with a functional group having polarity such as a hydroxyl group or an amino group. When the rubber composition using the modified conjugated diene-based polymer of the present invention is used as a material of a tire, the rubber-like polymer is preferably one or more selected from the group consisting of a butadiene rubber, an isoprene rubber, a styrene-butadiene rubber, a natural rubber and a butyl rubber.

The mass average molecular weight of the rubber-like polymer is preferably 2,000 or more and 2,000,000 or less, and more preferably 5,000 or more and 1,500,000 or less from the viewpoints of abrasion resistance and fracture strength, and balance between the low hysteresis loss property and the processability of the rubber composition. As the rubber-like polymer, a low molecular weight rubber-like polymer, that is, what is called a liquid rubber, can be used. One of these rubber-like polymers may be singly used, or two or more of these may be used together.

When the rubber composition using the modified conjugated diene-based polymer of the present embodiment contains the rubber-like polymer in addition to the modified conjugated diene-based polymer of the present embodiment, a content ratio (in a mass ratio) of the modified conjugated diene-based polymer to the rubber-like polymer is, in terms of (the conjugated diene-based polymer/the rubber-like polymer), preferably 10/90 or more and 100/0 or less, more preferably 20/80 or more and 90/10 or less, and further preferably 30/70 or more and 80/20 or less. In other words, the rubber component contains, with respect to 100 parts by mass of the total amount of the rubber component, preferably 10 parts by mass or more and 100 parts by mass or less, more preferably 20 parts by mass or more and 90 parts by mass or less, and further preferably 30 parts by mass or more and 80 parts by mass or less of the modified conjugated diene-based polymer of the present embodiment. When the ratio of the modified conjugated diene-based polymer of the present embodiment contained in the rubber component falls in the above-described range, a vulcanizate of the rubber composition tends to be further excellent in abrasion resistance and a low hysteresis loss property.

To the rubber composition of the present embodiment, a rubber softener may be added in addition to the rubber component from the viewpoint of further improving the processability.

As the rubber softener, the same ones as those described as examples to be contained in the above-described modified conjugated diene-based polymer can be used, and a mineral oil, or a liquid or low molecular weight synthetic softener is suitable.

A mineral oil-based rubber softener, which is used for softening, expanding and improving processability of a rubber component and is designated as a process oil or an extender oil, is a mixture of an aromatic ring, a naphthene ring and a paraffin chain. In particular, one in which the number of carbon atoms of the paraffin chain is 50% or more is designated as a paraffin-based softener, one in which the number of carbon atoms of the naphthene ring is 30% or more and 45% or less is designated as a naphthene-based softener, and one in which the number of carbon atoms belonging to aromatic carbons exceeds 30% of the number of all carbon atoms is designated as an aromatic-based softener. The rubber composition using the modified conjugated diene-based polymer of the present embodiment preferably contains, as a rubber softener, one having an appropriate aromatic content. When such a rubber softener is contained, compatibility with the modified conjugated diene-based polymer is further improved.

The content of the rubber softener in the rubber composition using the modified conjugated diene-based polymer of the present embodiment is expressed as a sum of the amount of the rubber softener precedently added to the modified conjugated diene-based polymer or the rubber-like polymer, and the amount of the rubber softener added in forming the rubber composition.

In the rubber composition using the modified conjugated diene-based polymer of the present embodiment, the content of the rubber softener is preferably 0 part by mass or more and 100 parts by mass or less, more preferably 10 parts by mass or more and 90 parts by mass or less, and further preferably 30 parts by mass or more and 90 parts by mass or less with respect to 100 parts by mass of the rubber component. When the content of the rubber softener is 100 parts by mass or less with respect to 100 parts by mass of rubber component, bleeding out can be suppressed, and the stickiness of the surface of the rubber composition can be further suppressed.

The rubber composition can be produced by mixing the modified conjugated diene-based polymer, the rubber-like polymer, the filler, the silane coupling agent, the rubber softener and the like. The mixing method is not especially limited, and examples include a melt-kneading method using a general mixer such as an open roll, a Banbury mixer, a kneader, a single shaft screw extruder, a twin shaft screw extruder or a multi-shaft screw extruder, and a method in which the respective components are melted and mixed followed by removal of a solvent by heating. Among these methods, the melt-kneading method using a roll, a Banbury mixer, a kneader or an extruder is preferred from the viewpoint of productivity and high kneadability. Besides, the rubber component, the filler, the silane coupling agent, and the additive may be kneaded all together, or may be mixed dividedly in plural times.

The rubber composition using the modified conjugated diene-based polymer of the present embodiment may be in the form of a vulcanizate obtained by vulcanization with a vulcanizing agent. The vulcanizing agent is not especially limited, and examples include radical generators such as organic peroxides and azo compounds, oxime compounds, nitroso compounds, polyamine compounds, sulfur and sulfur compounds. The sulfur compounds encompass sulfur monochloride, sulfur dichloride, disulfide compounds, high molecular weight polysulfide compounds and the like.

In the rubber composition using the modified conjugated diene-based polymer of the present embodiment, the content of the vulcanizing agent is preferably 0.01 parts by mass or more and 20 parts by mass or less, and more preferably 0.1 parts by mass or more and 15 parts by mass or less with respect to 100 parts by mass of the rubber component. As a vulcanization method, any of conventionally known methods can be employed. A vulcanization temperature is preferably 120°C or more and 200°C or less, and more preferably 140°C or more and 180°C or less.

For the vulcanization of the rubber composition, a vulcanization accelerator and/or a vulcanization aid may be used if necessary. As the vulcanization accelerator, any of conventionally known materials can be used, and examples include, but are not limited to, sulphenamide-based, guanidine-based, thiuram-based, aldehyde-amine-based, aldehyde-ammonia-based, thiazole-based, thiourea-based and dithiocarbamate-based vulcanization accelerators.

Besides, examples of the vulcanization aid include, but are not limited to, zinc oxide and stearic acid.

The contents of the vulcanization accelerator and the vulcanization aid are respectively preferably 0.01 parts by mass or more and 20 parts by mass or less, and more preferably 0.1 parts by mass or more and 15 parts by mass or less with respect to 100 parts by mass of the rubber component.

In the rubber composition using the modified conjugated diene-based polymer of the present embodiment, as long as the effects of the present embodiment are not impaired, various additives such as another softener and filler excluding those described above, a heat resistance stabilizer, an antistatic agent, a weathering stabilizer, an anti-aging agent, a colorant and a lubricant may be used. As the softener, any of known softeners can be used. Examples of the filler excluding those described above include, but are not limited to, calcium carbonate, magnesium carbonate, aluminum sulfate, and barium sulfate. As the heat resistance stabilizer, the antistatic agent, the weathering stabilizer, the anti-aging agent, the colorant and the lubricant, any of known materials can be respectively used.

The rubber composition using the modified conjugated diene-based polymer of the present embodiment is suitably used as a rubber composition for a tire. The rubber composition of the present embodiment can be suitably used in, but not especially limited to, various tires such as a fuel-efficient tire, an all-season tire, a high-performance tire and a studless tire; and various tire portions such as a tread, a carcass, a sidewall and a bead.

It is noted that each numerical range described above as a preferable range or the like may be a numerical range obtained by arbitrarily combining any one of values described as the upper limits and any one of values described as the lower limits even when not particularly stated.

### Examples

The present embodiment will now be described in more detail with reference to specific examples and comparative examples, and it is noted that the present invention is not limited to the following examples and comparative examples at all.

Various physical properties of the examples and comparative examples were measured by the following methods.

### ((Physical Property 1) Conversion Rate)

### (Solid Content)

A solid content in a modified conjugated diene-based polymer solution was obtained based on the amount of a non-volatile component in the modified conjugated diene-based polymer solution flowing through a measurement point in a unit time. The whole amount of the modified conjugated diene-based polymer solution flowing through the measurement point was collected for 3 minutes, and immediately after that, a polymerization terminator was added. Thereafter, the collected solution was transferred to a heat resistant dish, and a mass (M) of a solid remaining after drying the resultant in an oven at 140°C for 30 minutes or more was measured.

Here, the solid content (m) was obtained in accordance with the following expression (I): 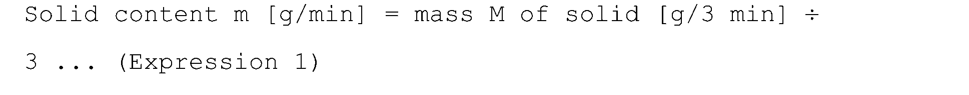
Solid content m [g/min] = mass M of solid [g/3 min] ÷ 3 ... (Expression 1)

Besides, the measurement point was changed to a discharge part of a polymerization step (P1) of synthesizing a first polymer segment, and to a discharge part of a polymerization step (P2) of forming a second polymer segment, and solid contents obtained in these parts were respectively defined as m₁ and m₂.

A conversion rate c_{bd} of the conjugated diene compound and a conversion rate cₛₜ of the aromatic vinyl compound in the polymerization step (P1) of synthesizing the first polymer segment were obtained respectively in accordance with the following expressions (II) and (III):
In this example, U₁ refers to the mass of 1,3-butadiene added to a first reactor per unit time, and V₁ refers to the mass of styrene added to the first reactor per unit time.

In the following expressions, X₁ represents the amount of bound styrene in the first polymer segment. X₂ represents the amount of bound styrene in the second polymer segment.$\begin{matrix}Conversion rate of conjugated \\ diene compound in P 1 {c}_{bd} \left[%\right] = \frac{\left(100-{X}_{1}\right) \times {m}_{1}}{{U}_{1}}\end{matrix}$ expression (II) $\begin{matrix}Conversion rate of conjugated diene \\ compound in P 1 {c}_{st} \left[%\right] = \frac{{X}_{1} \times {m}_{1}}{{V}_{1}}\end{matrix}$ expression (III)

The conversion rate c in the polymerization step (P1) of synthesizing the first polymer segment was obtained in accordance with the following expression (IV).

In this example, U₁ refers to the mass of 1,3-butadiene added to the first reactor per unit time, and V₁ refers to the mass of styrene added to the first reactor per unit time.$Conversion rate in P 1 c \left[%\right] = \frac{{m}_{1}}{{U}_{1} + {V}_{1}} \times 100$ expression (IV)

### (Physical Property 2) Polymer Segment Ratio

In this example, a polymer segment polymerized before the monomer adding part in the polymerization step (P1) is defined as the first polymer segment, and a polymer segment polymerized thereafter in the polymerization step (P2) is defined as the second polymer segment.

### (Mass Ratios r₁ and r₂ of First and Second Polymer Segments)

Mass ratios r of the first polymer segment and the second polymer segment were obtained respectively in accordance with the following expressions (V) and (VI) as ratios of the solid contents m₁ and m₂ obtained in the discharge parts of the polymerization step (P1) of synthesizing the first polymer segment and of the polymerization step (P2) of forming the second polymer segment to a sum of the mass (U) of the conjugated diene compound and the mass (V) of the aromatic vinyl compound added per unit time in the entire polymerization step.

In this example, U refers to a total amount of 1,3-butadiene added to a first reactor and 1,3-butadiene added to a second reactor per unit time, and V refers to a total amount of styrene added to the first reactor and styrene added to the second reactor per unit time.$First polymer segment ratio {r}_{1} \left[%\right] = \frac{{m}_{1}}{U + V} \times 100$ expression (V) $Second polymer segment ratio {r}_{2} \left[%\right] = \frac{{m}_{2} - {m}_{1}}{U + V} \times 100$ expression (VI)

### (Ratio R between Polymer Segment Mass Ratios)

A ratio R (= r₁/r₂) between the polymer segment mass ratios was obtained in accordance with the following expression (VII): $Polymer segment mass ratio R = {r}_{1} / {r}_{2}$ expression (VI)

### ((Physical Property 3) Amount of Bound Aromatic Vinyl Monomer Unit (Amount of Bound Styrene))

### (Amount of Bound Styrene Xₐₗₗ of Conjugated Diene-based Polymer)

A conjugated diene-based polymer not containing a rubber softener, and collected in the discharge part of the polymerization step (P2) of forming the second polymer segment was used as a sample, and 100 mg of the sample was diluted to 100 mL with chloroform and dissolved to obtain a measurement sample.

The amount of bound styrene (% by mass) in 100% by mass of a coupling conjugated diene-based polymer used as the sample was measured by measuring the amount of absorption at an ultraviolet absorption wavelength (in the vicinity of 254 nm) by a phenyl group of styrene (measurement apparatus: Spectrophotometer "UV-2450" manufactured by Shimadzu Corporation).

### (Amount of Bound Styrene X₁ in First Polymer Segment)

The sample was changed from the conjugated diene-based polymer to a solid content of the polymer solution obtained in the discharge part of the polymerization step (P1) of synthesizing the first polymer segment. Except for this, the same conditions as those employed in the method for the amount of bound styrene in a segment of the conjugated diene-based polymer were employed to calculate the amount of bound styrene.

### (Amount of Bound Styrene X₂ in Second Polymer Segment)

Based on the polymer segment ratios r₁ and r₂ respectively in the polymerization step (P1) of synthesizing the first polymer segment and the polymerization step (P2) of forming the second polymer segment, and the amounts of bound styrene X₁ and Xₐₗₗ, the amount of bound styrene (X₂) in the second polymer segment was calculated in accordance with the following expression (VIII):
${X}_{2} = \frac{100 {X}_{all} - {r}_{1} {X}_{1}}{{r}_{2}}$ expression (VIII)

### (Difference |X₂ - X₁| in Amount of Bound Styrene between First and Second Polymer Segments)

In order to evaluate randomness of styrene, a difference in the amount of bound styrene between the first polymer segment and the second polymer segment was obtained as |X₂ - X₁|.

### ((Physical Property 4) Amount of Vinyl Bond in Bound Conjugated Diene (Amount of 1,2-vinyl Bond in Bound Butadiene))

### (Amount of Vinyl Bond Yₐₗₗ in Conjugated Diene-based Polymer)

A conjugated diene polymer not containing a rubber softener, and collected in the discharge part of the polymerization step (P2) of forming the second polymer segment was used as a sample, and 50 mg of the sample was dissolved in 10 mL of carbon disulfide to obtain a measurement sample.

An infrared spectrum of each sample was measured in a range of 600 to 1,000 cm⁻¹ with Fourier transform infrared spectrophotometer (trade name "FT-IR230" manufactured by JASCO Corporation).

In accordance with the Hampton method (method described by R. R. Hampton, Analytical Chemistry 21, 923 (1949)), an amount of 1,2-vinyl bond (mol%) in bound butadiene was obtained based on absorbance at a prescribed wavelength.

### (Amount of Vinyl Bond Y₁ in First Polymer Segment)

The sample was changed from the conjugated diene-based polymer to the solid content of the polymer solution obtained in the discharge part of the polymerization step (P1) of synthesizing the first polymer segment. Except for this, the same conditions as those employed in the method for the amount of vinyl bond in the conjugated diene-based polymer were employed to calculate the amount of vinyl bond.

### (Amount of Vinyl Bond Y₂ in Second Polymer Segment)

Based on the solid contents m₁ and m₂ respectively in the polymerization step (P1) of synthesizing the first polymer segment and the polymerization step (P2) of forming the second polymer segment, and the amounts of vinyl bond Y₁ and Yₐₗₗ in bound conjugated diene, the amount of vinyl bond in the second polymer segment was calculated in accordance with the following expression (IX):
${Y}_{2} = \frac{100 \left(100-{X}_{all}\right) {Y}_{all} - {r}_{1} \left(100-{X}_{1}\right) {Y}_{1}}{\left(100-{X}_{2}\right) {r}_{2}}$ expression (IX) $ΔY = {Y}_{2} - {Y}_{1}$ expression (X)

### (Physical Property 5) Estimated Glass Transition Temperature, and Difference in Estimated Glass Transition Temperature

The estimated glass transition temperatures (estimated Tg₁, estimated Tg₂, and estimated Tg) of the first polymer segment, the second polymer segment, and the modified conjugated diene-based polymer were respectively obtained in accordance with the expression (iii). For obtaining the estimated Tg₁ and the estimated Tg₂, Xₐₗₗ and Yₐₗₗ of the microstructure may be replaced respectively with X₁ and Y₁, and X₂ and Y₂.$Tg ≒ \frac{- 5750 + 95 \times {X}_{all} + 52 \times {Y}_{all} - 0 . 52 \times {X}_{all} \times {Y}_{all}}{56 - 0 . 2 \times {X}_{all} - 0 . 1 \times {Y}_{all}}$ (iii)

Furthermore, a difference in the estimated glass transition temperature was obtained in accordance with the following expression (XI): 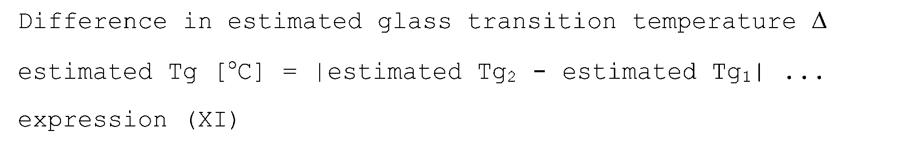
Difference in estimated glass transition temperature Δ estimated Tg [°C] = |estimated Tg2 - estimated Tg1| ... expression (XI)

### (Physical Property 6) Molecular Weight

A modified conjugated diene-based polymer of each of Examples and Comparative Examples was used as a sample for measuring a chromatogram by using a GPC measurement apparatus (trade name "HLC-8320GPC" manufactured by Tosoh Corporation) including a series of three columns using a polystyrene-based gel as a filler, and an RI detector (trade name "HLC8020" manufactured by Tosoh Corporation). On the basis of a calibration curve obtained using standard polystyrene, a weight average molecular weight (Mw), a number average molecular weight (Mn), and a molecular weight distribution (Mw/Mn) were obtained.

As an eluent, 5 mmol/L triethylamine-containing THF (tetrahydrofuran) was used. As the columns, trade name "TSKguardcolumn Super MP(HZ)-H" manufactured by Tosoh Corporation connected, as a guard column at a previous stage, to a series of three columns of trade name "TSKgel Super Multipore HZ-H" manufactured by Tosoh Corporation were used.

Ten (10) mg of a sample for the measurement was dissolved in 10 mL of THF to obtain a measurement solution, and 10 µL of the measurement solution was injected into the GPC measurement apparatus for performing the measurement under conditions of an oven temperature of 40°C and a THF flow rate of 0.35 mL/min.

### (Physical Property 7) Modification Ratio

A modification ratio of the modified conjugated diene-based polymer of each of Examples and Comparative Examples was measured by column adsorption GPC as follows.

A modified conjugated diene-based polymer was used as a sample for performing measurement by utilizing a characteristic that a modified basic polymer component adsorbs onto a GPC column using a silica-based gel as a filler.

Based on a difference between a chromatogram obtained by the measurement with a polystyrene-based column and a chromatogram obtained by the measurement with a silica-based column, which were obtained from a sample solution containing the sample and low molecular weight internal standard polystyrene, the amount of absorption onto the silica-based column was measured to obtain a modification ratio.

### <Preparation of Sample Solution>:

10 mg of the sample and 5 mg of standard polystyrene were dissolved in 20 mL of THF( tetrahydrofuran) to obtain the sample solution.

### <GPC Measurement Conditions Using Polystyrene-based Column>:

With an apparatus of trade name "HLC-8320GPC" manufactured by Tosoh Corporation used, and with 5 mmol/L triethylamine-containing THF used as an eluent, 10 µL of the sample solution was injected into the apparatus to obtain a chromatogram with an RI detector under conditions of a column oven temperature of 40°C, and a THF flow rate of 0.35 mL/min.

As the columns, a series of three columns of trade name "TSKgel Super Multipore HZ-H" manufactured by Tosoh Corporation were connected with a column of trade name "TSKguardcolumn SuperMP(HZ)-H" manufactured by Tosoh Corporation connected as a guard column at a previous stage to be used.

### <GPC measurement conditions using silica-based column>

The GPC measurement was performed using an apparatus of trade name "HLC-8320GPC" manufactured by Tosoh Corporation and an RI detector (trade name "HLC8020" manufactured by Tosoh Corporation).

THF was used as an eluent, and 50 µL of a sample solution was injected into the GPC apparatus to obtain a chromatogram under conditions of a column oven temperature of 40°C and a THF flow rate of 0.5 mL/min.

A series of columns of trade names "Zorbax PSM-1000S", "PSM-300S" and "PSM-60S" manufactured by Agilent Technologies Japan Ltd., and a guard column of trade name "DIOL 4.6 x 12.5 mm 5 micron" connected at a previous stage were used.

### <Calculation Method for Modification Ratio>:

In the chromatogram obtained by using the polystyrene-based column, it was assumed that the whole peak area was 100, that a peak area of the sample was p1, that a peak area of the standard polystyrene was p2, and in the chromatogram obtained by using the silica-based column, it was assumed that the whole peak area was 100, that a peak area of the sample was p3, and that a peak area of the standard polystyrene was p4, and thus, a modification ratio (%) was obtained based on the following expression: 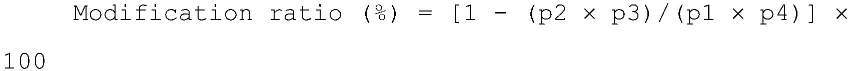 Modification ratio (%) = [1 - (p2 × p3)/(p1 × p4)] × 100 wherein $p 1 + p 2 = p 3 + p 4 = 100 .$

### (Physical Property 8) Branch Number (Bn)

A branch number (Bn) of the modified conjugated diene-based polymer was measured by GPC-light scattering method with a viscosity detector as follows.

A modified conjugated diene-based polymer used as a sample was subjected to the measurement with a GPC measurement apparatus (trade name "GPCmax VE-2001," manufactured by Malvern) equipped with three columns connected in series and filled with polystyrene-based gel, by using three detectors of a light scattering detector, an RI detector, and a viscosity detector (trade name "TDA305," manufactured by Malvern), connected in this specific order. Based on standard polystyrene, the absolute molecular weight was obtained from the results from the light scattering detector and the RI detector, and the intrinsic viscosity was obtained from the results from the RI detector and the viscosity detector.

It was assumed that the intrinsic viscosity of a linear polymer follows the expression [η0] = 10^{-3.498}M^{0.711}, and the shrinkage factor (g') was calculated as a ratio of intrinsic viscosities to the respective molecular weights. In this expression, M represents the absolute molecular weight.

As the eluent, 5 mmol/L triethylamine-containing THF was used.

As the columns, those available under trade names such as "TSKgel G4000HXL", "TSKgel G5000HXL", and "TSKgel G6000HXL" manufactured by Tosoh Corporation were connected for use.

Twenty (20) mg of a sample for the measurement was dissolved in 10 mL of THF to obtain a measurement solution, and 100 µL of the measurement solution was injected into the GPC measurement apparatus for performing the measurement under conditions of an oven temperature of 40°C and a THF flow rate of 1 mL/min.

Through this measurement, an absolute molecular weight distribution curve and a branch number distribution curve of the modified conjugated diene-based polymer were obtained, and the shrinkage factor (g') was used to calculate a branch number (Bn) defined as g' = 6Bn/{(Bn + 1)(Bn + 2)}.

### (Physical Property 9) tan δ Peak Height

The tan δ peak height was measured by dynamic viscoelasticity analysis performed with an ARES (Advanced Rheometric Expansion System) as follows.

Three (3) g of the modified conjugated diene-based polymer was dissolved in 30 mL of tetrahydrofuran, and a precipitate obtained by adding methanol to the resultant solution was then completely dried using a vacuum dryer at 40°C. The resulting dried polymer was pressed at 120°C for 3 minutes to form a sheet with a thickness of 1 mm, which was then punched into a circular disc with a diameter of 10 mm for use as a measurement sample.

The tan δ as a function of a temperature in the temperature range from -100°C to 100°C was measured with a dynamic mechanical analyzer (ARES-G2, manufactured by TA Instruments) in torsional mode under conditions of a frequency of 10 Hz, a strain of 0.5%, and a temperature rise rate of 5°C/min.

The results were plotted with temperature on the horizontal axis and tan δ on the vertical axis, and the value of tan δ at the maximum point was defined as the tan δ peak height.

### (Physical Property 10) Polymer Mooney Viscosity

A modified conjugated diene-based polymer of each of Examples and Comparative Examples was used as a sample to measure a Mooney viscosity with a Mooney viscometer (trade name "VR1132" manufactured by Ueshima Seisakusho Co., Ltd.) in accordance with ISO 289 with an L-type rotor used, and with a measurement temperature set to 100°C.

After the sample was preheated at the test temperature for 1 minute, the rotor was rotated at 2 rpm, and a torque was measured 4 minutes after to measure a Mooney viscosity (ML₍₁₊₄₎).

### [Production of Modified Conjugated Diene-based Polymer]

### (Example 1)

Two tank pressure vessels, each of which was a tank reactor equipped with a stirrer having an internal volume of 10 L and a ratio (L/D) of the internal height (L) and the diameter (D) of 4.0, having an inlet at a bottom and an outlet at a top, and was equipped with a stirrer and a temperature controlling jacket, were connected to each other as a polymerization reactor.

1,3-Butadiene, styrene, and normal hexane, from which a water content had been precedently removed, were mixed under conditions of 17.4 g/min, 5.8 g/min, and 180.1 g/min, respectively to obtain a mixed solution. N-butyllithium for residual impurity inactivation was further added at 0.104 mmol/min in a static mixer provided in the middle of a pipe for supplying this mixed solution to the inlet of the reactor, and the resultant was mixed and then continuously supplied to the bottom of the reactor. Besides, 2,2-bis(2-oxolanyl)propane used as a polar material and n-butyllithium used as a polymerization initiator were supplied respectively at rates of 0.034 mmol/min and 0.203 mmol/min to the bottom of the first reactor in which these substances were vigorously stirred with the stirrer, and the internal temperature of the reactor was kept at 82°C. When the polymerization reaction was stabilized, a small amount of a conjugated diene-based polymer was taken out from the top of the reactor, and an antioxidant (BHT) was added thereto to obtain an amount of 0.2 g per 100 g of the polymer. Thereafter, the solvent was removed, and then, the amount of bound aromatic vinyl monomer (X₁) in the first polymer segment, the amount of vinyl bond (Y₁) in bound conjugated diene, and the conversion rate c and the styrene conversion rate cₛₜ were measured.

Next, with the polymer solution continuously supplied from the top of the first reactor to the bottom of the second reactor, to a connecting pipe therebetween (corresponding to the monomer adding part), 1,3-butadiene, styrene, normal hexane, 2,2-bis(2-oxolanyl)propane used as the polar material, and trimethoxy(4-vinylphenyl)silane used as the branching agent were added, under stirring, respectively at rates of 7.5 g/min, 2.6 g/min, 42.9 g/min, 0.062 mmol/min, and 0.025 mmol/min, and the reaction was continued at 85°C.

Next, to the polymer solution flowing out from the top of the second reactor, tetrakis(3-trimethoxysilylpropyl)-1,3-propanediamine (shown as "Coupling Modifier A" in Tables) was continuously added as the coupling modifier at a rate of 0.028 mmol/min, and the resultant was mixed with the static mixer for causing a coupling reaction.

Next, to the polymer solution resulting from the coupling reaction, an antioxidant (BHT) was continuously added at 0.055 g/min (in the form of an n-hexane solution) to obtain an amount of 0.2 g per 100 g of the polymer, and thus, the coupling reaction was completed.

Thereafter, S-RAE oil (trade name "Process NC140" manufactured by JX NIPPON OIL & ENERGY CORPORATION) was added thereto as a plasticizer at a rate of 25 phr, followed by mixing with the stirrer.

The solvent was removed by steam stripping, and thus, a modified conjugated diene-based polymer (A1) was obtained, and this was used to measure various physical properties.

### (Example 2)

A modified conjugated diene-based polymer of Example 2 was obtained in the same manner as in Example 1 except that the rates of 1,3-butadiene, styrene, and normal hexane to be supplied to the first reactor were changed respectively to 16.7 g/min, 5.3 g /min, and 176.2 g/min, that the rates of 1,3-butadiene, styrene, normal hexane, and the polar material to be added to the second reactor were changed respectively to 9.8 g/min, 1.5 g/min, 46.9 g/min, and 0.255 mmol/min, that the polymerization temperature in the second reactor was changed to 78°C, and that the amount of the coupling modifier to be added was changed to 0.018 mmol/min.

### (Example 3)

A modified conjugated diene-based polymer of Example 3 was obtained in the same manner as in Example 2 except that the amount of the coupling modifier to be added was changed to 0.028 mmol/min.

### (Example 4)

A modified conjugated diene-based polymer of Example 4 was obtained in the same manner as in Example 1 except that the rates of 1,3-butadiene and styrene to be supplied to the first reactor were changed respectively to 17.2 g/min and 5.4 g/min, and that the rates of 1,3-butadiene, styrene, normal hexane, and the polar material to be added to the second reactor were changed respectively to 7.4 g/min, 3.3 g/min, 43.0 g/min, and 0.119 mmol/min.

### (Example 5)

A modified conjugated diene-based polymer of Example 5 was obtained in the same manner as in Example 4 except that the rate of the branching agent to be added to the second reactor was changed to 0.012 mmol/min.

### (Example 6)

A modified conjugated diene-based polymer of Example 6 was obtained in the same manner as in Example 4 except that the rates of n-butyllithium used as the polymerization initiator and the polar material to be supplied to the first reactor were changed respectively to 0.167 mmol/min and 0.029 mmol/min, that the branching agent was not added, and that the rates of the coupling modifier to be added was changed to 0.023 mmol/min.

### (Example 7)

A modified conjugated diene-based polymer of Example 7 was obtained in the same manner as in Example 4 except that the rates of n-butyllithium used as the polymerization initiator and the polar material to be supplied to the first reactor were changed respectively to 0.229 mmol/min and 0.040 mmol/min, and that the rates of the polar material, the branching agent, and the coupling modifier to be added to the second reactor were changed respectively to 0.137 mmol/min, 0.036 mmol/min, and 0.027 mmol/min.

### (Example 8)

A modified conjugated diene-based polymer of Example 8 was obtained in the same manner as in Example 4 except that the rates of n-butyllithium used as the polymerization initiator and the polar material to be supplied to the first reactor were changed respectively to 0.177 mmol/min and 0.031 mmol/min, and that the rates of the polar material, the branching agent, and the coupling modifier to be added to the second reactor were changed respectively to 0.105 mmol/min, 0.023 mmol/min, and 0.025 mmol/min.

### (Example 9)

A modified conjugated diene-based polymer of Example 9 was obtained in the same manner as in Example 4 except that the rates of n-butyllithium used as the polymerization initiator and the polar material to be supplied to the first reactor were changed respectively to 0.167 mmol/min and 0.029 mmol/min, and that the rates of the polar material, the branching agent, and the coupling modifier to be added to the second reactor were changed respectively to 0.101 mmol/min, 0.022 mmol/min, and 0.023 mmol/min.

### (Example 10)

A modified conjugated diene-based polymer of Example 10 was obtained in the same manner as in Example 4 except that the rates of the branching agent and the coupling modifier to be added to the second reactor were changed respectively to 0.033 mmol/min and 0.024 mmol/min.

### (Example 11)

A modified conjugated diene-based polymer of Example 11 was obtained in the same manner as in Example 1 except that the rates of 1,3-butadiene, styrene, and normal hexane to be supplied to the first reactor were changed respectively to 18.8 g/min, 3.6 g/min, and 177.7 g/min, and that the rates of 1,3-butadiene, styrene, normal hexane, and the polar material to be added to the second reactor were changed respectively to 10.1 g/min, 0.9 g/min, 45.4 g/min, and 0.255 mmol/min.

### (Example 12)

A modified conjugated diene-based polymer of Example 12 was obtained in the same manner as in Example 1 except that the rates of 1,3-butadiene, styrene, and the polar material to be supplied to the first reactor were changed respectively to 17.4 g/min, 4.6 g/min, and 0.090 mmol/min, and that the rates of styrene and the polar material to be added to the second reactor were changed respectively to 3.8 g/min, and 0.081 mmol/min.

### (Example 13)

A modified conjugated diene-based polymer of Example 13 was obtained in the same manner as in Example 1 except that the rates of 1,3-butadiene, styrene, normal hexane, and the polar material to be supplied to the first reactor were changed respectively to 14.1 g/min, 4.7 g /min, 174.3 g/min, and 0.118 mmol/min, that the polymerization temperature in the first reactor was changed to 78°C, that the rates of 1,3-butadiene, styrene, normal hexane, and the polar material to be added to the second reactor were changed respectively to 9.4 g/min, 5.1 g/min, 48.7 g/min, and 0.172 mmol/min, and that the polymerization temperature in the second reactor was changed to 78°C.

### (Example 14)

A modified conjugated diene-based polymer of Example 14 was obtained in the same manner as in Example 1 except that the rates of 1,3-butadiene, styrene, and normal hexane to be supplied to the first reactor were changed respectively to 17.7 g/min, 6.5 g/min, and 180.2 g/min, and that the rates of 1,3-butadiene, styrene, normal hexane, and the polar material to be added to the second reactor were changed respectively to 7.6 g/min, 1.6 g/min, 42.8 g/min, and 0.128 mmol/min.

### (Example 15)

A modified conjugated diene-based polymer of Example 15 was obtained in the same manner as in Example 1 except that the rates of 1,3-butadiene, styrene, and normal hexane to be supplied to the first reactor were changed respectively to 17.4 g/min, 5.8 g/min, and 180.1 g/min, and that the rates of 1,3-butadiene, styrene, normal hexane, and the polar material to be added to the second reactor were changed respectively to 7.5 g/min, 2.6 g/min, 42.9 g/min, and 0.121 mmol/min.

### (Example 16)

A modified conjugated diene-based polymer of Example 16 was obtained in the same manner as in Example 5 except that the plasticizer was not added.

### (Example 17]

A modified conjugated diene-based polymer of Example 17 was obtained in the same manner as in Example 3 except that the rates of 1,3-butadiene, styrene, and normal hexane to be supplied to the first reactor were changed respectively to 15.6 g/min, 4.7 g/min, and 173.1 g/min, and that the rates of 1,3-butadiene, styrene, normal hexane, and the polar material to be added to the second reactor were changed respectively to 11.3 g/min, 1.8 g/min, 50.0 g/min, and 0.121 mmol/min.

### (Comparative Example 1)

A modified conjugated diene-based polymer of Comparative Example 1 was obtained in the same manner as in Example 1 except that the rates of 1,3-butadiene, styrene, normal hexane, and the polar material to be supplied to the first reactor were changed respectively to 17.8 g/min, 8.0 g /min, 180.3 g/min, and 0.045 mmol/min, that the reaction temperature in the first polymerization reactor was changed to 65°C, that styrene and the polar material were not added in the second reactor, that the rates of 1,3-butadiene and normal hexane to be added to the second reactor were changed respectively to 7.6 g/min and 42.8 g/min, and that the reaction temperature in the second polymerization reactor was changed to 90°C.

### (Comparative Example 2)

A modified conjugated diene-based polymer of Comparative Example 2 was obtained in the same manner as in Comparative Example 1 except that the rates of 1,3-butadiene, styrene, normal hexane, and the polar material to be supplied to the first reactor were changed respectively to 20.0 g/min, 6.7 g /min, 183.7 g/min, and 0.033 mmol/min, that the reaction temperature in the first polymerization reactor was changed to 70°C, that the rates of 1,3-butadiene and normal hexane to be added to the second reactor were changed respectively to 6.7 g/min and 39.4 g/min, and that the reaction temperature in the second polymerization reactor was changed to 90°C.

### (Comparative Example 3)

A modified conjugated diene-based polymer of Comparative Example 3 was obtained in the same manner as in Comparative Example 1 except that the rates of n-butyllithium used as the polymerization initiator, and the polar material to be supplied to the first reactor were changed respectively to 0.104 mmol/min and 0.025 mmol/min, that the branching agent was not added in the second reactor, and that the rate of the coupling modifier to be added was changed to 0.016 mmol/min.

### (Comparative Example 4)

A modified conjugated diene-based polymer of Comparative Example 4 was obtained in the same manner as in Comparative Example 1 except that the amount of the coupling modifier to be added was changed to 0.047 mmol/min.

### (Comparative Example 5)

A modified conjugated diene-based polymer of Comparative Example 5 was obtained in the same manner as in Comparative Example 1 except that the rates of n-butyllithium used as the polymerization initiator, 1,3-butadiene, styrene, normal hexane, and the polar material to be supplied to the first reactor were changed respectively to 0.250 mmol/min, 19.8 g/min, 5.1 g /min, 146.7 g/min, and 0.008 mmol/min, that the reaction temperature in the first polymerization reactor was changed to 60°C, that the rates of 1,3-butadiene, normal hexane, and the polar material to be added to the second reactor were changed respectively to 8.5 g/min, 42.1 g/min, and 0.109 mmol/min, that the branching agent was not added, that the reaction temperature in the second polymerization reactor was changed to 60°C, that the coupling modifier A was changed to 0.047 mmol/min of N,N-dimethyl-3-(trimethoxysilyl)propane-1-amine (shown as Coupling Modifier B in Tables), and that the plasticizer was not added.

### (Comparative Example 6)

A modified conjugated diene-based polymer of Comparative Example 6 was obtained in the same manner as in Comparative Example 4 except that the rate of the polar material to be supplied to the first reactor was changed to 0.007 mmol/min, that the reaction temperature in the first polymerization reactor was changed to 60°C, that the rates of 1,3-butadiene, the branching agent, and the polar material to be added to the second reactor were changed respectively to 8.5 g/min, 0.025 mmol/min, and 0.091 mmol/min, and that the rate of the coupling modifier A was changed to 0.028 mmol/min.

### (Comparative Example 7)

A modified conjugated diene-based polymer of Comparative Example 7 was obtained in the same manner as in Comparative Example 6 except that the rate of the polar material to be supplied to the first reactor was changed to 0.016 mmol/min, that the reaction temperature in the first polymerization reactor was changed to 65°C, that the rate of the polar material to be added to the second reactor was changed to 0.257 mmol/min, and that the reaction temperature in the second polymerization reactor was changed to 85°C.

### (Comparative Example 8)

A modified conjugated diene-based polymer of Comparative Example 8 was obtained in the same manner as in Comparative Example 1 except that the rates of n-butyllithium used as the polymerization initiator, 1,3-butadiene, styrene, normal hexane, and the polar material to be supplied to the first reactor were changed respectively to 0.250 mmol/min, 18.4 g/min, 5.8 g /min, 146.3 g/min, and 0.011 mmol/min, that the reaction temperature in the first polymerization reactor was changed to 60°C, that the rates of 1,3-butadiene, normal hexane, and the polar material to be added to the second reactor were changed respectively to 10.2 g/min, 50.6 g/min, and 0.109 mmol/min, that the branching agent was not added, that the reaction temperature in the second polymerization reactor was changed to 60°C, that the coupling modifier A was changed to 0.053 mmol/min of bis(3-(diethoxymethylsilylpropyl)-N-methylamine (shown as Coupling Modifier C in Tables), and that the plasticizer was not added.

### (Comparative Example 9)

A tank polymerization reactor equipped with a stirrer having an internal volume of 20 L was used to perform batch polymerization as follows.

The polymerization reactor, whose internal atmosphere had been replaced with dry nitrogen, was charged with 7.65 kg of hexane, 2.93 kg of cyclohexane, 240 g of 1,3-butadiene, 510 g of styrene, 8.8 mL of tetrahydrofuran, and 0.9 mL of ethylene glycol dibutyl ether. Next, in order to preliminarily detoxify impurities that act to deactivate a polymerization initiator, a small amount of an n-butyllithium solution in hexane was charged into the polymerization reactor as a scavenger. Subsequently, an n-hexane solution containing 3.12 mmol of n-BuLi was charged into the polymerization reactor to start a polymerization reaction.

The polymerization reaction was performed for 4 hours and 10 minutes. During the polymerization reaction, the temperature inside the polymerization reactor was adjusted to 65°C, and the solution in the polymerization reactor was stirred at a stirring speed of 100 rpm, and 660 g of 1,3-butadiene and 90 g of styrene were continuously supplied into the polymerization reactor over a period of 3 hours and 20 minutes, starting from 20 minutes after start of the polymerization. Subsequently, with the temperature within the polymerization reactor kept at 65°C, the resultant polymer solution was stirred at a stirring speed of 100 rpm in the polymerization reactor, and 0.25 mmol of silicon tetrachloride was added thereto, followed by stirring for 15 minutes. Then, 5 mL of a hexane solution containing 0.8 mL of methanol was charged into the polymerization reactor, followed by stirring the polymer solution for 5 minutes.

Thereafter, an antioxidant (BHT) was added as a stabilizer in an amount of 0.3 parts by mass with respect to 100 parts by mass of the polymer, resulting in obtaining a conjugated diene-based polymer of Comparative Example 9.

**[Table 1]**

| | | | Example 1 | Example 2 | Example 3 | Example 4 | Example 5 | Example 6 |
|---|---|---|---|---|---|---|---|---|
| Polymerization Conditions | n-Butyllithium for Treatment | (mmol/ min) | 0.104 | 0.104 | 0.104 | 0.104 | 0.104 | 0.104 |
| | Polymerization Initiator n-butyllithium | (mmol/ min) | 0.203 | 0.203 | 0.203 | 0.203 | 0.203 | 0.167 |
| | Butadiene added to 1st Reactor | (g/min) | 17.4 | 16.7 | 16.7 | 17.2 | 17.2 | 17.2 |
| | Styrene added to 1st Reactor | (g/min) | 5.8 | 5.3 | 5.3 | 5.4 | 5.4 | 5.4 |
| | Normal Hexane added to 1st Reactor | (g/min) | 180.1 | 176.2 | 176.2 | 180.1 | 180.1 | 180.1 |
| | Polar Material added to 1st Reactor | (mmol/ min) | 0.034 | 0.034 | 0.034 | 0.034 | 0.034 | 0.029 |
| | Polymerization Temperature in 1st Reactor | (°C) | 82 | 82 | 82 | 82 | 82 | 82 |
| | Branching Agent | (mmol/ min) | 0.025 | 0.025 | 0.025 | 0.025 | 0.012 | 0.000 |
| | Butadiene added to 2nd Reactor | (g/min) | 7.5 | 9.8 | 9.8 | 7.4 | 7.4 | 7.4 |
| | Styrene added to 2nd Reactor | (g/min) | 2.6 | 1.5 | 1.5 | 3.3 | 3.3 | 3.3 |
| | Normal Hexane added to 2nd Reactor | (g/min) | 42.9 | 46.9 | 46.9 | 43.0 | 43.0 | 43.0 |
| | Polar Material added to 2nd Reactor | (mmol/ min) | 0.062 | 0.255 | 0.255 | 0.119 | 0.119 | 0.107 |
| | Polymerization Temperature in 2nd Reactor | (°C) | 85 | 78 | 78 | 85 | 85 | 85 |
| | Coupling Modifier | | A | A | A | A | A | A |
| | Amount of Coupling Modifier to be added | (mmol/ min) | 0.028 | 0.018 | 0.028 | 0.028 | 0.028 | 0.023 |
| | Oil Content | (wt%) | 20 | 20 | 20 | 20 | 20 | 20 |
| | (Physical Property 1) Conversion Rate c | (%) | 89 | 89 | 89 | 89 | 89 | 89 |
| | (Physical Property 1) Styrene Conversion Rate cst | (%) | 75 | 75 | 75 | 75 | 75 | 75 |
| First Polymer Segment | (Physical Property 3) Amount of Bound Styrene X1 | (mass %) | 20 | 20 | 20 | 20 | 20 | 20 |
| | (Physical Property 4) Amount of Vinyl Bond Y1 | (mol%) | 20 | 20 | 20 | 20 | 20 | 20 |
| | (Physical Property 5) Estimated Glass Transition Temperature | | -60 | -60 | -60 | -60 | -60 | -60 |
| Second Polymer Segment | (Physical Property 3) Amount of Bound Styrene X2 | (mass %) | 35 | 20 | 20 | 35 | 35 | 35 |
| | (Physical Property 4) Amount of Vinyl Bond Y2 | (mol%) | 29 | 53 | 53 | 37 | 37 | 37 |
| | (Physical Property 5) Estimated Glass Transition Temperature | | -32 | -35 | -35 | -26 | -26 | -26 |
| Physical Property | (Physical Property 2) Ratio between Polymer Segment Mass Ratios R = r1/r2 | | 1.50 | 1.86 | 1.86 | 1.50 | 1.50 | 1.50 |
| | (Physical Property 3) Amount of Bound Styrene Xall | (mass %) | 26 | 21 | 21 | 26 | 26 | 26 |
| | (Physical Property 4) Amount of Vinyl Bond | (mol%) | 23 | 32 | 32 | 26 | 26 | 26 |
| | (Physical Property 5) Estimated Glass Transition Temperature | (°C) | -49 | -50 | -50 | -47 | -47 | -47 |
| | (Physical Property 5) Difference in Estimated Glass Transition Temperature | (°C) | 29 | 25 | 25 | 34 | 34 | 34 |
| | (Physical Property 3) Difference in Amount of Bound Styrene \|X1-X2\| | (mass %) | 15 | 0 | 0 | 15 | 15 | 15 |
| | (Physical Property 6) Weight Average Molecular Weight Mw | (10⁴ g/mol) | 84 | 89 | 88 | 91 | 72 | 71 |
| | (Physical Property 6) Number Average Molecular Weight Mn | (10⁴ g/mol) | 39 | 41 | 41 | 43 | 38 | 41 |
| | (Physical Property 6) Molecular Weight Distribution Mw/Mn | | 2.16 | 2.17 | 2.16 | 2.12 | 1.89 | 1.73 |
| | (Physical Property 7) Modification Ratio | (%) | 75 | 67 | 75 | 75 | 75 | 75 |
| | (Physical Property 8) Bn | | 10 | 10 | 10 | 10 | 8 | 6 |
| | (Physical Property 9) tanδ Peak Height | | 1.30 | 1.30 | 1.30 | 1.10 | 1.10 | 1.10 |
| | (Physical Property 10) Mooney Viscosity | | 100 | 100 | 100 | 100 | 78 | 75 |

**[Table 2]**

| | | | Example 7 | Example 8 | Example 9 | Example 10 | Example 11 |
|---|---|---|---|---|---|---|---|
| Polymerization Conditions | n-Butyllithium for Treatment | (mmol/min) | 0.104 | 0.104 | 0.104 | 0.104 | 0.104 |
| | Polymerization Initiator n-butyllithium | (mmol/min) | 0.229 | 0.177 | 0.167 | 0.203 | 0.203 |
| | Butadiene added to 1st Reactor | (g/min) | 17.2 | 17.2 | 17.2 | 17.2 | 18.8 |
| | Styrene added to 1st Reactor | (g/min) | 5.4 | 5.4 | 5.4 | 5.4 | 3.6 |
| | Normal Hexane added to 1st Reactor | (g/min) | 180.1 | 180.1 | 180.1 | 180.1 | 177.7 |
| | Polar Material added to 1st Reactor | (mmol/min) | 0.040 | 0.031 | 0.029 | 0.034 | 0.034 |
| | Polymerization Temperature in 1st Reactor | (°C) | 82 | 82 | 82 | 82 | 82 |
| | Branching Agent | (mmol/min) | 0.036 | 0.023 | 0.022 | 0.033 | 0.025 |
| | Butadiene added to 2nd Reactor | (g/min) | 7.4 | 7.4 | 7.4 | 7.4 | 10.1 |
| | Styrene added to 2nd Reactor | (g/min) | 3.3 | 3.3 | 3.3 | 3.3 | 0.9 |
| | Normal Hexane added to 2nd Reactor | (g/min) | 43.0 | 43.0 | 43.0 | 43.0 | 45.4 |
| | Polar Material added to 2nd Reactor | (mmol/min) | 0.137 | 0.105 | 0.101 | 0.119 | 0.255 |
| | Polymerization Temperature in 2nd Reactor | (°C) | 85 | 85 | 85 | 85 | 85 |
| | Coupling Modifier | | A | A | A | A | A |
| | Amount of Coupling Modifier to be added | (mmol/min) | 0.027 | 0.025 | 0.023 | 0.024 | 0.028 |
| | Oil Content | (wt%) | 20 | 20 | 20 | 20 | 20 |
| | (Physical Property 1) Conversion Rate c | (%) | 89 | 89 | 89 | 89 | 90 |
| | (Physical Property 1) Styrene Conversion Rate cst | (%) | 75 | 75 | 75 | 75 | 75 |
| First Polymer Segment | (Physical Property 3) Amount of Bound Styrene X1 | (mass%) | 20 | 20 | 20 | 20 | 13 |
| | (Physical Property 4) Amount of Vinyl Bond Y1 | (mol%) | 20 | 20 | 20 | 20 | 20 |
| | (Physical Property 5) Estimated Glass Transition Temperature | | -60 | -60 | -60 | -60 | -70 |
| Second Polymer Segment | (Physical Property 3) Amount of Bound Styrene X2 | (mass%) | 35 | 35 | 35 | 35 | 13 |
| | (Physical Property 4) Amount of Vinyl Bond Y2 | (mol%) | 37 | 37 | 37 | 37 | 57 |
| | (Physical Property 5) Estimated Glass Transition Temperature | | -26 | -26 | -26 | -26 | -40 |
| Physical Property | (Physical Property 2) Ratio between Polymer Segment Mass Ratio R = r1/r2 | | 1.50 | 1.50 | 1.50 | 1.50 | 1.86 |
| | (Physical Property 3) Amount of Bound Styrene Xall | (mass%) | 26 | 26 | 26 | 26 | 13 |
| | (Physical Property 4) Amount of Vinyl Bond | (mol%) | 26 | 26 | 26 | 26 | 33 |
| | (Physical Property 5) Estimated Glass Transition Temperature | (°C) | -47 | -47 | -47 | -47 | -60 |
| | (Physical Property 5) Difference in Estimated Glass Transition Temperature | (°C) | 34 | 34 | 34 | 34 | 30 |
| | (Physical Property 3) Difference in Amount of Bound Styrene \|X1-X2\| | (mass%) | 15 | 15 | 15 | 15 | 0 |
| | (Physical Property 6) Weight Average Molecular Weight Mw | (10⁴ g/mol) | 90 | 101 | 110 | 150 | 91 |
| | (Physical Property 6) Number Average Molecular Weight Mn | (10⁴ g/mol) | 39 | 48 | 52 | 65 | 43 |
| | (Physical Property 6) Molecular Weight Distribution Mw/Mn | | 2.31 | 2.10 | 2.12 | 2.31 | 2.12 |
| | (Physical Property 7) Modification Ratio | (%) | 75 | 75 | 75 | 75 | 75 |
| | (Physical Property 8) Bn | | 14 | 10 | 10 | 14 | 10 |
| | (Physical Property 9) tanδ Peak Height | | 1.10 | 1.10 | 1.10 | 1.10 | 1.30 |
| | (Physical Property 10) Mooney Viscosity | | 100 | 108 | 118 | 130 | 100 |

**[Table 3]**

| | | | Example 12 | Example 13 | Example 14 | Example 15 | Example 16 | Example 17 |
|---|---|---|---|---|---|---|---|---|
| Polymerization Conditions | n-Butyllithium for Treatment | (mmol/ min) | 0.104 | 0.104 | 0.104 | 0.104 | 0.104 | 0.104 |
| | Polymerization Initiator n-butyllithium | (mmol/ min) | 0.203 | 0.203 | 0.203 | 0.203 | 0.203 | 0.203 |
| | Butadiene added to 1st Reactor | (g/min) | 17.4 | 14.1 | 17.7 | 17.4 | 17.2 | 15.6 |
| | Styrene added to 1st Reactor | (g/min) | 4.6 | 4.7 | 6.5 | 5.8 | 5.4 | 4.7 |
| | Normal Hexane added to 1st Reactor | (g/min) | 180.1 | 174.3 | 180.2 | 180.1 | 180.1 | 173.1 |
| | Polar Material added to 1st Reactor | (mmol/ min) | 0.090 | 0.118 | 0.034 | 0.034 | 0.034 | 0.034 |
| | Polymerization Temperature in 1st Reactor | (°C) | 82 | 78 | 82 | 82 | 82 | 82 |
| | Branching Agent | (mmol/ min) | 0.025 | 0.025 | 0.025 | 0.025 | 0.012 | 0.025 |
| | Butadiene added to 2nd Reactor | (g/min) | 7.5 | 9.4 | 7.6 | 7.5 | 7.4 | 11.3 |
| | Styrene added to 2nd Reactor | (g/min) | 3.8 | 5.1 | 1.6 | 2.6 | 3.3 | 1.8 |
| | Normal Hexane added to 2nd Reactor | (g/min) | 42.9 | 48.7 | 42.8 | 42.9 | 43.0 | 50.0 |
| | Polar Material added to 2nd Reactor | (mmol/ min) | 0.081 | 0.172 | 0.128 | 0.121 | 0.119 | 0.255 |
| | Polymerization Temperature in 2nd Reactor | (°C) | 85 | 78 | 85 | 85 | 85 | 78 |
| | Coupling Modifier | | A | A | A | A | A | A |
| | Amount of Coupling Modifier to be added | (mmol/ min) | 0.028 | 0.028 | 0.028 | 0.028 | 0.028 | 0.028 |
| | Oil Content | (wt%) | 20 | 20 | 20 | 20 | 0 | 20 |
| | (Physical Property 1) Conversion Rate c | (%) | 98 | 99 | 88 | 90 | 89 | 89 |
| | (Physical Property 1) Styrene Conversion Rate cst | (%) | 95 | 97 | 75 | 75 | 75 | 75 |
| First Polymer Segment | (Physical Property 3) Amount of Bound Styrene X1 | (mass %) | 20 | 25 | 23 | 15 | 20 | 19 |
| | (Physical Property 4) Amount of Vinyl Bond Y1 | (mol%) | 30 | 35 | 20 | 20 | 20 | 20 |
| | (Physical Property 5) Estimated Glass Transition Temperature | | -53 | -42 | -56 | -67 | -60 | -61 |
| Second Polymer Segment | (Physical Property 3) Amount of Bound Styrene X2 | mass %) | 35 | 35 | 27 | 35 | 35 | 20 |
| | (Physical Property 4) Amount of Vinyl Bond Y2 | (mol%) | 50 | 58 | 35 | 47 | 40 | 58 |
| | (Physical Property 5) Estimated Glass Transition Temperature | | -17 | -11 | -40 | -19 | -24 | -32 |
| Physical Property | (Physical Property 2) Ratio between Polymer Segment Mass Ratio R = r1/r2 | | 1.86 | 1.33 | 1.78 | 1.78 | 1.50 | 1.50 |
| | (Physical Property 3) Amount of Bound Styrene Xall | (mass %) | 25 | 29 | 24 | 22 | 26 | 21 |
| | (Physical Property 4) Amount of Vinyl Bond | (mol%) | 36 | 44 | 25 | 28 | 27 | 35 |
| | (Physical Property 5) Estimated Glass Transition Temperature | (°C) | -42 | -29 | -51 | -52 | -47 | -48 |
| | (Physical Property 5) Difference in Estimated Glass Transition Temperature | (°C) | 36 | 31 | 16 | 48 | 36 | 29 |
| | (Physical Property 3) Difference in Amount of Bound Styrene IX1-X21 | (mass %) | 15 | 10 | 4 | 20 | 15 | 0 |
| | (Physical Property 6) Weight Average Molecular Weight Mw | (10⁴ g/mol) | 91 | 91 | 91 | 91 | 72 | 88 |
| | (Physical Property 6) Number Average Molecular Weight Mn | (10⁴ g/mol) | 43 | 43 | 43 | 43 | 38 | 41 |
| | (Physical Property 6) Molecular Weight Distribution Mw/Mn | | 2.12 | 2.12 | 2.12 | 2.12 | 1.89 | 2.16 |
| | (Physical Property 7) Modification Ratio | (%) | 75 | 75 | 75 | 75 | 75 | 75 |
| | (Physical Property 8) Bn | | 10 | 10 | 10 | 10 | 8 | 10 |
| | (Physical Property 9) tanδ Peak Height | | 1.10 | 1.30 | 1.40 | 0.95 | 1.10 | 1.20 |
| | (Physical Property 10) Mooney Viscosity | | 100 | 100 | 100 | 100 | 108 | 100 |

**[Table 4]**

| | | | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 |
|---|---|---|---|---|---|---|---|---|---|---|---|
| Polymerization Conditions | n-Butyllithium for Treatment | (mmol/min) | 0.104 | 0.104 | 0.104 | 0.104 | 0.104 | 0.104 | 0.104 | 0.104 | - |
| | Polymerization Initiator n-butyllithium | (mmol/min) | 0.203 | 0.203 | 0.104 | 0.203 | 0.250 | 0.203 | 0.203 | 0.250 | - |
| | Butadiene added to 1st Reactor | (g/min) | 17.8 | 20.0 | 17.8 | 17.2 | 19.8 | 19.8 | 19.8 | 18.4 | - |
| | Styrene added to 1st Reactor | (g/min) | 8.0 | 6.7 | 8.0 | 5.4 | 5.1 | 5.1 | 5.1 | 5.8 | - |
| | Normal Hexane added to 1st Reactor | (g/min) | 180.3 | 183.7 | 180.3 | 180.1 | 146.7 | 146.7 | 146.7 | 146.3 | - |
| | Polar Material added to 1st Reactor | (mmol/min) | 0.045 | 0.033 | 0.025 | 0.034 | 0.008 | 0.007 | 0.016 | 0.011 | - |
| | Polymerization Temperature in 1st Reactor | (°C) | 65 | 70 | 65 | 82 | 60 | 60 | 65 | 60 | - |
| | Branching Agent | (mmol/min) | 0.025 | 0.025 | 0.000 | 0.025 | 0.000 | 0.025 | 0.025 | 0 | - |
| | Butadiene added to 2nd Reactor | (g/min) | 7.6 | 6.7 | 7.6 | 7.4 | 8.5 | 8.5 | 8.5 | 10.2 | - |
| | Styrene added to 2nd Reactor | (g/min) | 0.0 | 0.0 | 0.0 | 3.3 | 0.0 | 0.0 | 0.0 | 0 | - |
| | Normal Hexane added to 2nd Reactor | (g/min) | 42.8 | 39.4 | 42.8 | 43.0 | 42.1 | 42.1 | 42.1 | 50.6 | - |
| | Polar Material added to 2nd Reactor | (mmol/min) | 0.000 | 0.000 | 0.000 | 0.119 | 0.109 | 0.091 | 0.257 | 0.109 | - |
| | Polymerization Temperature in 2nd Reactor | (°C) | 90 | 90 | 90 | 85 | 60 | 60 | 85 | 60 | - |
| | Coupling Modifier | | A | A | A | A | B | A | A | C | - |
| | Amount of Coupling Modifier to be added | (mmol/min) | 0.028 | 0.028 | 0.016 | 0.013 | 0.047 | 0.028 | 0.028 | 0.053 | - |
| | Oil Content | (wt%) | 20 | 20 | 20 | 20 | 0 | 20 | 20 | 0 | - |
| | (Physical Property 1) Conversion Rate c | (%) | 78 | 82 | 78 | 89 | 70 | 70 | 70 | 75 | - |
| | (Physical Property 1) Styrene Conversion Rate cst | (%) | 64 | 62 | 64 | 75 | 23 | 23 | 32 | 31 | - |
| First Polymer Segment | (Physical Property 3) Amount of Bound Styrene X1 | (mass%) | 25 | 19 | 25 | 20 | 7 | 7 | 10 | 11 | - |
| | (Physical Property 4) Amount of Vinyl Bond Y1 | (mol%) | 32 | 23 | 32 | 20 | 12 | 12 | 20 | 12 | - |
| | (Physical Property 5) Estimated Glass Transition Temperature | | -44 | -60 | -44 | -60 | -84 | -84 | -74 | -79 | - |
| Second Polymer Segment | (Physical Property 3) Amount of Bound Styrene X2 | (mass%) | 22 | 18 | 22 | 35 | 34 | 34 | 32 | 34 | - |
| | (Physical Property 4) Amount of Vinyl Bond Y2 | (mol%) | 17 | 17 | 17 | 37 | 15 | 15 | 37 | 16 | - |
| | (Physical Property 5) Estimated Glass Transition Temperature | | -60 | -66 | -60 | -26 | -42 | -42 | -31 | -41 | - |
| Physical Property | (Physical Property 2) Ratio between Polymer Segment Mass Ratio R = r1/r2 | | 1.94 | 2.13 | 1.94 | 1.50 | 1.56 | 1.56 | 1.78 | 1.56 | - |
| | (Physical Property 3) Amount of Bound Styrene Xall | (mass%) | 25 | 19 | 25 | 26 | 17 | 17 | 18 | 20 | 40 |
| | (Physical Property 4) Amount of Vinyl Bond | (mol%) | 27 | 21 | 27 | 26 | 13 | 13 | 25 | 13 | 24 |
| | (Physical Property 5) Estimated Glass Transition Temperature | (°C) | -48 | -61 | -48 | -47 | -70 | -70 | -60 | -65 | -26 |
| | (Physical Property 5) Difference in Estimated Glass Transition Temperature | (°C) | -15 | -6 | -15 | 34 | 43 | 43 | 44 | 37 | - |
| | (Physical Property 3) Difference in Amount of Bound Styrene IX1-X21 | (mass%) | -3 | -1 | -3 | 15 | 27 | 27 | 22 | 23 | - |
| | (Physical Property 6) Weight Average Molecular Weight Mw | (10⁴ g/mol) | 91 | 91 | 91 | 65 | 60 | 91 | 91 | 62 | 125 |
| | (Physical Property 6) Number Average Molecular Weight Mn | (10⁴ g/mol) | 43 | 43 | 49 | 35 | 37 | 43 | 43 | 38 | 98 |
| | (Physical Property 6) Molecular Weight Distribution Mw/Mn | | 2.12 | 2.12 | 1.86 | 1.86 | 1.62 | 2.12 | 2.12 | 1.65 | 1.28 |
| | (Physical Property 7) Modification Ratio | (%) | 73 | 73 | 73 | 57 | 40 | 60 | 60 | 40 | 0 |
| | (Physical Property 8) Bn | | 10 | 10 | 6 | 10 | 2 | 10 | 10 | 2 | 2 |
| | (Physical Property 9) tanδ Peak Height | | 1.65 | 1.75 | 1.65 | 1.10 | 0.70 | 0.70 | 0.70 | 0.8 | 1.4 |
| | (Physical Property 10) Mooney Viscosity | | 100 | 105 | 100 | 70 | 60 | 100 | 100 | 60 | 170 |

### [Examples 18 to 34] and [Comparative Examples 10 to 18]

The modified conjugated diene-based polymers of Examples and Comparative Examples shown in Tables 1 to 4 were respectively used as raw material rubbers to obtain rubber compositions containing the respective raw material rubbers in accordance with the following composition:
Modified conjugated diene-based polymer (Examples 1 to 17 and Comparative Examples 1 to 9): 100 parts by mass (excluding oil)
Silica (trade name "Ultrasil 7000GR", manufactured by Evonik Degussa, nitrogen adsorption specific surface area: 170 m²/g): 85.0 parts by mass
Carbon black (trade name "Seast 7HM (N234)", manufactured by Tokai Carbon Co., Ltd.): 2.0 parts by mass
Silane coupling agent: (trade name "Si69", manufactured by Evonik Degussa, bis(triethoxysilylpropyl)tetrasulfide): 6.8 parts by mass
SRAE oil (trade name "Process NC140", manufactured by JX Nippon Oil & Energy Corporation): 40 parts by mass
Zinc oxide: 2.4 parts by mass
Stearic acid: 1.25 parts by mass
Anti-aging agent (N-(1,3-dimethylbutyl)-N'-phenyl-p-phenylenediamine): 3.5 parts by mass
Sulfur: 1.0 part by mass
Vulcanization accelerator 1: tetrabenzylthiuram disulfide: 0.5 parts by mass
Vulcanization accelerator 2: N-(tert-butyl)-2-benzothiazolesulfenamide: 2.5 parts by mass
Total: 246.95 parts by mass

The above-described materials were kneaded by the following method to obtain a rubber composition.

A closed kneader (having an internal volume of 0.3 L) equipped with a temperature controller was used to knead, as a first stage of kneading, the raw material rubber, the fillers (silica and carbon black), the silane coupling agent, the process oil, zinc oxide, and stearic acid under conditions of a filling ratio of 65% and a rotor rotation speed of 30 to 50 rpm.

Here, the temperature of the closed kneader was controlled to obtain each rubber composition (compound) at a discharging temperature of 145 to 150°C.

Next, after cooling the compound obtained as described above to room temperature, as a second stage of the kneading, the anti-aging agent was added thereto, and the resultant was kneaded again for improving dispersibility of the silica. Also in this case, the discharging temperature for the compound was adjusted to 120°C by the temperature control of the kneader.

After cooling, as a third stage of the kneading, with sulfur and the vulcanization accelerators 1 and 2 added thereto, the resultant was kneaded with an open roll set to 70°C.

Thereafter, the resultant was molded and vulcanized at 160°C for 20 minutes with a vulcanizing press.

The rubber compositions before the vulcanization, and the rubber compositions after the vulcanization were evaluated.

Specifically, the evaluations were performed as described below.

### [Evaluations 1 and 2 : Viscoelastisity Parameter]

A viscoelasticity testing machine "ARES" manufactured by Rheometric Scientific, Inc. was used to measure a viscoelasticity parameter in a torsion mode.

Each measurement value was shown as an index obtained assuming that a result obtained in the rubber composition of Comparative Example 10 was 100.

### (Evaluation 1: Fuel Consumption Performance)

A tan δ measured at 50°C at a frequency of 10 Hz and strain of 1% was used as an index of the fuel consumption performance. A larger index indicates better fuel consumption performance.

It was determined that the composition had good fuel consumption performance in the form of a vulcanizate when the index value was 85 or more.

### (Evaluation 2: Wet Grip Performance)

A tan δ measured at 0°C at a frequency of 10 Hz and strain of 1% was used as an index of the wet grip performance. A larger index indicates better wet grip performance.

It was determined that the composition had good wet grip performance in the form of a vulcanizate when the index value was 90 or more.

### [Evaluation 3: Abrasion Resistance]

An Acron abrasion tester (manufactured by Yasuda Seiki Seisakusho, Ltd.) was used to measure an abrasion amount through 1,000 rotations at a load of 44.4 N in accordance with JIS K6264-2, and each measured value was shown as an index obtained assuming that a result of Comparative Example 10 was 100.

A larger index indicates better abrasion resistance.

### [Evaluation 4: Tensile Properties]

In accordance with the tensile test method of JIS K6251, tensile strength and tensile elongation were measured, and a product of these values was shown as an index obtained assuming that the result of Comparative Example 10 was 100.

A larger index indicates better tensile strength and tensile elongation (fracture strength).

It was determined that the composition had sufficient tensile properties in the form of a vulcanizate when the index value was 85 or more.

### [Evaluation 5: Processability]

Regarding each of the modified conjugated diene-based polymers before vulcanization produced respectively by the methods described in Examples and Comparative Examples, a clump (shape) obtained immediately after being discharged from a pressurizing kneader (immediately after being discharged after completing the kneading with the pressurizing kneader in the first stage of the kneading) was visually observed to perform evaluation based on the following criteria by panelists each on a scale of 1 to 5.

A clumping property is an index of the processability of a vulcanizate.

A larger index indicates better processability.

### <Evaluation Criteria>

1: A sheet end portion was smooth by 50% or less, and processability was very poor.
2: A sheet end portion was smooth by more than 50% and 60% or less, and processability was poor.
3: A sheet end portion was smooth by more than 60% and 80% or less, and processability was good.
4: A sheet end portion was smooth by more than 80% and 90% or less, and processability was excellent.
5: A sheet end portion was smooth over 90%, and processability was very excellent.

It was confirmed that Examples 18 to 34 are excellent in balance among fuel consumption performance, wet grip performance, abrasion resistance, and tensile properties in the form of a vulcanizate compared to Comparative Examples 10 to 18.

**[Table 5]**

| | | Example 18 | Example 19 | Example 20 | Example 21 | Example 22 | Example 23 |
|---|---|---|---|---|---|---|---|
| Modified Conjugated Diene-Based Polymer Used | | Example 1 | Example 2 | Example 3 | Example 4 | Example 5 | Example 6 |
| (Evaluation 1) Low Fuel Consumption Performance | | 98 | 98 | 98 | 98 | 94 | 92 |
| (Evaluation 2) Wet Grip Performance | | 110 | 110 | 110 | 125 | 125 | 118 |
| (Evaluation 3) Abrasion Resistance | | 100 | 100 | 100 | 100 | 97 | 93 |
| (Evaluation 4) Tensile Property | | 100 | 95 | 95 | 100 | 102 | 102 |
| (Evaluation 5) Processability | | 4 | 4 | 4 | 4 | 4 | 2 |

**[Table 6]**

| | | Example 24 | Example 25 | Example 26 | Example 27 | Example 28 |
|---|---|---|---|---|---|---|
| Modified Conjugated Diene-Based Polymer Used | | Example 7 | Example 8 | Example 9 | Example 10 | Example 11 |
| (Evaluation 1) Low Fuel Consumption Performance | | 102 | 98 | 98 | 105 | 108 |
| (Evaluation 2) Wet Grip Performance | | 125 | 125 | 125 | 125 | 95 |
| (Evaluation 3) Abrasion Resistance | | 100 | 102 | 105 | 108 | 115 |
| (Evaluation 4) Tensile Property | | 93 | 102 | 104 | 94 | 90 |
| (Evaluation 5) Processability | | 5 | 4 | 3 | 2 | 4 |

**[Table 7]**

| | | Example 29 | Example 30 | Example 31 | Example 32 | Example 33 | Example 34 |
|---|---|---|---|---|---|---|---|
| Modified Conjugated Diene-Based Polymer Used | | Example 12 | Example 13 | Example 14 | Example 15 | Example 16 | Example 17 |
| (Evaluation 1) Low Fuel Consumption Performance | | 92 | 88 | 98 | 98 | 94 | 97 |
| (Evaluation 2) Wet Grip Performance | | 140 | 155 | 104 | 140 | 121 | 118 |
| (Evaluation 3) Abrasion Resistance | | 85 | 70 | 100 | 100 | 97 | 98 |
| (Evaluation 4) Tensile Property | | 100 | 105 | 100 | 92 | 102 | 93 |
| (Evaluation 5) Processability | | 4 | 5 | 4 | 4 | 3 | 4 |

**[Table 8]**

| | | Com. Ex. 10 | Com. Ex. 11 | Com. Ex. 12 | Com. Ex. 13 | Com. Ex. 14 | Com. Ex. 15 | Com. Ex. 16 | Com. Ex. 17 | Com. Ex. 18 |
|---|---|---|---|---|---|---|---|---|---|---|
| Modified Conjugated Diene-Based Polymer Used | | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 |
| (Evaluation 1) Low Fuel Consumption Performance | | 100 | 110 | 93 | 83 | 80 | 110 | 108 | 81 | 43 |
| (Evaluation 2) Wet Grip Performance | | 100 | 85 | 93 | 125 | 105 | 105 | 110 | 98 | 286 |
| (Evaluation 3) Abrasion Resistance | | 100 | 115 | 93 | 90 | 120 | 120 | 115 | 120 | 66 |
| (Evaluation 4) Tensile Property | | 100 | 90 | 102 | 90 | 80 | 82 | 84 | 82 | 65 |
| (Evaluation 5) Processability | | 4 | 3 | 2 | 4 | 3 | 3 | 3 | 3 | 4 |

This application is based upon Japanese Patent Application filed with the Japanese Patent Office on January 12, 2024 (Japanese Patent Application No. 2024-003559), the entire contents of which are incorporated herein by reference.

### Industrial Applicability

A modified conjugated diene-based polymer of the present invention is industrially applicable as materials in various fields such as a tire tread, interior and exterior of a vehicle, an anti-vibration rubber, a belt, shoes, a foam body, and various industrial products.

## Claims

1. A modified conjugated diene-based polymer, comprising a conjugated diene monomer unit and an aromatic vinyl monomer unit,
wherein the modified conjugated diene-based polymer has a weight average molecular weight measured by GPC of 700000 or more, and a modification ratio of 60% or more, and
in a tan δ peak graph as a function of a temperature derived from dynamic viscoelasticity analysis performed with an ARES (Advanced Rheometric Expansion System) based on the following <conditions 1>, the modified conjugated diene-based polymer has one tan δ peak in a temperature range from -100°C to 100°C,
a height of the tan δ peak is 0.90 or more and 1.45 or less:
<conditions 1>
a dynamic mechanical analyzer is used in torsional mode under conditions of a frequency of 10 Hz, a strain of 0.5%, and a temperature rise rate of 5°C/min for obtaining the tan δ peak graph.

2. The modified conjugated diene-based polymer according to claim 1,
wherein a branch number (Bn) measured by a GPC-light scattering method with a viscosity detector is 7 or more.

3. The modified conjugated diene-based polymer according to claim 1,
wherein a molecular weight distribution is 1.7 or more and 2.5 or less.

4. The modified conjugated diene-based polymer according to claim 1,
wherein an estimated glass transition temperature (estimated Tg) derived from a microstructure of the modified conjugated diene-based polymer is -62°C or more and less than -25°C.

5. The modified conjugated diene-based polymer according to claim 1, comprising two or more polymer segments,
wherein a first polymer segment, which has a mass fraction in the modified conjugated diene-based polymer of 10% or more, and is a polymer segment closest to a polymerization start end, has an estimated glass transition temperature (estimated Tg) of -90°C or more and -40°C or less,
a second polymer segment, which is a polymer segment closest to a polymerization termination end, has an estimated Tg, equal to or more than the estimated Tg of the first polymer segment, of -50°C or more and -10°C or less, and
a modifier is bonded to an end of the second polymer segment.

6. The modified conjugated diene-based polymer according to claim 1,
comprising a modifier residue derived from an alkoxysilane compound having a nitrogen atom.

7. A method for producing the conjugated diene-based polymer according to any one of claims 1 to 6, comprising:
a polymerization step of polymerizing, using a continuous reactor including two or more reactors arranged in series, at least one conjugated diene-based compound with a lithium compound used as a polymerization initiator,
the continuous reactor having a monomer adding part for adding, during the polymerization step, at least one conjugated diene compound and at least one aromatic vinyl compound; and
a coupling step of reacting a conjugated diene-based polymer obtained by the polymerization step with a modifier having a nitrogen atom.

8. The method for producing the modified conjugated diene-based polymer according to claim 7,
wherein an aromatic vinyl compound is used as a polymerizable monomer in the polymerization step, and
a conversion rate of a polymerization intermediate of the aromatic vinyl compound in the monomer adding part is 70% or more.

9. The method for producing the modified conjugated diene-based polymer according to claim 7,
wherein the monomer adding part is disposed in a pipe between a first reactor and a second reactor included in the continuous reactor.

10. The method for producing the modified conjugated diene-based polymer according to claim 7,
wherein a branching agent is added in the monomer adding part.
